# EUROPEAN PATENT APPLICATION

(11) **EP 1 717 710 A1**
(43) Date of publication of application: **02.11.2006**
(21) Application number: 05709544.0
(22) Date of filing: 01.02.2005
(51) Int. Cl.: G06F 12/14, G06K 17/00, G09C 1/00

(54) **RECORDING/REPRODUCTION DEVICE AND CONTENT PROTECTION SYSTEM**

(30) Priority: 03.02.2004 JP 2004026850; 21.04.2004 JP 2004125196
(71) Applicant: MATSUSHITA ELECTRIC INDUSTRIAL CO., LTD., Kadoma-shi, Osaka 571-8501 (JP)
(72) Inventor: NAKANO, Toshihis c/o Matsushita El. Ind. Co., Ltd, Chuo-ku, Osaka 540-6319 (JP); OHMORI, Motoji c/o Matsushita El. Ind. Co., Ltd, Chuo-ku, Osaka 540-6319 (JP); YOKOTA, Kaoru c/o Matsushita El. Ind. Co., Ltd, Chuo-ku, Osaka 540-6319 (JP); HARADA, Shunji c/o Matsushita El. Ind. Co., Ltd, Chuo-ku, Osaka 540-6319 (JP); ITO, Yoshikatsu c/o Matsushita El. Ind. Co., Ltd, Chuo-ku, Osaka 540-6319 (JP); FUJIMURA, Kazuya c/o Matsushita El. Ind. Co., Ltd, Chuo-ku, Osaka 540-6319 (JP); TAKAHASHI, Jun c/o Matsushita El. Ind. Co., Ltd, Chuo-ku, Osaka 540-6319 (JP)
(74) Representative: Grünecker, Kinkeldey, Stockmair & Schwanhäusser Anwaltssozietät
(86) International application number: PCT/JP2005/001398
(87) International publication number: WO 2005/076140

(57) **Abstract**

A recording/reproduction device 10 receives content broadcast from a content provision device 11. The recording/reproduction device 10 encrypts the received content using a device key, to generate first encrypted content. The recording/reproduction device 10 decrypts the first encrypted content to obtain the content, performs an image conversion on the obtained content to generate converted content, and encrypts the converted content using a medium key to generate second encrypted content. The recording/reproduction device 10 writes the second encrypted content, the medium key, and the device key to a portable medium 14. When the portable medium 14 is inserted in a mobile information terminal 15, the mobile information terminal 15 decrypts the second encrypted content using the medium key to obtain the converted content, and reproduces the converted content.

## Description

### Technical Field

The present invention relates to a recording/reproduction device for recording/reproducing content, and in particular relates to techniques for enhancing user-friendliness while preventing unauthorized use of content.

### Background Art

As a copy protection measure for a digital broadcast program, a control signal "Copy Once", which indicates recording is permitted only once, is attached to the digital broadcast program, and the digital broadcast program with this "Copy Once" control signal is encrypted and broadcast. Such a digital broadcast program accompanied by the "Copy Once" control signal can be recorded using a recording/reproduction device that is compatible with CPRM (Content Protection for Recordable Media). The recorded digital broadcast program cannot be copied to another device, and can only be moved to another compatible device.
Patent document 1: Japanese Patent Application Publication No. 2003-228522.
Non-patent document 1: Shinichi Ikeno & Kenji Koyama Modern Cryptosystem [Gendai Angouriron], I.E.I.C.E.
Non-patent document 2: Eiji Okamoto Introduction to Modern Encryption [Gendai Angou Nyumon], Kyoritsu Shuppan.

### Disclosure of the Invention

### Problems the Invention is going to Solve

However, since the digital broadcast program is high-image-quality content having a large amount of data, when the move destination is a device having only a small storage capacity such as a memory card, the recording/reproduction device needs to compress the high-image-quality content by image conversion so as to reduce the data size, before moving it to the memory card.
This being so, when the content is moved from the move-destination memory card back to the recording/reproduction device, the original high-image-quality content has already been lost as a result of the image conversion. Hence the recording/reproduction device can no longer use the high-image-quality content.

The present invention was conceived to solve the above problem, and aims to provide a recording/reproduction device and a content protection system with which, even if content that has undergone image conversion is moved from the recording/reproduction device to another device, the content before the image conversion can be used when the content is moved from the move-destination device back to the recording/reproduction device.

### Means of Solving the Problems

The stated aim can be achieved by a terminal device for transferring a right to use content to a portable medium while protecting a copyright of the content, including: a storage unit storing first encrypted content, a device key, and a medium key, the first encrypted content being generated by encrypting the content; a decryption unit operable to decrypt the first encrypted content using the device key, to generate the content; a conversion unit operable to perform an irreversible conversion on the generated content, to generate converted content; an encryption unit operable to encrypt the converted content using the medium key, to generate second encrypted content; and a write unit operable to move the medium key and the second encrypted content to the portable medium, and read the device key from the storage unit and write the read device key to the portable medium.

The stated aim can also be achieved by the above terminal device, wherein the key deletion unit deletes the device key from the storage unit after the write unit writes the device key to the portable medium, and the write unit moves the medium key and the second encrypted content to the portable medium after the key deletion unit deletes the device key from the storage unit.

### Effects of the Invention

The present invention is a terminal device for transferring a right to use content to a portable medium while protecting a copyright of the content, the terminal device storing first encrypted content, a device key, and a medium key in a storage area, the first encrypted content being generated by encrypting the content, decrypting the first encrypted content using the device key to generate the content, performing an irreversible conversion on the generated content to generate converted content, encrypting the converted content using the medium key to generate second encrypted content, moving the medium key and the second encrypted content to the portable medium, and reading the device key from the storage area and writing the read device key to the portable medium, and deleting the device key from the storage area.

According to this construction, the terminal device moves the device key to the portable medium in addition to the second encrypted content and the medium key. In this way, the use of the content can be disabled in a state where the first encrypted content is stored in the storage area.
Since the first encrypted content is stored in the storage area, even after the second encrypted content is moved to the portable medium, the content before the image conversion can be restored by acquiring the device key.

Here, the terminal device may be constructed to delete the device key from the storage area after writing the device key to the portable medium, and move the medium key and the second encrypted content to the portable medium after deleting the device key from the storage area.
According to this construction, the second encrypted content and the medium key for decrypting the second encrypted content are moved to the portable medium after deleting the device key for decrypting the first encrypted content. This prevents a situation where both the terminal device and the portable medium are simultaneously in the content usable state. Hence the user can use the content within specifications.

Here, the terminal device may be constructed to store key information for encrypting the device key, encrypt the device key using the key information, and write the encrypted device key to the portable medium as the device key.
According to this construction, the device key can be written to the portable medium more safely, when compared with the case where the device key is written to the portable medium in an unencrypted form.

Here, the terminal device, after writing the encrypted device key to the portable medium, deleting the device key from the storage area, and moving the medium key and the second encrypted content to the portable medium, may be constructed to read the encrypted device key from the portable medium, decrypt the read encrypted device key using the key information to generate the device key, and store the generated device key to the storage area.

According to this construction, by reading the device key which has been moved to the portable medium from the portable medium, the terminal device switches from the content unusable state to the content usable state. The terminal device decrypts the first encrypted content stored in the storage area using the read device key, with it being possible to obtain the content before the image conversion.
Since the device key is in an encrypted form, the terminal device can read the device key from the portable medium more safely, when compared with the case where the device key is read in an unencrypted form.

Here, the terminal device may be constructed to embed the device key in the converted content to generate key-embedded content, encrypt the key-embedded content using the medium key to generate the second encrypted content, delete the device key from the storage area after embedding the device key in the converted content, and move the medium key and the second encrypted content to the portable medium after deleting the device key from the storage area.

According to this construction, the device key can be moved to the portable medium more safely when compared with the case where the device key itself is written to the portable medium. Also, since the second encrypted content and the medium key for decrypting the second encrypted content are moved to the portable medium after deleting the device key, a situation where both the terminal device and the portable medium are in the content usable state can be avoided. Hence the user can use the content within specifications.

Here, the terminal device, after deleting the device key from the storage unit and moving the medium key and the second encrypted content to the portable medium, may be constructed to read the second encrypted content and the medium key from the portable medium, decrypt the read second encrypted content using the read medium key to generate the key-embedded content, and extract the device key from the key-embedded content and store the extracted device key to the storage unit.

According to this construction, by acquiring the device key which has been moved to the portable medium, the terminal device switches from the content unusable state to the content usable state. The terminal device decrypts the first encrypted content stored therein using the extracted device key, to thereby obtain the content before the conversion.
Here, the terminal device, after writing the device key to the portable medium, deleting the device key from the storage unit, and moving the medium key and the second encrypted content to the portable medium, may be constructed to read the device key from the portable medium, and store the read device key to the storage unit.

According to this construction, by acquiring the device key which has been moved to the portable medium, the terminal device switches from the content unusable state to the content usable state. The terminal device decrypts the first encrypted content stored in the storage area using the extracted device key, thereby obtaining the content before the conversion.
Here, the terminal device may be constructed to read the first encrypted content and the device key from the storage area, decrypt the read first encrypted content using the read device key to generate the content, and reproduce the generated content.

According to this construction, when the device key is stored in the storage area and so the terminal device is in the content usable state, the terminal device can decrypt the first encrypted content using the device key to obtain the content before the conversion, and reproduce the obtained content.
Also, the present invention is a terminal device for transferring a right to use content to a portable medium while protecting a copyright of the content, the terminal device storing a first encrypted content generated by encrypting the content and a content key, decrypting the first encrypted content using the content key to generate the content, performing an irreversible conversion on the generated content to generate converted content, encrypting the converted content using the content key to generate second encrypted content, moving the content key and the second encrypted content to the portable medium, and deleting the content key from the storage area.

According to this construction, the terminal device moves the second encrypted content and the content key to the portable medium, and also deletes the content key from the storage area. In this way, the use of the content can be disabled in a state where the first encrypted content is stored in the storage area.
Since the first encrypted content is stored in the storage area, even after the second encrypted content is moved to the portable medium, the terminal device can restore the content before the image conversion by acquiring the content key.

Here, the terminal device may be constructed to delete the content key from the storage area after writing the content key to the portable medium, and move the second encrypted content to the portable medium after deleting the content key from the storage area.
According to this construction, a situation where both the terminal device and the portable medium hold the encrypted content and the content key never occurs during the content movement operation. Since a situation where both the terminal device and the portable medium are simultaneously in the content usable state is avoided, the user can use the content within specifications.

Here, the terminal device, after moving the content key and the second encrypted content to the portable medium and deleting the content key from the storage area, may be constructed to read the content key from the portable medium and store the read content key to the storage area.
According to this construction, by acquiring the device key which has been moved to the portable medium, the terminal device switches from the content unusable state to the content usable state. The terminal device decrypts the first encrypted content stored in the storage area using the extracted device key, thereby obtaining the content before the conversion.

Also, the present invention is a content protection system for transferring a right to use content from a terminal device to a portable medium while protecting a copyright of the content, the terminal device storing first encrypted content, a device key, and a medium key in a first storage area, the first encrypted content being generated by encrypting the content, decrypting the first encrypted content using the device key to generate the content, performing an irreversible conversion on the generated content to generate converted content, encrypting the converted content using the medium key to generate second encrypted content, moving the medium key and the second encrypted content to the portable medium, and reading the device key from the first storage unit and writing the read device key to the portable medium, and deleting the device key from the first storage area, the portable medium including a second storage area for storing the device key, the medium key, and the second encrypted content received from the terminal device, the terminal device deleting the device key from the first storage area after writing the device key to the second storage area, and moving the medium key and the second encrypted content to the portable medium after deleting the device key from the first storage area.

According to this construction, the terminal device moves the device key to the portable medium in addition to the second encrypted content and the medium key. In this way, the use of the content can be disabled in a state where the first encrypted content is stored in the first storage area.
Since the first encrypted content is stored in the first storage area, even after the second encrypted content is moved to the portable medium, the content before the image conversion can be restored by acquiring the device key.

Here, the content protection system, after the terminal device writes the device key to the portable medium, deletes the device key from the first storage area, and moves the medium key and the second encrypted content to the portable medium, may be constructed such that the terminal device reads the device key form the portable medium, and stores the read device key to the first storage area, the portable medium deletes at least one of the second encrypted content and the medium key from the second storage area, and the terminal device reads the device key from the second storage area after the portable medium deletes the at least one of the second encrypted content and the medium key from the second storage area.

According to this construction, the portable medium can make the second encrypted content unusable by deleting at least one of the second encrypted content and the medium key. Also, since the terminal device reads the device key after the portable medium makes the second encrypted content unusable, a situation where both the terminal device and the portable medium are simultaneously in the content usable state never occurs. Hence the user can use the content within specifications.

Here, the content protection system may be constructed such that the terminal device stores key information for encrypting the device key in the first storage area, encrypts the device key using the key information, writes the encrypted device key to the second storage area as the device key, and after writing the encrypted device key, moves the medium key and the second encrypted content to the second storage unit, and the second storage area stores the encrypted device key as the device key.

According to this construction, the device key can be written to the portable medium more safely, when compared with the case where the device key is written to the portable medium in an unencrypted form. Also, a situation where both the terminal device and the portable medium are simultaneously in the content usable state never occurs, so that the user can use the content within specifications.
Here, the content protection system, after the terminal device writes the encrypted device key to the portable medium, deletes the device key from the first storage area, and moves the medium key and the second encrypted content to the portable medium, may be constructed such that the terminal device reads the encrypted device key from the second storage area, decrypts the read encrypted device key using the key information to generate the device key, and stores the generated device key to the first storage area, the portable medium deletes at least one of the second encrypted content and the medium key from the second storage area, and the terminal device reads the encrypted device key from the second storage area after the portable medium deletes the at least one of the second encrypted content and the medium key from the second storage area.

According to this construction, by reading the encrypted device key which has been moved to the portable medium and decrypting it, the terminal device switches from the content unusable state to the content usable state. The terminal device decrypts the first encrypted content stored in the first storage area using the device key read from the portable medium, with it being possible to obtain the content before the conversion.
Since the device key read from the portable medium is in an encrypted form, the terminal device can read the device key from the portable medium more safely, when compared with the case where the device key is read in an unencrypted form. Also, a situation where both the terminal device and the portable medium are simultaneously in the content usable state never occurs, so that the user can use the content within specifications.

Here, the content protection system may be constructed such that the terminal device embeds the device key in the converted content to generate key-embedded content, encrypts the key-embedded content using the medium key to generate the second encrypted content, deletes the device key from the first storage unit after embedding the device key in the converted content, and writes the medium key and the second encrypted content to the second storage unit after deleting the device key from the first storage unit.

According to this construction, the device key can be moved to the portable medium more safely when compared with the case where the device key itself is written to the portable medium. Also, since the second encrypted content and the medium key for decrypting the second encrypted content are moved to the portable medium after deleting the device key, a situation where both the terminal device and the portable medium are simultaneously in the content usable state can be avoided. Hence the user can use the content within specifications.

Here, the content protection system, after the terminal device deletes the device key from the first storage area and moves the medium key and the second encrypted content to the second storage unit, may be constructed such that the terminal device reads the second encrypted content and the medium key from the second storage area, decrypts the read second encrypted content using the read medium key to generate the key-embedded content, extracts the device key from the key-embedded content, and stores the extracted device key to the first storage area, and the portable medium deletes the second encrypted content and the medium key from the second storage area after the terminal device reads the second encrypted content and the medium key from the second storage area.

According to this construction, by acquiring the device key which has been moved to the portable medium, the terminal device switches from the content unusable state to the content usable state. The terminal device decrypts the first encrypted content stored therein using the extracted device key, to thereby obtain the content before the conversion. Also, since the portable medium deletes the second encrypted content and the medium key, a situation where both the terminal device and the portable medium are simultaneously in the content usable state never occurs, so that the user can use the content within specifications.

Here, the content protection system may be constructed to further include a mobile information terminal, the mobile information terminal reading, from the portable medium in which the device key, the medium key, and the second encrypted content are stored in the second storage area, the second encrypted content and the medium key, decrypting the read second encrypted content using the read medium key to generate the converted content, and reproducing the converted content.

According to this construction, the user can reproduce the second encrypted content which has been moved from the terminal device to the portable medium, by using the mobile information terminal.
Here, the content protection system may be constructed to include another terminal device connected with the terminal device, the another terminal device reading, from the portable medium in which the device key, the medium key, and the second encrypted content are stored in the second storage area, the device key, the medium key, and the second encrypted content, deleting at least one of the read medium key and the read second encrypted content, and acquiring the first encrypted content from the terminal device after deleting the at least one of the medium key and the second encrypted content, the portable medium moves the device key, the medium key, and the second encrypted content to the another terminal device, and the terminal device transmits the first encrypted content to the another terminal device, and deletes the first encrypted content from the first storage area.

According to this construction, the content can be moved from the portable medium to another terminal device without causing a situation where the terminal device, the portable medium, and the another terminal device are simultaneously in the content usable state. This enhances user-friendliness.

### Brief Description of the Drawings

FIG. 1 shows a construction of a content protection system 1.
FIG. 2 is a functional block diagram showing a functional construction of a recording/reproduction device 10.
FIG. 3 shows information stored in a storage unit 104.
FIG. 4 shows specific examples of a title list output on a monitor 12.
FIG. 5 is a functional block diagram showing a functional construction of a portable medium 14.
FIG. 6 is a functional block diagram showing a functional construction of a mobile phone 15.
FIG. 7 is a flowchart showing an overall operation of the content protection system 1.
FIG. 8 is a flowchart showing an operation of moving content from the recording/reproduction device 10 to the portable medium 14.
FIG. 9 shows data held in the recording/reproduction device 10 and the portable medium 14, in a process of moving content from the recording/reproduction device 10 to the portable medium 14.
FIG. 10 is a flowchart showing an operation of moving content from the portable medium 14 to the recording/reproduction device 10.
FIG. 11 shows data held in the recording/reproduction device 10 and the portable medium 14, in a process of moving content from the portable medium 14 to the recording/reproduction device 10.
FIG. 12 shows a construction of a content protection system 1a.
FIG. 13 is a functional block diagram showing a functional construction of a PC 16.
FIG. 14 is a flowchart showing an overall operation of the content protection system 1a.
FIG. 15 is a flowchart showing an operation of moving content from the portable medium 14 to the PC 16, continuing to FIG. 16.
FIG. 16 is a flowchart showing the operation of moving content from the portable medium 14 to the PC 16, continuing from FIG. 15.
FIG. 17 shows a construction of a content protection system 2 and a functional construction of a recording/reproduction device 20.
FIG. 18 is a flowchart showing an operation of moving content from the recording/reproduction device 20 to the portable medium 14.
FIG. 19 shows data held in the recording/reproduction device 10 and the portable medium 14, when moving content from the recording/reproduction device 20 to the portable medium 14.
FIG. 20 is a flowchart showing an operation of moving content from the portable medium 14 to the recording/reproduction device 20.
FIG. 21 shows data held in the recording/reproduction device 20 and the portable medium 14, in a process of moving content from the portable medium 14 to the recording/reproduction device 20.
FIG. 22 shows a construction of a content protection system 3 and a functional construction of a recording/reproduction device 30.
FIG. 23 is a flowchart showing an operation of moving content from the recording/reproduction device 30 to the portable medium 14.
FIG. 24 shows data held in the recording/reproduction device 30 and the portable medium 14, in a process of moving content from the recording/reproduction device 30 to the portable medium 14.
FIG. 25 is a flowchart showing an operation of moving content from the portable medium 14 to the recording/reproduction device 30.
FIG. 26 shows data held in the recording/reproduction device 30 and the portable medium 14, in a process of moving content from the portable medium 14 to the recording/reproduction device 30.
FIG. 27 is a block diagram showing an overall construction of a copyright protection system according to the present invention.
FIG. 28 is a functional block diagram in a first embodiment of the present invention.
FIG. 29 is a flowchart showing an operation of recording content in a recording/reproduction device in the first embodiment of the present invention.
FIG. 30 is a flowchart showing an operation of moving content from the recording/reproduction device to a portable medium in the first embodiment of the present invention.
FIG. 31 shows each data storage state when moving content from the recording/reproduction device to the portable medium in the first embodiment of the present invention.
FIG. 32 shows each data storage state when moving content from the recording/reproduction device to the portable medium in the first embodiment of the present invention.
FIG. 33 is a flowchart showing an operation of moving content from the portable medium to the recording/reproduction device in the first embodiment of the present invention.
FIG. 34 shows each data storage state whenmoving content from the portable medium to the recording/reproduction device in the first embodiment of the present invention.
FIG. 35 shows each data storage state when moving content from the portable medium to the recording/reproduction device in the first embodiment of the present invention.
FIG. 36 is a flowchart showing an operation of reproducing content recorded in the recording/reproduction device in the first embodiment of the present invention.
FIG. 37 is a functional block diagram in the first embodiment of the present invention.
FIG. 38 is a flowchart showing an operation of recording content in a recording/reproduction device in a second embodiment of the present invention.
FIG. 39 is a flowchart showing an operation of moving content from the recording/reproduction device to a portable medium in the second embodiment of the present invention.
FIG. 40 shows each data storage state when moving content from the recording/reproduction device to the portable medium in the second embodiment of the present invention.
FIG. 41 shows each data storage state when moving content from the recording/reproduction device to the portable medium in the second embodiment of the present invention.
FIG. 42 is a flowchart showing an operation of moving content from the portable medium to the recording/reproduction device in the second embodiment of the present invention.
FIG. 43 shows each data storage state when moving content from the portable medium to the recording/reproduction device in the second embodiment of the present invention.
FIG. 44 shows each data storage state when moving content from the portable medium to the recording/reproduction device in the second embodiment of the present invention.

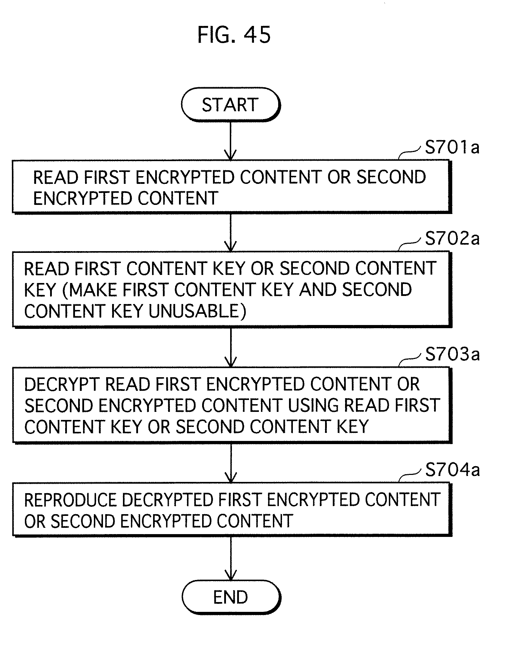

FIG. 45 is a flowchart showing an operation of reproducing content recorded in the recording/reproduction device in the second embodiment of the present invention.

### Description of Reference Numerals

- 1: content protection system
- 1a: content protection system
- 2: content protection system
- 3: content protection system
- 10: recording/reproduction device
- 11: content provision device
- 12: monitor
- 13: speaker
- 14: portable medium
- 15: mobile information terminal
- 16: PC
- 20: recording/reproduction device
- 30: recording/reproduction device
- 101: content reception unit
- 102: device recording key storage unit
- 103: encryption unit
- 104: storage unit
- 105: decryption unit
- 106: reproduction unit
- 107: conversion unit
- 108: medium recording key generation unit
- 109: medium recording key storage unit
- 110: encryption unit
- 111: device unique key storage unit
- 112: encryption/decryption unit
- 113: write/read unit
- 114: input unit
- 115: recording control unit
- 132: input/output unit
- 133: recording control unit
- 134: storage unit
- 141: input/output unit
- 142: control unit
- 143: display
- 144: key operation unit
- 145: communication unit
- 146: antenna
- 147: microphone
- 148: speaker
- 161: input/output unit
- 162: input unit
- 163: content storage unit
- 164: medium recording key storage unit
- 165: decryption unit
- 166: transmission/reception unit
- 167: decryption unit
- 168: decryption unit
- 169: encryption unit
- 170: storage unit
- 171: device recording key storage unit
- 172: decryption unit
- 173: reproduction unit
- 174: display
- 175: speaker
- 2001: key embedment/extraction unit
- 2002: encryption/decryption unit
- 3001: content key storage unit
- 3002: content key area

### Best Mode for Carrying out the Invention

### <First Embodiment>

The following describes a content protection system 1 as a first embodiment of the present invention, with reference to drawings.

### <Construction>

### 1. Overall System

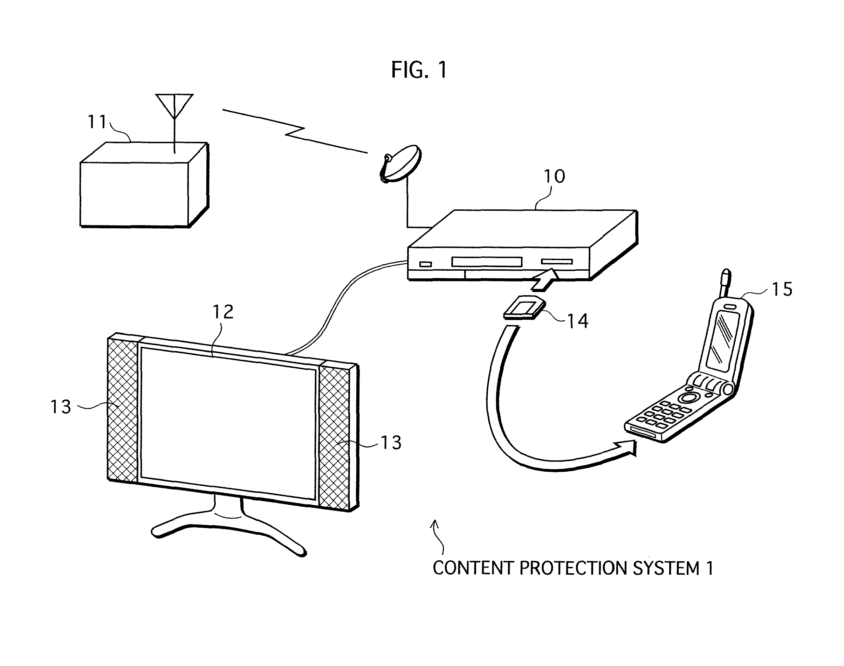

FIG. 1 shows a construction of the content protection system 1. As shown in the drawing, the content protection system 1 is roughly made up of a recording/reproduction device 10, a content provision device 11, a monitor 12, a speaker 13, a portable medium 14, and a mobile information terminal 15.

The content protection system 1 has the following function. Content which is a digital broadcast program broadcast from the content provision device 11 installed in a broadcast station is received by the recording/reproduction device 10, and the received content is recorded and reproduced by the recording/reproduction device 10. Also, the content recorded in the recording/reproduction device 10 is moved to the portable medium 14, and the moved content is reproduced by the mobile information terminal 15. Further, the content recorded in the portable medium 14 is moved back to the recording/reproduction device 10.

### 2. Content Provision Device 11

The content provision device 11 is equipped in the broadcast station, and broadcasts content which is a transport stream compression-coded according to MPEG (Moving Picture Experts Group phase) -2. The content broadcast from the content provision device 11 is received by an antenna of the recording/reproduction device 10.

### 3. Recording/reproduction Device 10

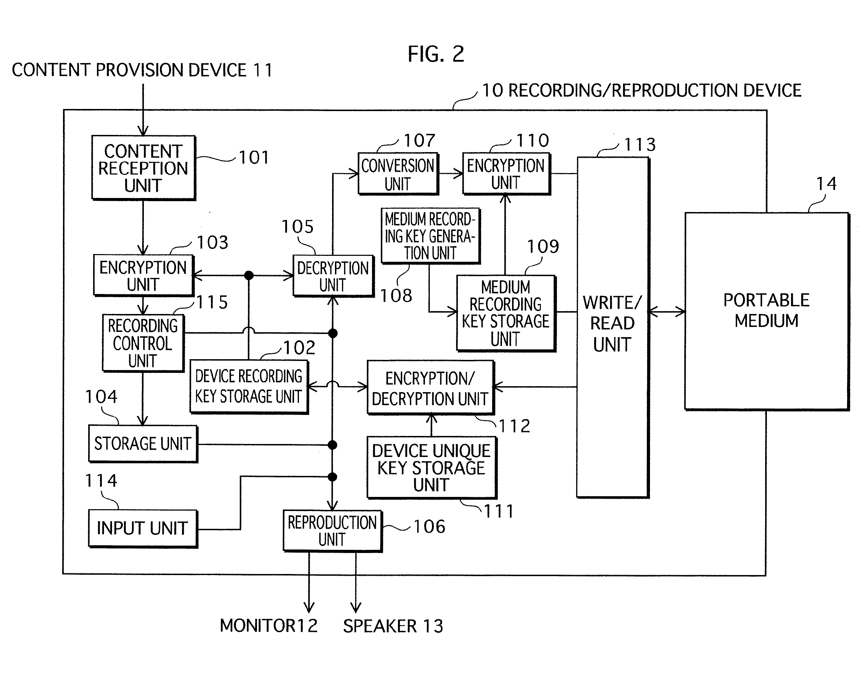

FIG. 2 is a functional block diagram showing a functional construction of the recording/reproduction device 10.
As shown in the drawing, the recording/reproduction device 10 includes a content reception unit 101, a device recording key storage unit 102, an encryption unit 103, a storage unit 104, a decryption unit 105, a reproduction unit 106, a conversion unit 107, a medium recording key generation unit 108, a medium recording key storage unit 109, an encryption unit 110, a device unique key storage unit 111, an encryption/decryption unit 112, a write/read unit 113, an input unit 114, and a recording control unit 115.

The recording/reproduction device 10 is a computer system provided with a microprocessor, a ROM, a RAM, a hard disk unit, and the like. As a specific example, the recording/reproduction device 10 is assumed here to be a hard disk recorder.
(1) Content Reception Unit 101
   The content reception unit 101 includes the antenna. The content reception unit 101 receives the content broadcast from the content provision device 11 via the antenna, and outputs the received content to the encryption unit 103. The content received by the content reception unit 101 is high-image-quality content which has been compression-coded according to MPEG-2.

(2) Device Recording Key Storage Unit 102
   The device recording key storage unit 102 stores device recording key K_{HDD} in advance. Device recording key K_{HDD} is 128-bit data used as an encryption key when the encryption unit 103 encrypts the content which has been transmitted from the content provision device 11 and received by the content reception unit 101. When the encryption/decryption unit 112 reads device recording key K_{HDD}, the device recording key storage unit 102 deletes device recording key K_{HDD} stored therein. Also, when the encryption/decryption unit 112 writes device recording key K_{HDD}, the device recording key storage unit 102 stores device recording key K_{HDD} again.

(3) Encryption Unit 103
   The encryption unit 103 receives the content from the content reception unit 101. This content received by the encryption unit 103 is MPEG-2 content of a high image quality. Hereafter, MPEG-2 content is denoted by "C2", to distinguish it from MPEG-4 content described later. The encryption unit 103 divides C2 from the beginning in units of 128 bits, thereby generating content portions. The generated content portions are denoted by C2⁽¹⁾, C2⁽²⁾, C2⁽³⁾, ... , C2^{(M)}, respectively.

Also, the encryption unit 103 reads device recording key K_{HDD} from the device recording key storage unit 102, and applies encryption algorithm E₁ to each content portion C2⁽ⁿ⁾ (n = 1, 2, ..., , M, the same applies hereafter) using device recording key K_{HDD} as an encryption key, to generate encrypted content portions EC2⁽ⁿ⁾. Which is to say, EC2⁽ⁿ⁾ = E₁ (C2⁽ⁿ⁾, K_{HDD}) . As one example, encryption algorithm E₁ used by the encryption unit 103 is AEC (Advanced Encryption Standard).

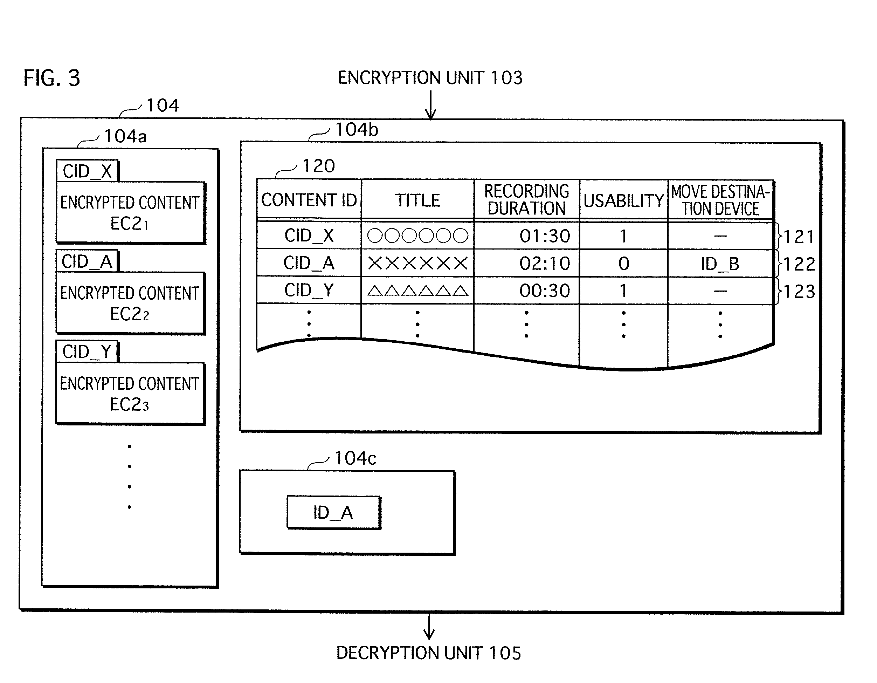

The encryption unit 103 stores encrypted content portions EC2 ⁽¹⁾, EC2 ⁽²⁾, EC2 ⁽³⁾, ... , EC2 ^{(M)} to the storage unit 104.
(4) Storage Unit 104
   The storage unit 104 is actually a hard disk unit, and includes an encrypted content area 104a, a content table area 104b, and a device ID area 104c, as shown in FIG. 3.

Upon receiving each encrypted content portion EC2⁽ⁿ⁾ from the encryption unit 103, the storage unit 104 accumulates these encrypted content portion EC2⁽ⁿ⁾ in the encrypted content area 104a. Data obtained by accumulating encrypted content portions EC2 ⁽ⁿ⁾ is hereafter referred to as encrypted content EC2.
As shown in FIG. 3, the encrypted content area 104a stores a plurality of sets of encrypted content EC2₁, EC2₂, EC2₃, ... . Here, each subscript is used to identify a different one of the plurality of sets of encrypted content. Each set of encrypted content EC2 is given a content ID for uniquely identifying the encrypted content. The encrypted content and its content ID are associated with each other in the encrypted content area 104a. In detail, a content ID of EC2₁ is "CID_X", a content ID of EC2₂ is "CID_A", and a content ID of EC2₃ is "CID_Y".

The content table area 104b stores a content table 120. The content table 120 is a table used for managing information relating to encrypted content EC2₁, EC2₂, EC2₃, ... stored in the encrypted content area 104a. As can be seen from FIG. 3, the content table 120 contains a plurality of sets of content information 121, 122, 123, ....

Each set of content information has a content ID field, a title field, a recording duration field, a usability field, and a move destination device field. The following data is written in each field.
The content ID field shows a content ID of the corresponding encrypted content stored in the encrypted content area 104a. The title field shows a title of the content. The title of the content can be obtained from an EPG, as one example. The recording duration field shows a recording duration of the content. The usability field shows the value 0 or 1. The value 0 indicates the content is unusable. The value 1 indicates the content is usable. The move destination device field shows a device ID for identifying a move destination device if the content has been moved, and does not show any information if the content has not been moved.

Each time new encrypted content is stored in the encrypted content area 104a, corresponding new content information is stored in the content table 120. The content information is generated by the recording control unit 115 described later.
The device ID area 104c stores a device ID "ID_A" for uniquely identifying the recording/reproduction device 10. Here, the device ID "ID_A" has been set beforehand.

(5) Decryption Unit 105
   The decryption unit 105 receives designation of content and an instruction to move the content from the input unit 114, and reads the designated encrypted content from the encrypted content area 104a in the storage unit 104. In more detail, the decryption unit 105 receives a content ID from the input unit 114, and reads encrypted content whose content ID matches the received content ID from the encrypted content area 104a. Suppose the decryption unit 105 reads encrypted content EC2₂ having the content ID "CID_A". In this case, the decryption unit 105 divides encrypted content EC2₂ in units of 128 bits from the beginning, to generate encrypted content portions. These encrypted content portions are denoted by EC2₂⁽¹⁾, EC2₂⁽²⁾, EC2₂⁽³⁾, ... , EC2₂^{(M)}.

The decryption unit 105 also reads device recording key K_{HDD} stored in the device recording key storage unit 102, and applies decryption algorithm D₁ to each encrypted content portion EC2₂ ⁽ⁿ⁾ using device recording key K_{HDD} as a decryption key, to generate content portions C2₂⁽ⁿ⁾. Which is to say, C2₂⁽ⁿ⁾ = D₁ (EC2₂⁽ⁿ⁾, K_{HDD}). Decryption algorithm D₁ used here is an algorithm for converting ciphertext, which is generated by encryption according to encryption algorithm E₁, to plaintext.

The decryption unit 105 outputs generated content portions C2₂⁽¹⁾, C2₂⁽²⁾, C2₂⁽³⁾, ... , C2₂^{(M)} to the conversion unit 107.
Also, when reproducing the content, the decryption unit 105 decrypts encrypted content EC2 read from the storage unit 104 using device recording key K_{HDD}, and outputs the decrypted content to the reproduction unit 106, according to an instruction from the reproduction unit 106.

(6) Reproduction Unit 106
   The reproduction unit 106 receives designation of content and an instruction to reproduce the content from the input unit 114, and outputs the received instruction to the decryption unit 105.
   The reproduction unit 106 is actually provided with an MPEG decoder and the like. The reproduction unit 106 receives content C2 decrypted by the decryption unit 105, and decodes received content C2 to generate a video signal and an audio signal. The reproduction unit 106 outputs the video signal to the monitor 12, and the audio signal to the speaker 13.

Also, when instructed by the input unit 114, the reproduction unit 106 reads a title list from the recording control unit 115, and outputs the read title list to the monitor 12. The title list is GUI data generated based on the content table 120 stored in the content table area 104b. The generation of the title list will be described later.

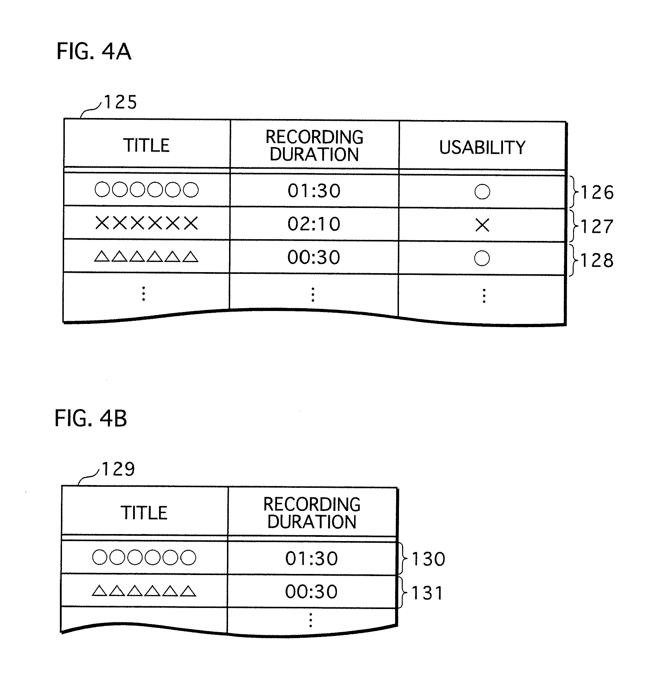

FIGS. 4A and 4B show specific examples of the title list. Title list 125 shown in FIG. 4A contains title information 126, 127, and 128. Each set of title information has a title field, a recording duration field, and a usability field. Title information 126 corresponds to content information 121, title information 127 corresponds to content information 122, and title information 128 corresponds to content information 123. The usability field in each set of title information shows either "○" or "×" . The sign "○" indicates the content is usable, whereas the sign "×" indicates the content is unusable. Title list 129 shown in FIG. 4B contains title information 130 and 131, which each has a title field and a recording duration field. Title information 130 corresponds to content information 121, and title information 131 corresponds to content information 123. Which is to say, title list 129 does not contain information about unusable content.

Here, the aforementioned designation of content to be reproduced and content to be moved may be made in such a manner that the input unit 114 selects one set of title information while title list 125 or title list 126 is being displayed on the monitor 12.
(7) Conversion Unit 107
   The conversion unit 107 is actually constituted by a downconverter for converting MPEG-2 data to MPEG-4 data, and the like. The conversion unit 107 sequentially receives content portions C2 ⁽ⁿ⁾ generated by the decryption unit 105, and compression-converts received content portions C2 ⁽ⁿ⁾ to MPEG-4. Hereafter, each content portion converted to MPEG-4 is denoted by C4 ⁽ⁿ⁾.

As a specific example, the conversion unit 107 receives C2₂⁽¹⁾, C2₂⁽²⁾, C2₂⁽³⁾, ... , C2₂^{(M)} from the decryption unit 105, and generates C4₂⁽¹⁾, C4₂⁽²⁾, C4₂⁽³⁾, ... , C4₂^{(M)}. The conversion unit 107 outputs generated content portions C4₂⁽¹⁾, C4₂⁽²⁾, C4₂⁽³⁾, ... , C4₂^{(M)} to the encryption unit 110 in sequence.
Since the conversion from MPEG-2 to MPEG-4 can be realized by a known technique, its explanation has been omitted here.

(8) Medium Recording Key Generation Unit 108
   The medium recording key generation unit 108 is constituted by a random number generator and the like, and generates medium recording key K_{T}. Medium recording key K_{T} is 128-bit data used as an encryption key when the encryption unit 110 performs encryption. The medium recording key generation unit 108 outputs generated medium recording key K_{T} to the medium recording key storage unit 109.

(9) Medium Recording Key Storage Unit 109
   The medium recording key storage unit 109 receives medium recording key K_{T} from the medium recording key generation unit 108, and stores received medium recording key K_{T}. After the write/read unit 113 writes medium recording key K_{T} to the portable medium 14, the medium recording key storage unit 109 deletes medium recording key K_{T} stored therein.
(10) Encryption Unit 110
   The encryption unit 110 sequentially receives content portions C4⁽ⁿ⁾ from the conversion unit 107. The encryption unit 110 also reads device recording key K_{T} from the medium recording key storage unit 109, and applies encryption algorithm E₂ to each content portion C4⁽ⁿ⁾ using medium recording key K_{T} as an encryption key, to generate encrypted content portions EC4⁽ⁿ⁾. Which is to say, EC4⁽ⁿ⁾ = E₂ (C4⁽ⁿ⁾, K_{T}) . Encryption algorithm E₂ used by the encryption unit 110 is AES as one example.

Suppose the encryption unit 110 sequentially encrypts content portions C4₂⁽¹⁾, C4₂⁽²⁾, C4₂⁽³⁾, ... , C4₂^{(M)} to generate EC4₂⁽¹⁾, EC4₂⁽²⁾, EC4₂⁽³⁾, ... , EC4₂^{(M)}, as a specific example. The encryption unit 110 outputs generated encrypted content portions EC4₂⁽¹⁾, EC4₂⁽²⁾, EC4₂⁽³⁾, ... , EC4₂^{(M)} to the write/read unit 113.

(11) Device Unique Key Storage Unit 111
   The device unique key storage unit 111 holds device unique key Ka in advance. Device unique key Ka is 56-bit data used for encrypting and decrypting device recording key K_{HDD}. (12) Encryption/decryption Unit 112
   The encryption/decryption unit 112 reads device recording key K_{HDD} from the device recording key storage unit 102, and also reads device unique key Ka from the device unique key storage unit 111. The encryption/decryption unit 112 applies encryption algorithm E₃ to device recording key K_{HDD} using device unique key Ka as an encryption key, to generate encrypted device recording key EK_{HDD}. The encryption/decryption unit 112 outputs encrypted device recording key EK_{HDD} to the write/read unit 113, together with the device ID "ID_A" read from the device ID area 104c in the storage unit 104. For example, encryption algorithm E₃ is DES.

Also, upon receiving encrypted device recording key EK_{HDD} and a device ID from the write/read unit 113, the encryption/decryption unit 112 judges whether the received device ID matches the device ID "ID_A" of the recording/reproduction device 10 stored in the device ID area 104c.
If the received device ID matches "ID_A", the encryption/decryption unit 112 reads device unique key Ka from the device unique key storage unit 111, and applies decryption algorithm D₃ to encrypted device recording key EK_{HDD} using device unique key Ka as a decryption key, to generate device recording key K_{HDD}. The encryption/decryption unit 112 writes generated device recording key K_{HDD} to the device recording key storage unit 102.

If the received device ID does not match "ID_A", the encryption/decryption unit 112 abandons the received device ID and encrypted device recording key EK_{HDD}. Decryption algorithm D₃ used here is an algorithm for converting ciphertext, which is generated by encryption according to encryption algorithm E₃, to plaintext.
(13) Write/read Unit 113
   The write/read unit 113 is equipped with a memory card slot. In a state where the portable medium 14 is inserted in the memory card slot, the write/read unit 113 writes encrypted content portions EC4 ⁽ⁿ⁾ received from the encryption unit 110, encrypted device recording key EK_{HDD} and the device ID "ID_A" received from the encryption/decryption unit 112, and medium recording key K_{T} received from the medium recording key storage unit 109, to the portable medium 14. Here, each time the write/read unit 113 receives one encrypted content portion EC4⁽ⁿ⁾ from the encryption unit 110, the write/read unit 113 writes it to the portable medium 14. As a specific example, the write/read unit 113 writes encrypted content portions EC4₂⁽¹⁾, EC4₂⁽²⁾, EC4₂⁽³⁾, ... , EC4₂^{(M)} to the portable medium 14.

Also, the write/read unit 113 reads encrypted device recording key EK_{HDD} from the portable medium 14, and outputs encrypted device recording key EK_{HDD} to the encryption/decryption unit 112.
(14) Input Unit 114
   The input unit 114 receives an instruction made by a user input, and outputs the received instruction to the decryption unit 105 or the reproduction unit 106. As a specific example, the input unit 114 can be constituted by a remote control and a remote control light-receiving unit. Instructions received by the input unit 114 include a reproduction instruction, a move instruction, and a title list display instruction.

The reproduction instruction indicates to decrypt encrypted content stored in the storage unit 104 and output the decrypted content to the monitor 12 and the speaker 13. The move instruction indicates to compression-convert encrypted content stored in the storage unit 104 and move the compression-converted encrypted content to the portable medium 14.
(15) Recording Control Unit 115
   The recording control unit 115 generates, each time encrypted content is recorded to the encrypted content area 104a in the storage unit 104, content information corresponding to the recorded encrypted content, and adds the generated content information to the content table 120 in the content table area 104b. Also, the recording control unit 115 changes the usability field of content information corresponding to content which has become unusable as a result of being moved to the portable medium 14, from "1" to "0". Further, the recording control unit 15 changes the usability field of content information corresponding to content which has become usable as a result of being moved from the portable medium 14, from "0" to "1".

Also, the recording control unit 115 generates the title list from the content table 120. For example, title list 125 shown in FIG. 4A is generated by the recording control unit 115. For each set of content information included in the content table 120, the recording control unit 115 extracts information written in the title field and the recording duration field. The recording control unit 115 also sets "○" if the usability field is "1", and "×" if the usability field is "0". Having done so, the recording control unit 115 generates title information made up of the title field, the recording duration field, and the usability field. The recording control unit 115 generates title list 125 which contains title information corresponding to each set of content information in the content table 120, and retains title list 125 therein.

Here, the recording control unit 115 may instead generate title list 129 shown in FIG. 4B. In this case, the recording control unit 115 extracts each set of content information whose usability field is "1", from the content table 120. For each extracted set of content information, the recording control unit 115 extracts information written in the title field and the recording duration field, and generates title information made up of the title field and the recording duration field. The recording control unit 115 generates title list 129 which contains title information corresponding to each extracted set of content information, and retains title list 129 therein.

### 4. Monitor 12 and Speaker 13

The monitor 12 and the speaker 13 are actually realized by a digital television connected to the recording/reproduction device 10. The monitor 12 receives the video signal from the reproduction unit 106, and outputs the received video signal. The speaker 13 receives the audio signal from the reproduction unit 106, and outputs the received audio signal.

### 5. Portable Medium 14

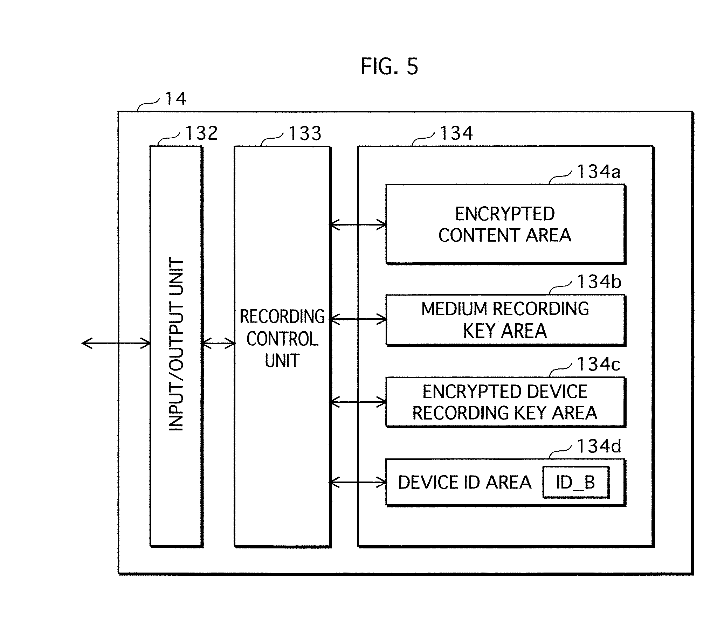

FIG. 5 is a functional block diagram showing a functional construction of the portable medium 14. As illustrated, the portable medium 14 includes an input/output unit 132, a recording control unit 133, and a storage unit 134. The storage unit 134 includes an encrypted content area 134a, a medium recording key area 134b, an encrypted device recording key area 134c, and a device ID area 134d.

The portable medium 14 is a card-type memory used in a state of being inserted in a memory card slot of the recording/reproduction device 10 or the mobile information terminal 15. A specific example of the portable medium 14 is an SD memory card.
Encrypted content is moved from the recording/reproduction device 10 to the portable medium 14, in a state where the portable medium 14 is inserted in the memory card slot of the recording/reproduction device 10. The moved encrypted content is stored in the encrypted content area 134a. The encrypted content stored in the encrypted content area 134a can be reproduced using the mobile information terminal 15, in a state where the portable medium 14 is inserted in the memory card slot of the mobile information terminal 15. Also, the encrypted content stored in the encrypted content area 134a can be moved back to the recording/reproduction device 10, in a state where the portable medium 14 is inserted in the recording/reproduction device 10.
(1) Input/output Unit 132
   The input/output unit 132 is made up of a connector pin, an interface driver, and the like, and is an interface for conducting input/output of data with a device in which the portable medium 14 is inserted.

In a state where the portable medium 14 is inserted in the memory card slot of the recording/reproduction device 10, the input/output unit 132 receives encrypted content portions EC4⁽ⁿ⁾, encrypted device recording key EK_{HDD}, the device ID "ID_A", and medium recording key K_{T} from the write/read unit 113 in the recording/reproduction device 10, and outputs the received data to the recording control unit 133. Here, each time the input/output unit 132 receives one encrypted content portion EC4 ⁽ⁿ⁾ from the write/read unit 113, the input/output unit 132 outputs it to the recording control unit 133. As a specific example, the input/output unit 132 receives encrypted content portions EC4₂⁽¹⁾, EC4₂⁽²⁾, EC4₂⁽³⁾, ... , EC4₂^{(M)}. Also, upon receiving encrypted device recording key EK_{HDD}, the device ID "ID_A", and a device ID "ID_B" from the recording control unit 133, the input/output unit 132 outputs received encrypted device recording key EK_{HDD}, device ID "ID_A", and device ID "ID_B" to the write/read unit 113.

In a state where the portable medium 14 is inserted in the memory card slot of the mobile information terminal 15, the input/output unit 132 receives encrypted content EC4 and medium recording key K_{T} from the recording control unit 133, and outputs received encrypted content EC4 and medium recording key K_{T} to an input/output unit 141 in the mobile information terminal 15.
(2) Recording Control Unit 133
   (a) When the Portable Medium 14 is Inserted in the Recording/reproduction Device 10
      The recording control unit 133 writes various data received from the input/output unit 132, to corresponding areas in the storage unit 134. In more detail, the recording control unit 133 writes encrypted content portions EC4 ⁽ⁿ⁾ received from the input/output unit 132 to the encrypted content area 134a in sequence, encrypted device recording key EK_{HDD} and the device ID "ID_A" to the encrypted device recording key area 134c, and medium recording key K_{T} to the medium recording key area 134b.

Also, when moving content to the recording/reproduction device 10, the recording control unit 133 deletes encrypted content EC4 stored in the encrypted content area 134a and medium recording key K_{T} stored in the medium recording key area 134b. Having done so, the recording control unit 133 reads encrypted device recording key EK_{HDD} from the encrypted device recording key area 134c, and outputs encrypted device recording key EK_{HDD} to the input/output unit 132.
(b) When the Portable Medium 14 is Inserted in the Mobile information terminal 15
   The recording control unit 133 reads encrypted content EC4 stored in the encrypted content area 134a and medium recording key K_{T} stored in the medium recording key area 134b, and outputs encrypted content EC4 and medium recording key K_{T} to the input/output unit 132.

(3) Storage Unit 134
   The storage unit 134 is actually constituted by a flash memory.
   The encrypted content area 134a stores encrypted content EC4 which is obtained by accumulating encrypted content portions EC4⁽ⁿ⁾ received from the recording/reproduction device 10 via the recording control unit 133 and the input/output unit 132. As a specific example, the encrypted content area 134a receives and accumulates encrypted content portions EC4₂⁽¹⁾, EC4₂⁽²⁾, EC4₂⁽³⁾, ... , EC4₂^{(M)} , and thereby stores encrypted content EC4₂.

The medium recording key area 134b stores medium recording key K_{T} received from the recording/reproduction device 10 via the recording control unit 133 and the input/output unit 132.
The encrypted device recording key area 134c stores encrypted device recording key EK_{HDD} received from the recording/reproduction device 10 via the recording control unit 133 and the input/output unit 132.
The device ID area 134d stores the device ID "ID_B" for uniquely identifying the portable medium 14. Here, the device ID "ID_B" has been set beforehand.

### 8. Mobile Information Terminal 15

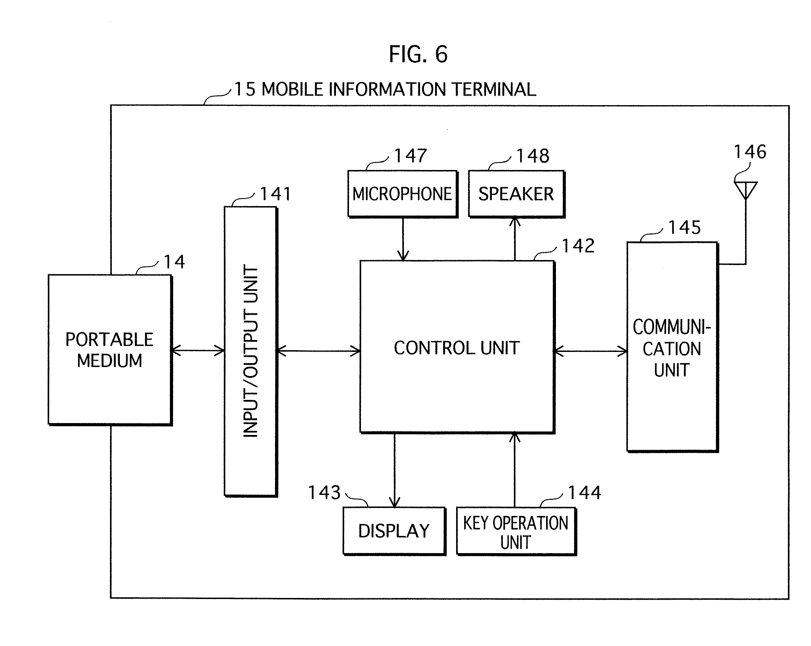

FIG. 6 is a functional block diagram showing a functional construction of the mobile information terminal 15. As shown in the drawing, the mobile information terminal 15 includes an input/output unit 141, a control unit 142, a display 143, a key operation unit 144, a communication unit 145, an antenna 146, a microphone 147, and a speaker 148. As one example, the mobile information terminal 15 is a mobile phone that performs communications using a radio wave.

The mobile information terminal 15 is a computer system provided with a CPU, a ROM, a RAM, a memory card slot, and the like.
The input/output unit 141 is constituted by the memory card slot and the like. In a state where the portable medium 14 is inserted in the memory card slot, the input/output unit 141 reads encrypted content EC4 stored in the encrypted content area 134a and medium recording key K_{T} stored in the medium recording key area 134b, and outputs encrypted content EC4 and medium recording key K_{T} to the control unit 142.

The control unit 142 receives encrypted content EC4 and medium recording key K_{T} from the input/output unit 141, and divides encrypted content EC4 from the beginning into 128-bit encrypted content portions EC4⁽ⁿ⁾.
The control unit 142 applies decryption algorithm D₂ to each encrypted content portion EC4⁽ⁿ⁾ using medium recording key K_{T} as a decryption key, to thereby obtain content portions C4⁽ⁿ⁾. Which is to say, C4⁽ⁿ⁾ = D₂ (EC4⁽ⁿ⁾, K_{T}). Decryption algorithm D₂ used by the control unit 142 here is an algorithm for converting ciphertext, which is generated by encryption according to encryption algorithm E₂, to plaintext.

As a specific example, it is supposed here that the control unit 142 sequentially decrypts encrypted content portions EC4₂⁽¹⁾, EC4₂⁽²⁾, EC4₂⁽³⁾, EC4₂^{(M)} to thereby generate C4₂⁽¹⁾, C4₂⁽²⁾, C4₂⁽³⁾, ... , C4₂^{(M)}.
The control unit 142 then sequentially decodes content portions C4₂⁽ⁿ⁾, to generate a video signal and an audio signal. The control unit 142 outputs the video signal to the display 143, and the audio signal to the speaker 148.

The key operation unit 144, the communication unit 145, the antenna 146, the microphone 147, and the speaker 148 have general functions of a mobile phone such as telephone calls and e-mail transmission/reception. These construction elements can be realized by known techniques and so their explanation has been omitted here.

### <Operations>

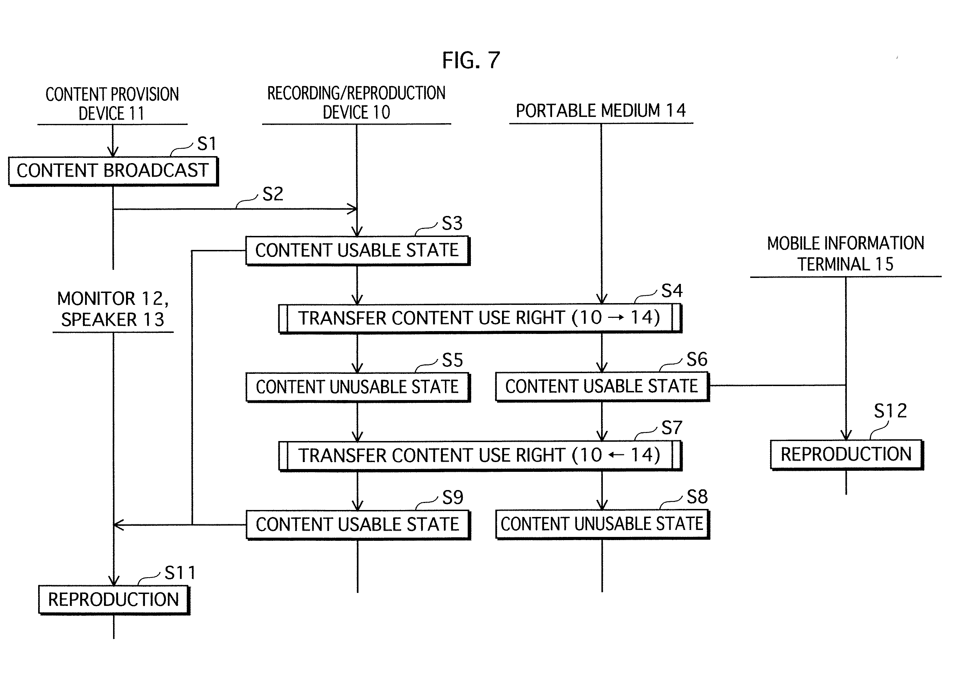

Operations of the content protection system 1 are described below, using flowcharts and the like shown in FIGS. 7 to 11.

### 1. Overall Operation of the System

FIG. 7 is a flowchart showing an overall operation of the content protection system 1 and a state of each device during the operation.
The content provision device 11 broadcasts content (step S1). The recording/reproduction device 10 receives the content via the antenna (step S2). At this time, the recording/reproduction device 10 is in a content usable state (step S3).

The recording/reproduction device 10 which is in the content usable state stores encrypted content EC2 generated by encrypting the content, which has been compression-coded according to MPEG-2, using device recording key K_{HDD}. The recording/reproduction device 10 decrypts encrypted content EC2 using device recording key K_{HDD} to generate content C2, and outputs content C2 to the monitor 12 and the speaker 13. The monitor 12 and the speaker 13 reproduce content C2 (step S11).

The recording/reproduction device 10 which is in the content usable state (step S3) transfers a right to use the content to the portable medium 14, by moving the content to the portable medium 14 inserted in the memory card slot of the recording/reproduction device 10 (step S4). Having moved the content to the portable medium 14, the recording/reproduction device 10 enters a content unusable state (step S5).
The portable medium 14 to which the content has been moved from the recording/reproduction device 10 enters the content usable state (step S6).

The portable medium 14 which is in the content usable state stores encrypted content EC4, medium recording key K_{T}, and encrypted device recording key EK_{HDD}. Encrypted content EC4 is generated by encrypting content C4, which has been compression-coded according to MPEG-4, using medium recording key K_{T}.
The portable medium 14 is inserted in the memory card slot of the mobile information terminal 15, and outputs encrypted content EC4 and medium recording key K_{T} to the mobile information terminal 15. The mobile information terminal 15 decrypts encrypted content EC4 using medium recording key K_{T}, and reproduces content C4 (step S12).

Following this, the portable medium 14 is inserted in the memory card slot of the recording/reproduction device 10, and transfers the content use right to the recording/reproduction device 10 by moving the content to the recording / reproduction device 10 (step S7). Havingmoved the content to the recording/reproduction device 10, the portable medium 14 enters the content unusable state (step S8).
The recording/reproduction device 10 to which the content has been moved from the portable medium 14 enters the content usable state (step S9). The recording/reproduction device 10 which is in the content usable state outputs content C2 to the monitor 12 and the speaker 13, and the monitor 12 and the speaker 13 reproduce content C2 (step S11).

### 2. Operation of Transferring the Content Use Right from the Recording/reproduction Device 10 to the Portable Medium 14

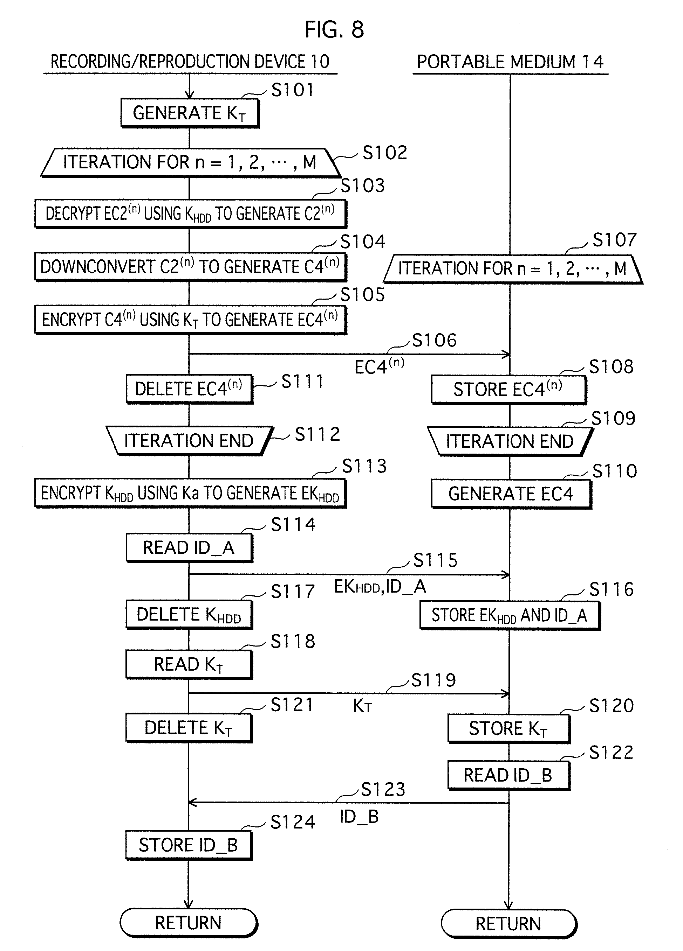

FIG. 8 is a flowchart showing an operation of moving content from the recording/reproduction device 10 to the portable medium 14. This operation is a detailed operation of step S4 in FIG. 7.
The medium recording key generation unit 108 in the recording/reproduction device 10 generates medium recording key K_{T} (step S101), and stores generated medium recording key K_{T} to the medium recording key storage unit 109.

Next, the recording/reproduction device 10 divides encrypted content EC2 stored in the encrypted content area 104a in the storage unit 104, into encrypted content portions EC2⁽ⁿ⁾. The recording/reproduction device 10 then iterates steps S102 to S112 for each of n = 1, 2, ... , M. Likewise, the portable medium 14 iterates step S107 to S109 for each of n = 1, 2, ... , M.

First, the decryption unit 105 in the recording/reproduction device 10 decrypts encrypted content portion EC2⁽ⁿ⁾ using device recording key K_{HDD}, to generate content portion C2⁽ⁿ⁾ (step S103). Next, the conversion unit 107 downconverts MPEG-2 content portion C2 ⁽ⁿ⁾ to MPEG-4 content portion C4⁽ⁿ⁾ (step S104). Following this, the encryption unit 110 encrypts content portion C4⁽ⁿ⁾ using medium recording key K_{T}, to generate encrypted content portion EC4⁽ⁿ⁾ (step S105) .

The write/read unit 113 outputs encrypted content portion EC4 ⁽ⁿ⁾ to the portable medium 14. The input/output unit 132 in the portable medium 14 receives encrypted content portion EC4⁽ⁿ⁾ (step S106). The recording control unit 133 in the portable medium 14 receives encrypted content portion EC4⁽ⁿ⁾ via the input/output unit 141, and writes encrypted content portion EC4⁽ⁿ⁾ to the encrypted content area 134a in the storage unit 134. The encrypted content area 134a stores encrypted content portion EC4 ⁽ⁿ⁾ (step S108). As a result of accumulating each encrypted content portion EC4 ⁽ⁿ⁾ in the encrypted content area 134a, encrypted content EC4 is obtained in the portable medium 14 (step S110).

After the output of step S106, the recording/reproduction device 10 deletes encrypted content portion EC4 ⁽ⁿ⁾ (step S111). Once the iteration has completed for all of n = 1, 2, ... , M (step S112), the encryption/decryption unit 112 reads device recording key K_{HDD} from the device recording key storage unit 102, and device unique key Ka from the device unique key storage unit 111. The encryption/decryption unit 112 encrypts device recording key K_{HDD} using device unique key Ka as an encryption key, to generate encrypted device recording key EK_{HDD} (step S113).

Following this, the encryption/decryption unit 112 reads ID_A from the device ID area 104c in the storage unit 104 (step S114), and outputs ID_A to the write/read unit 113 together with encrypted device recording key EK_{HDD} generated in step S113. The write/readunit 113 outputs encrypted device recording key EK_{HDD} and ID_A to the portable medium 14. The input/output unit 132 in the portable medium 14 receives encrypted device recording key EK_{HDD} and ID_A (step S115).

The recording control unit 133 in the portable medium 14 writes EK_{HDD} and ID_A to the encrypted device recording key area 134c. The encrypted device recording key area 134c stores EK_{HDD} and ID_A (step S116).
After the output in step S115, the recording/reproduction device 10 deletes device recording key K_{HDD} from the device recording key storage unit 102 (step S117). Next, the write/read unit 113 reads medium recording key K_{T} from the medium recording key storage unit 109 (step S118), and outputs read medium recording key K_{T} to the portable medium 14. The input/output unit 132 in the portable medium 14 receives medium recording key K_{T} (step S119).

The recording control unit 133 in the portable medium 14 writes medium recording key K_{T} to the medium recording key area 134b. The medium recording key area 134b stores medium recording key K_{T} (step S120). After the output in step S119, the recording/reproduction device 10 deletes medium recording key K_{T} from the medium recording key storage unit 109 (step S121).
Having written medium recording key K_{T} to the medium recording key area 134b, the recording control unit 133 in the portable medium 14 reads ID_B from the device ID area 134d (step S122), and outputs ID_B to the recording/reproduction device 10 via the input/output unit 132. The write/read unit 113 in the recording/reproduction device 10 receives ID_B (step S123).

The write/read unit 113 outputs ID_B to the recording control unit 115. The recording control unit 115 receives ID_B, specifies content information corresponding to the moved content in the content table 120 stored in the content table area 104b in the storage unit 104, and writes ID_B to the move destination device field of the specified content information (step S124).

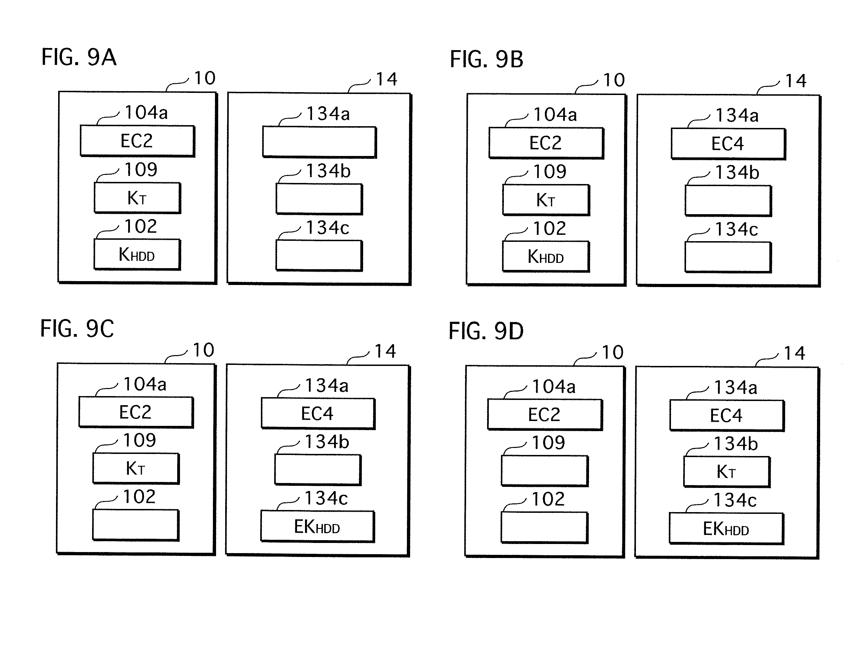

FIG. 9 shows data held in the recording/reproduction device 10 and the portable medium 14, in the process of moving content from the recording/reproduction device 10 to the portable medium 14.
FIG. 9A shows data held in the recording/reproduction device 10 and the portable medium 14, before the content movement operation.

In the recording/reproduction device 10, the encrypted content area 104a stores encrypted MPEG-2 content EC2, the medium recording key storage unit 109 stores medium recording key K_{T}, and the device recording key storage unit 102 stores device recording key K_{HDD}.
In the portable medium 14, the encrypted content area 134a, the medium recording key area 134b, and the encrypted device recording key area 134c do not hold any data.

At this time, the recording/reproduction device 10 is in the content usable state, and can use the MPEG-2 content. The portable medium 14 does not hold the content and so is in the content unusable state.
FIG. 9B shows data held in the recording/reproduction device 10 and the portable medium 14, at a point where the writing of encrypted content EC4 to the portable medium 14 ends.

In the recording/reproduction device 10, the encrypted content area 104a stores encrypted MPEG-2 content EC2, the medium recording key storage unit 109 stores medium recording key K_{T}, and the device recording key storage unit 102 stores device recording key K_{HDD}.
In the portable medium 14, the encrypted content area 134a stores encrypted MPEG-4 content EC4, whilst the medium recording key area 134b and the encrypted device recording key area 134c do not hold any data.

At this time, the recording/reproduction device 10 is in the content usable state, and can use the MPEG-2 content. The portable medium 14 holds encrypted MPEG-4 content EC4 but does not hold medium recording key K_{T} for decrypting encrypted MPEG-4 content EC4, and so is in the content unusable state.
FIG. 9C shows data held in the recording/reproduction device 10 and the portable medium 14, at a point where the movement of device recording key K_{HDD} to the portable medium 14 ends.

In the recording/reproduction device 10, the encrypted content area 104a stores encrypted MPEG-2 content EC2, the medium recording key storage unit 109 stores medium recording key K_{T}, and the device recording key storage unit 102 does not hold any data.
In the portable medium 14, the encrypted content area 134a stores encryptedMPEG-4 content EC4, the medium recording key area 134b does not hold any data, and the encrypted device recording key area 134c stores encrypted device recording key EK_{HDD}.

At this time, the recording/reproduction device 10 holds the encrypted MPEG-2 content but does not hold device recording key K_{HDD} for decrypting the encrypted MPEG-2 content, and so is in the content unusable state. The portable medium 14 holds the encrypted MPEG-4 content but does not holdmediumrecording key K_{T} for decrypting the encrypted MPEG-4 content, and so is in the content unusable state.
FIG. 9D shows data held in the recording/reproduction device 10 and the portable medium 14, at a point where the content movement operation ends.

In the recording/reproduction device 10, the encrypted content area 104a stores encrypted MPEG-2 content EC2, whilst the medium recording key storage unit 109 and the device recording key storage unit 102 do not hold any data.
In the portable medium 14, the encrypted content area 134a stores encrypted MPEG-4 content EC4, the medium recording key area 134b stores medium recording key K_{T}, and the encrypted device recording key area 134c stores encrypted device recording key EK_{HDD}.

At this time, the recording/reproduction device 10 holds encryptedMPEG-2 content EC2 but does not hold device recording key K_{HDD} for decrypting encrypted MPEG-2 content EC2, and so is in the content unusable state. The portable medium 14 holds encrypted MPEG-4 content EC4 and medium recording key K_{T} for decrypting encrypted MPEG-4 content EC4, and so is in the content usable state.

### 3. Operation of Transferring the Content Use Right from the Portable Medium 14 to the Recording/reproduction Device 10

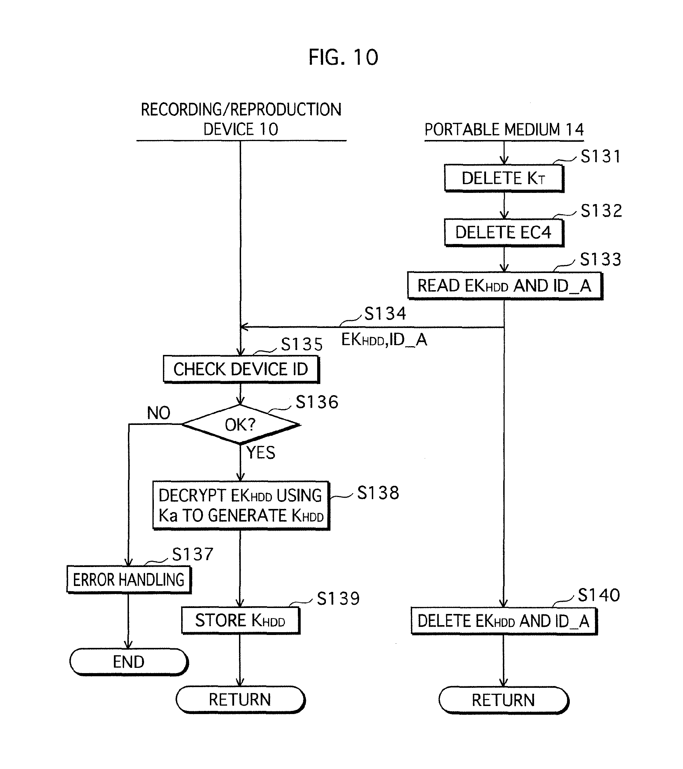

FIG. 10 is a flowchart showing an operation of moving content from the portable medium 14 to the recording/reproduction device 10. This operation is a detailed operation of step S7 shown in FIG. 7.

The recording control unit 133 in the portable medium 14 deletes medium recording key K_{T} from the medium recording key area 134b in the storage unit 134 (step S131), and further deletes encrypted content EC4 from the encrypted content area 134a in the storage unit 134 (step S132).
Next, the recording control unit 133 reads encrypted device recording key EK_{HDD} and the device ID "ID_A" from the encrypted device recording key area 134c in the storage unit 134 (step S133), and outputs encrypted device recording key EK_{HDD} and ID_A to the recording/reproduction device 10 via the input/output unit 132. The write/read unit 113 in the recording/reproduction device 10 receives encrypted device recording key EK_{HDD} and ID_A (step S134), and outputs encrypted device recording key EK_{HDD} and ID_A to the encryption/decryption unit 112.

The encryptson/decryption unit 112 checks whether the received device ID "ID_A" matches the device ID of the recording/reproduction device 10 (step S135). If the two device IDs do not match (step S136: NO), the write/read unit 113 abandons the received device ID "ID_A" and encrypted device recording key EK_{HDD}. After this, the recording/reproduction device 10 performs error handling such as outputting an error message to the monitor 12 (step S137).

If the received device ID "ID_A" matches the device ID of the recording/reproduction device 10 (step S136: YES), the encryption/decryption unit 112 reads device unique key Ka from the device unique key storage unit 111, and decrypts encrypted device recording key EK_{HDD} using device unique key Ka as an encryption key, to generate device recording key K_{HDD} (step S138).
The encryption/decryption unit 112 writes generated device recording key K_{HDD} to the device recording key storage unit 102. The device recording key storage unit 102 stores device recording key K_{HDD} (step S139).

Once device recording key K_{HDD} has been stored in the device recording key storage unit 102, the recording control unit 133 in the portable medium 14 deletes encrypted device recording key EK_{HDD} and the device ID "ID_A" stored in the encrypted device recording key area 134c (step S140).

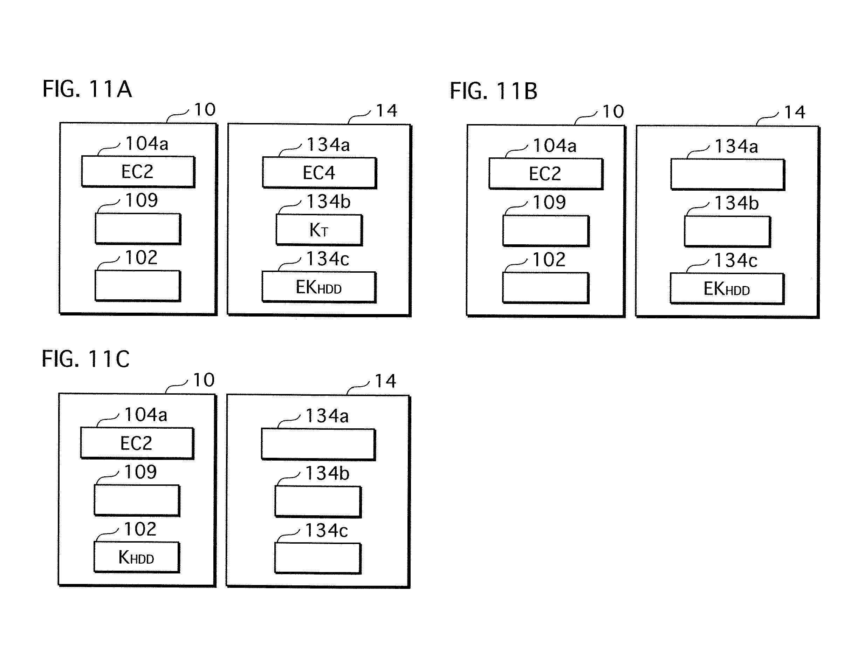

FIG. 11 shows data held in the recording/reproduction device 10 and the portable medium 14, in the process of moving content from the portable medium 14 to the recording/reproduction device 10.

FIG. 11A shows data held in the recording/reproduction device 10 and the portable medium 14 before the content movement operation. The state shown in FIG. 11A is the same as that shown in FIG. 9D. That is, the recording/reproduction device 10 holds encrypted MPEG-2 content EC2 but does not hold device recording key K_{HDD} for decrypting encrypted MPEG-2 content EC2, and so is in the content unusable state. The portable medium 14 holds encrypted MPEG-4 content EC4 and medium recording key K_{T} for decrypting encrypted MPEG-4 content EC4, and so is in the content usable state.

FIG. 11B shows data held in the recording/reproduction device 10 and the portable medium 14, at a point where the deletion of encrypted content EC4 and medium recording key K_{T} ends.
In the recording/reproduction device 10, the encrypted content area 104a stores encrypted MPEG-2 content EC2, whilst the medium recording key storage unit 109 and the device recording key storage unit 102 do not hold any data.

In the portable medium 14, the encrypted content area 134a and the medium recording key area 134b do not hold any data, whilst the encrypted device recording key area 134c holds encrypted device recording key EK_{HDD}.
At this time, the recording/reproduction device 10 holds encrypted MPEG-2 content EC2 but does not hold device recording key K_{HDD} for decrypting encrypted MPEG-2 content EC2, and so is in the content unusable state. The portable medium 14 does not hold the content, and so is in the content unusable state.

FIG. 11C shows data held in the recording/reproduction device 10 and the portable medium 14, at a point where the content movement operation ends.
In the recording/reproduction device 10, the encrypted content area 104a stores encrypted MPEG-2 content EC2, the medium recording key storage unit 109 does not hold any data, and the device recording key storage unit 102 stores device recording key K_{HDD}.

In the portable medium 14, the encrypted content area 134a, the medium recording key area 134b, and the encrypted device recording key area 134c do not hold any data.
At this time, the recording/reproduction device 10 is in the content usable state, and can use the MPEG-2 content of a high image quality. Meanwhile, the portable medium 14 is in the content unusable state.
Though this embodiment describes a construction in which, when moving content from the portable medium 14 to the recording/reproduction device 10, first the recording control unit 133 in the portable medium 14 deletes medium recording key K_{T} in step S131 in FIG. 10, but the present invention is not limited to this construction.

For instance, the following modification is applicable. When moving content from the portable medium 14 to the recording/reproduction device 10, the recording/reproduction device 10 reads the device ID stored in the encrypted device recording key area 134c in the portable medium 14, and checks whether the read device ID matches the device ID of the recording/reproduction device 10, in order to judge whether the content to be moved is the content which the recording/reproduction device 10 itself has moved to the portable medium 14.

If the two device IDs match and the recording/reproduction device 10 judges that the content to be moved is the content which the recording/reproduction device 10 itself has moved to the portable medium 14, the recording/reproduction device 10 notifies the portable medium 14 of the judgment result. Upon receiving the notification, the portable medium 14 performs step S131 onward.
If the two device IDs do not match and the recording/reproduction device 10 judges that the content to be moved is not the content which the recording/reproduction device 10 itself has moved to the portable medium 14, the recording/reproduction device 10 notifies the portable medium 14 of the judgment result. Upon receiving the notification, the portable medium 14 terminates the content movement operation.

Alternatively, instead of deleting medium recording key K_{T} in step S131, medium recording key K_{T} may be temporarily disabled by, for example, inverting a specific bit of medium recording key K_{T} or moving medium recording key K_{T} to a temporary save folder. In this case, if the judgment in step S136 is YES, deletion of medium recording key K_{T} which has been temporarily disabled is performed along with step S140. If the judgment in step S136 is NO, medium recording key K_{T} which has been temporarily disabled is enabled as the error handling of step S137.

### <Modifications>

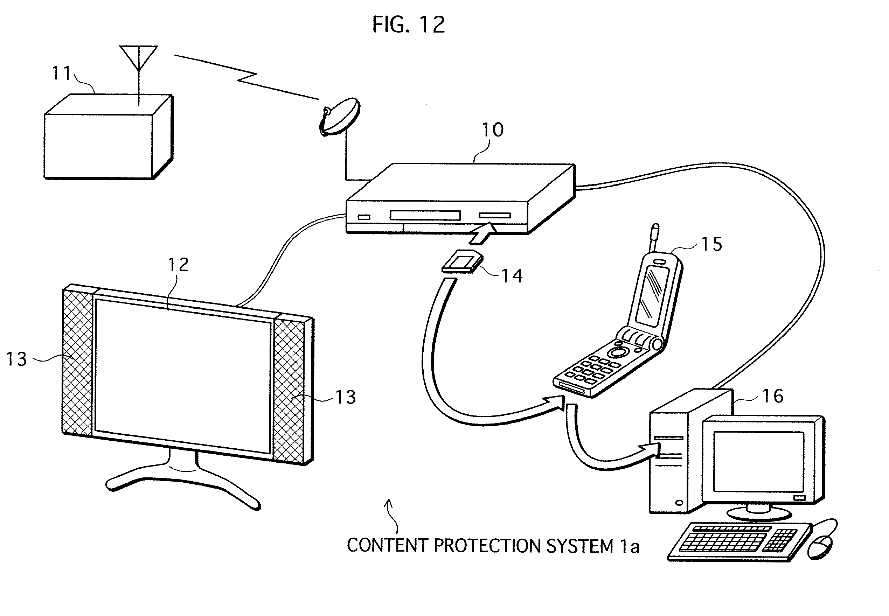

The following describes a content protection system 1a as a modification to the first embodiment. FIG. 12 shows a system construction of the content protection system 1a. As illustrated, the content protection system 1a is roughly made up of the recording/reproduction device 10, the content provision device 11, the monitor 12, the speaker 13, the portable medium 14, the mobile information terminal 15, and a PC 16.

The content protection system 1a has a construction in which the PC 16 has been added to the content protection system 1. The recording/reproduction device 10 and the PC 16 are connected via a cable.
The content protection system 1a further moves content which has been moved from the recording/reproduction device 10 to the portable medium 14, from the portable medium 14 to the PC 16.
The content provision device 11, the monitor 12, the speaker 13, the portable medium 14, and the mobile information terminal 15 are the same as those in the content protection system 1, so that their explanation has been omitted here.

### 1. Construction of the Recording/reproduction Device 10

The recording/reproduction device 10 is connected with the PC 16, as mentioned earlier. The recording/reproduction device 10 includes a transmission/reception unit for performing data transmission/reception and the like with the PC 16, in addition to the construction elements shown in the functional block diagram of FIG. 2. The transmission/reception unit in the recording/reproduction device 10 reads data stored in the storage unit 104 and the device unique key storage unit 111, and transmits the read data to the PC16. The transmission/reception unit also checks a device ID received from the PC 16.

### 2. Construction of the PC 16

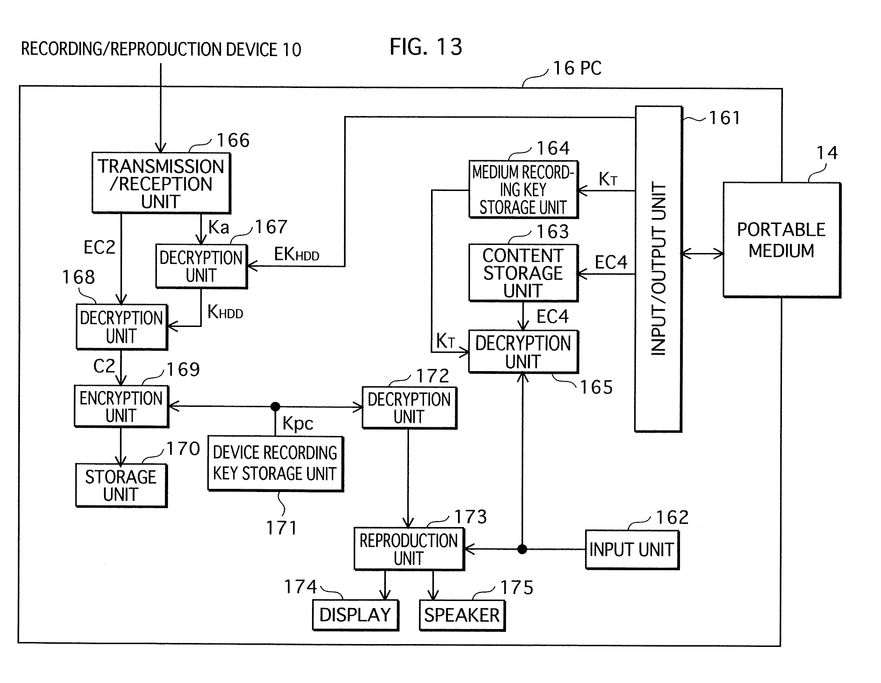

FIG. 13 is a functional block diagram showing a functional construction of the PC 16. As shown in the drawing, the PC 16 includes an input/output unit 161, an input unit 162, a content storage unit 163, a medium recording key storage unit 164, a decryption unit 165, a transmission/reception unit 166, a decryption unit 167, a decryption unit 168, an encryption unit 169, a storage unit 170, a device recording key storage unit 171, a decryption unit 172, a reproduction unit 173, a display 174, and a speaker 175.

The PC 16 is actually a computer system provided with a microprocessor, a ROM, a RAM, a hard disk unit, a display, a keyboard, a mouse, and the like. Here, the PC 16 and the recording/reproduction device 10 are connected via a cable.
(1) Input/output Unit 161
   The input/output unit 161 is a memory card interface provided with a memory card slot, an interface driver, and the like. The input/output unit 161 reads data from the portable medium 14, in a state where the portable medium 14 is inserted in the memory card slot.

In detail, upon receiving a signal for reading content from the input unit 162, the input/output unit 161 reads encrypted content EC4 which has been compression-coded according to MPEG-4, from the encrypted content area 134a in the portable medium 14. The input/output unit 161 writes read encrypted content EC4 to the content storage unit 163. Also, the input/output unit 161 reads medium recording key K_{T} from the medium recording key area 134b in the portable medium 14, and writes medium recording key K_{T} to the medium recording key storage unit 164. Further, the input/output unit 161 reads encrypted device recording key EK_{HDD} from the encrypted device recording key area 134c in the portable medium 14, and outputs encrypted device recording key EK_{HDD} to the decryption unit 167.

(2) Input Unit 162
   The input unit 162 is constituted by the keyboard, the mouse, and the like, and receives a request made by the user operating the keyboard and the mouse. The input unit 162 generates a signal corresponding to the received request, and outputs the generated signal to the input/output unit 161, the decryption unit 165, or the reproduction unit 173.

(3) Content Storage Unit 163
   The content storage unit 163 stores encrypted MPEG-4 content EC4 read from the portable medium 14 by the input/output unit 161.
(4) Medium Recording Key Storage Unit 164
   The medium recording key storage unit 164 stores medium recording key K_{T} read from the portable medium 14 by the input/output unit 161.

(5) Decryption Unit 165
   The decryption unit 165, upon receiving a signal to reproduce the MPEG-4 content from the input unit 162, reads encrypted content EC4 from the content storage unit 163 and medium recording key K_{T} from the medium recording key storage unit 164.
   The decryption unit 165 divides encrypted content EC4 from the beginning in units of 128 bits, to generate encrypted content portions EC4⁽ⁿ⁾.

The decryption unit 165 applies decryption algorithm D₂ to each encrypted content portion EC4 ⁽ⁿ⁾ using medium recording key K_{T} as a decryption key, to generate content portions C4 ⁽ⁿ⁾. The decryption unit 165 then outputs content portions C4 ⁽ⁿ⁾ sequentially to the reproduction unit 173.
(6) Transmission/reception Unit 166
   The transmission/reception unit 166 includes a cable connector and the like, and receives encrypted content EC2 which has been compression-coded according to MPEG-2 and device unique key Ka from the recording/reproduction device 10 to which the PC 16 is connected via the cable. The transmission/reception unit 166 outputs encrypted content EC2 to the decryption unit 168, and device unique key Ka to the decryption unit 167.

(7) Decryption Unit 167
   The decryption unit 167 receives encrypted device recording key EK_{HDD} read from the portable medium 14 by the input/output unit 161, and device unique key Ka from the recording/reproduction device 10 via the transmission/reception unit 166.
   The decryption unit 167 applies decryption algorithm D₃ to encrypted device recording key EK_{HDD} using device unique key Ka as a decryption key, to generate device recording key K_{HDD}. The decryption unit 167 outputs device recording key K_{HDD} to the decryption unit 168. Here, decryption algorithm D₃ is an algorithm for converting ciphertext, which is generated by encryption according to encryption algorithm E₃, to plaintext.

(8) Decryption Unit 168
   The decryption unit 168 receives encrypted content EC2 from the recording/reproduction device 10 via the transmission/reception unit 166, and device recording key K_{HDD} from the decryption unit 167.
   The decryption unit 168 divides encrypted content EC2 from the beginning into 128-bit encrypted content portions EC2⁽ⁿ⁾. The decryption unit applies decryption algorithm D₁ to each encrypted content portion EC2 ⁽ⁿ⁾ using device recording key K_{HDD} as a decryption key, to generate content portions C2⁽ⁿ⁾. The decryption unit 168 sequentially outputs content portions C2⁽ⁿ⁾ to the encryption unit 169.

(9) Encryption Unit 169
   The encryption unit 169 receives content portions C2⁽ⁿ⁾ from the decryption unit 168.
   The encryption unit 103 also reads device recording key K_{PC} from the device recording key storage unit 171. The encryption unit 103 applies encryption algorithm E₁ to each content portion C2⁽ⁿ⁾ using device recording key K_{PC} as an encryption key, to generate encrypted content portions EC2⁽ⁿ⁾. Which is to say, EC2⁽ⁿ⁾ = E₁ (C2 ⁽ⁿ⁾, K_{PC}).

The encryption unit 169 stores encrypted content portions EC2 ⁽ⁿ⁾ to the storage unit 170.
(10) Storage Unit 170
   The storage unit 170 stores encrypted content EC2 which is obtained by accumulating encrypted content portions EC2⁽ⁿ⁾ output from the encryption unit 169.

(11) Device Recording Key Storage Unit 171
   The device recording key storage unit 171 stores device recording key K_{PC} in advance. Device recording key K_{PC} is 128-bit data that is used as an encryption key by the encryption unit 169 and also used as a decryption key by the decryption unit 172.
(12) Decryption Unit 172
   The decryption unit 172 reads encrypted content EC2 from the storage unit 170, and divides encrypted content EC2 from the beginning in units of 128 bits, thereby generating encrypted content portions EC2⁽ⁿ⁾.

Also, the decryption unit 172 reads device recording key K_{PC} stored in the device recording key storage unit 171, and applies decryption algorithm D₁ to each encrypted content portion EC2⁽ⁿ⁾ using device recording key K_{PC} as a decryption key, to generate content portions C2⁽ⁿ⁾. Which is to say, C2⁽ⁿ⁾ = D₁ (EC2⁽ⁿ⁾**,** K_{PC}). Here, decryption algorithm D₁ is an algorithm for converting ciphertext, which is generated by encryption according to encryption algorithm E₁, to plaintext.

The decryption unit 172 sequentially outputs content portions C2⁽ⁿ⁾ to the reproduction unit 173.
(13) Reproduction Unit 173
   The reproduction unit 173 is provided with an MPEG-2 decoder and an MPEG-4 decoder.
   Upon receiving content C4 which has been compression-coded according to MPEG-4 from the decryption unit 165, the reproduction unit 173 decodes content C4 using the MPEG-4 decoder, to generate a video signal and an audio signal.

Upon receiving content C2 which has been compression-coded according to MPEG-2 from the decryption unit 172, the reproduction unit 173 decodes content C2 using the MPEG-2 decoder, to generate a video signal and an audio signal.
The reproduction unit 173 outputs the generated video signal to the display 174, and the generated audio signal to the speaker 175.

(14) Display 174 and Speaker 175
   The display 174 receives the video signal from the reproduction unit 173, and outputs the video signal. The speaker 175 receives the audio signal from the reproduction unit 173, and outputs the audio signal.

### 3. Operation of the Operation of the Entire System

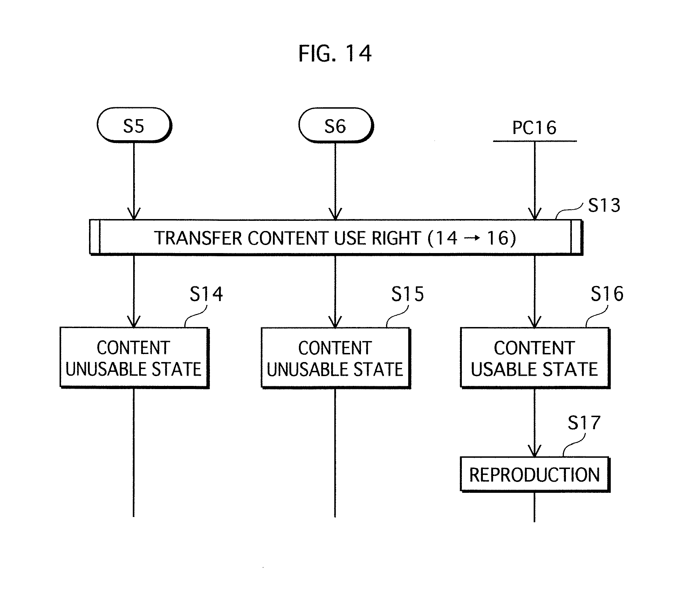

The following describes an overall operation of the content protection system 1a and a state of each device in the operation, using flowcharts shown in FIGS. 7 and 14.

First, in steps S1 to S6 shown in FIG. 7, the content protection system 1a operates in the same way as the content protection system 1. Step S6 is followed by the procedure shown in FIG. 14.
A content use right transfer operation is performed between the recording/reproduction device 10 which is in the content unusable state (step S5), the portable medium 14 which is in the content usable state (step S6), and the PC 16 (step S13).

The recording/reproduction device 10 remains in the content unusable state (step S14). Also, as a result of moving the content, the portable medium 14 enters the content unusable state (step S15). Meanwhile, the PC 16 to which the content has been moved is in the content usable state (step S16).
The recording/reproduction device 10 which is in the content usable state outputs and reproduces the content (step S17).

### 4. Content Use Right Transfer Operation

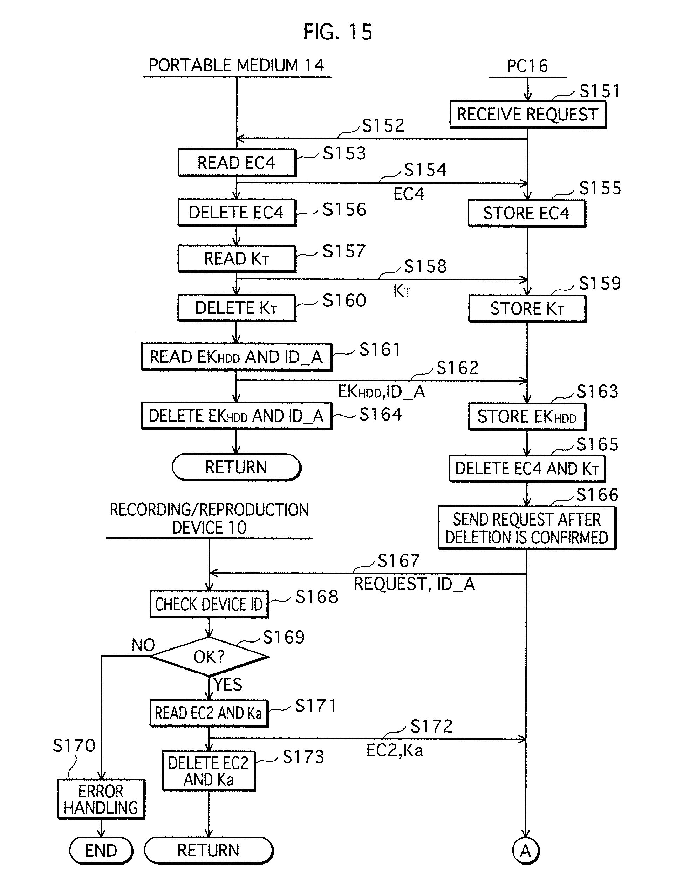

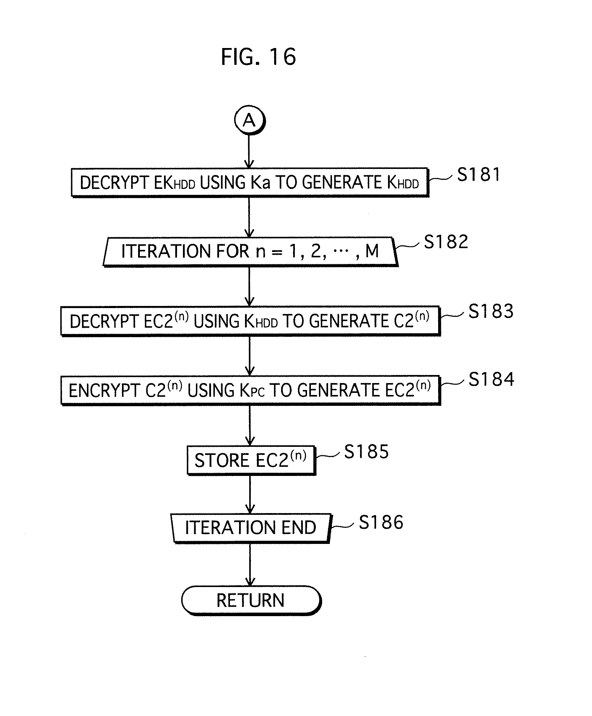

The operation of transferring the content use right from the portable medium 14 to the PC 16 is described below, using flowcharts shown in FIGS. 15 and 16. This operation is a detailed operation of step S13 shown in FIG. 14.
In a state where the portable medium 14 is inserted in the memory card slot of the PC 16, the input/output unit 161 in the PC 16 receives a move request made by the user operating the input unit 162 (step S151). Having received the move request, the input/output unit 161 outputs a content read instruction to the portable medium 14 (step S152).

The recording control unit 133 in the portable medium 14 receives the content read instruction via the input/output unit 132. The recording control unit 133 responsively reads encrypted content EC4 from the encrypted content area 134a (step S153), and outputs encrypted content EC4 to the PC 16 via the input/output unit 132. The input/output unit 161 in the PC 16 receives encrypted content EC4 (step S154). The input/output unit 161 writes received encrypted content EC4 to the content storage unit 163. The content storage unit 163 stores encrypted content EC4 (step S155).

After the output of encrypted content EC4 to the PC 16 in step S154, the recording control unit 133 deletes encrypted content EC4 from the encrypted content area 134a (step S156) .
Next, the recording control unit 133 reads medium recording key K_{T} from the medium recording key area 134b (step S157), and outputs medium recording key K_{T} to the PC 16 via the input/output unit 132. The input/output unit 161 in the PC 16 receives medium recording key K_{T} (step S158). The input/output unit 161 writes received medium recording key K_{T} to the medium recording key storage unit 164. The medium recording key storage unit 164 stores medium recording key K_{T} (step S159) . The recording control unit 133 in the portable medium 14 then deletes medium recording key K_{T} from the medium recording key area 134b (step S160).

After the output of medium recording key K_{T} to the PC 16 in step S158, the recording control unit 133 reads encrypted device recording key EK_{HDD} and ID_A from the encrypted device recording key area 134c (step S161), and outputs encrypted device recording key EK_{HDD} and ID_A to the PC 16 via the input/output unit 132. The input/output unit 161 in the PC 16 receives encrypted device recording key EK_{HDD} and ID_A (step S162). The input/output unit 161 outputs encrypted device recording key EK_{HDD} to the decryption unit 167. The decryption unit 167 receives encrypted device recording key EK_{HDD} and stores it therein (step S163). The input/output unit 161 also outputs ID_A to the transmission/reception unit 166.

Meanwhile, the recording control unit 133 in the portable medium 14 deletes encrypted device recording key EK_{HDD} and ID_A from the encrypted device recording key area 134c (step S164).
Note here that during the period from steps S159 to S163, the PC 16 can use the MPEG-4 content.
The PC 16 deletes encrypted content EC4 stored in the content storage unit 163 and medium recording key K_{T} stored in the medium recording key storage unit 164 (step S165). After ensuring that encrypted content EC4 and medium recording key K_{T} have been deleted, the PC 16 requests the MPEG-2 content from the recording/reproduction device 10 via the transmission/reception unit 166 (step S166).

In detail, the transmission/reception unit 166 transmits a signal for requesting the MPEG-2 content and the device ID "ID_A" received from the input/output unit 161, to the recording/reproduction device 10. The transmission/reception unit in the recording/reproduction device 10 receives the signal for requesting the MPEG-2 content and the device ID "ID_A" (step S167).
The transmission/reception unit in the recording/reproduction device 10 reads the device ID from the device ID area 104c in the storage unit 104, and checks whether the read device ID matches the received device ID "ID_A" (step S168). If the two device IDs do not match (step S169: NO), the transmission/reception unit abandons the received device ID "ID_A", and notifies the PC 16 of an error (step S170).

If the two device IDs match (step S169: YES), the transmission/reception unit reads encrypted content EC2 from the encrypted content area 104a in the storage unit 104, and also reads device unique key Ka from the device unique key storage unit 111 (step S171). The transmission/reception unit transmits encrypted content EC2 and device unique key Ka to the PC 16. The transmission/reception unit 166 in the PC 16 receives encrypted content EC4 and device unique key Ka (step S172). After this, the recording/reproduction device 10 deletes encrypted content EC2 and device unique key Ka (step S173).

The transmission/reception unit 166 in the PC 16 outputs received device unique key Ka to the decryption unit 167. The decryption unit 167 decrypts encrypted device recording key EK_{HDD} using device unique key Ka to generate device recording key K_{HDD} (step S181). The decryption unit 167 outputs generated device recording key K_{HDD} to the decryption unit 168.
Also, the transmission/reception unit 166 outputs received encrypted content EC to the decryption unit 168. The decryption unit 168 divides received encrypted content EC2 from the beginning into 128-bit encrypted content portions EC2⁽ⁿ⁾.

Next, an iteration of steps S182 to S186 is performed for each of n = 1, 2, ... , M. The decryption unit 168 decrypts encrypted content portion EC2⁽ⁿ⁾ using device recording key K_{HDD} to generate content portion C2⁽ⁿ⁾ (step S183). The decryption unit 168 outputs generated content portion C2⁽ⁿ⁾ to the encryption unit 169. The encryption unit 169 reads device recording key K_{PC} from the device recording key storage unit 171, and encrypts content portion C2⁽ⁿ⁾ using read device recording key K_{PC} as an encryption key to generate encrypted content portion EC2⁽ⁿ⁾ (step S184).

The encryption unit 169 stores generated encrypted content portion EC2⁽ⁿ⁾ to the storage unit 170 (step S185).

### <Second Embodiment>

The following describes a content protection system 2 as a second embodiment of the present invention.

### <Construction>

### 1. Overall System

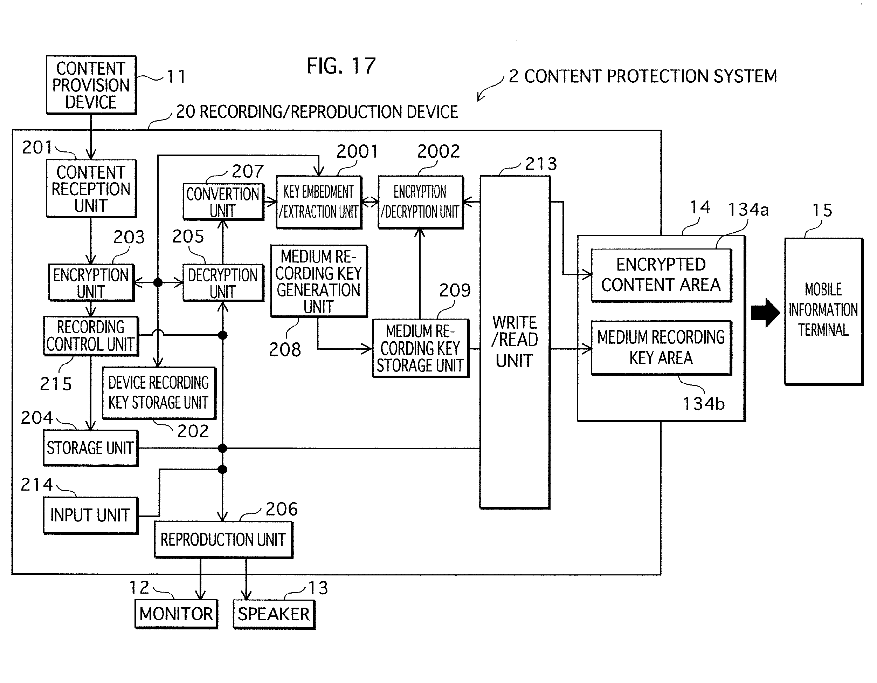

FIG. 17 shows a construction of the content protection system 2 and a functional construction of a recording/reproduction device 20. As shown in the drawing, the content protection system 2 is roughly made up of the recording/reproduction device 20, the content provision device 11, the monitor 12, the speaker 13, the portable medium 14, and the mobile information terminal 15.

The content protection system 2 has the following function similar to the content protection system 1. Content which is a digital broadcast programbroadcast from the content provision device 11 installed in a broadcast station is received by the recording/reproduction device 20, and the received content is recorded and reproduced by the recording/reproduction device 20. The recorded content is also moved to the portable medium 14, and reproduced by the mobile information terminal 15. Further, the content is moved from the portable medium 14 back to the recording/reproduction device 20.

The content provision device 11 and the mobile information terminal 15 have the same functions and constructions as the corresponding devices in the content protection system 1.
Note here that the input/output unit 132, the recording control unit 133, and the device ID area 134d in the portable medium 14 are not shown in FIG. 14. The portable medium 14 in the content protection system 2 does not have the encrypted device recording key area 134c.

The following describes the recording/reproduction device 20 which is the difference of the content protection system 2 from the content protection system 1.

### 2. Recording/reproduction Device 20

As shown in FIG. 17, the recording/reproduction device 20 includes a content reception unit 201, a device recording key storage unit 202, an encryption unit 203, a storage unit 204, a decryption unit 205, a reproduction unit 206, a conversion unit 207, a medium recording key generation unit 208, a medium recording key storage unit 209, a write/read unit 213, an input unit 214, a recording control unit 215, a key embedment/extraction unit 2001, and an encryption/decryption unit 2002.

The difference of the recording/reproduction device 20 from the recording/reproduction device 10 shown in FIG. 2 lies in that the recording/reproduction device 20 does not include construction elements corresponding to the device unique key storage unit 111 and the encryption/decryption unit 112, but includes the key embedment/extraction unit 2001 and the encryption/decryption unit 2002.
The content reception unit 201, the device recording key storage unit 202, the encryption unit 203, the storage unit 204, the decryption unit 205, the reproduction unit 206, the conversion unit 207, the medium recording key generation unit 208, the medium recording key storage unit 209, the write/read unit 213, the input unit 214, and the recording control unit 215 have respectively the same constructions and functions as the content reception unit 101, the device recording key storage unit 102, the encryption unit 103, the storage unit 104, the decryption unit 105, the reproduction unit 106, the conversion unit 107, the medium recording key generation unit 108, the medium recording key storage unit 109, the write/read unit 113, the input unit 114, and the recording control unit 115 shown in FIG. 2, and so their explanation has been omitted here.

(1) Key Embedment/extraction Unit 2001
   The key embedment/extraction unit 2001 sequentially receives content portions C4⁽ⁿ⁾ which have been compression-converted from MPEG-2 to MPEG-4 by the conversion unit 207, and accumulates them. The key embedment/extraction unit 2001 also reads device recording key K_{HDD} from the device recording key storage unit 202.
   The key embedment/extraction unit 2001 embeds device recording key K_{HDD} into content C4 formed by accumulating content portions C4⁽ⁿ⁾. In more detail, the key embedment/extraction unit 2001 embeds device recording key K_{HDD} into a reserve area in a header of content C4.

The key embedment/extraction unit 2001 outputs content C4 in which device recording key K_{HDD} has been embedded, to the encryption/decryption unit 2002.
Also, the key embedment/extraction unit 2001 receives content portions C4 ⁽ⁿ⁾ obtained by dividing content C4 in which device recording key K_{HDD} has been embedded in units of 128 bits, and accumulates them. The key embedment/extraction unit 2001 extracts device recording key K_{HDD} from the header of content C4, and writes extracted device recording key K_{HDD} to the device recording key storage unit 202. The key embedment/extraction unit 2001 abandons content C4 from which device recording key K_{HDD} has been extracted.

(2) Encryption/decryption Unit 2002
   The encryption/decryption unit 2002 receives content C4 in which device recording key K_{HDD} has been embedded from the key embedment/extraction unit 2001, and divides content C4 into 128-bit content portions C4⁽ⁿ⁾. The encryption/decryption unit 2002 also reads medium recording key K_{T} from the medium recording key storage unit 209.

The encryption/decryption unit 2002 encrypts each content portion C4⁽ⁿ⁾ using medium recording key K_{T} as an encryption key, to generate encrypted content portions EC4⁽ⁿ⁾. The encryption/decryption unit 2002 outputs generated encrypted content portions EC4⁽ⁿ⁾ to the write/read unit 213.
Also, the encryption/decryption unit 2002 receives encrypted content EC4 and medium recording key K_{T} from the write/read unit 213, and divides encrypted content EC4 from the beginning into 128-bit encrypted content portions EC4⁽ⁿ⁾. The encryption/decryption unit 2002 decrypts each encrypted content portion EC4⁽ⁿ⁾ using medium recording key K_{T} as a decryption key, to generate content portions C4⁽ⁿ⁾. The encryption/decryption unit 2002 outputs generated content portions C4 ⁽ⁿ⁾ to the key embedment/extraction unit 2001.

### <Operation>

### 1. Overall System

An overall operation of the content protection system 2 can be obtained by replacing "recording/reproduction device 10" in the flowchart of FIG. 7 with "recording/reproduction device 20".

### 2. Operation of Transferring the Content Use Right from the Recording/reproduction Device 20 to the Portable Medium 14

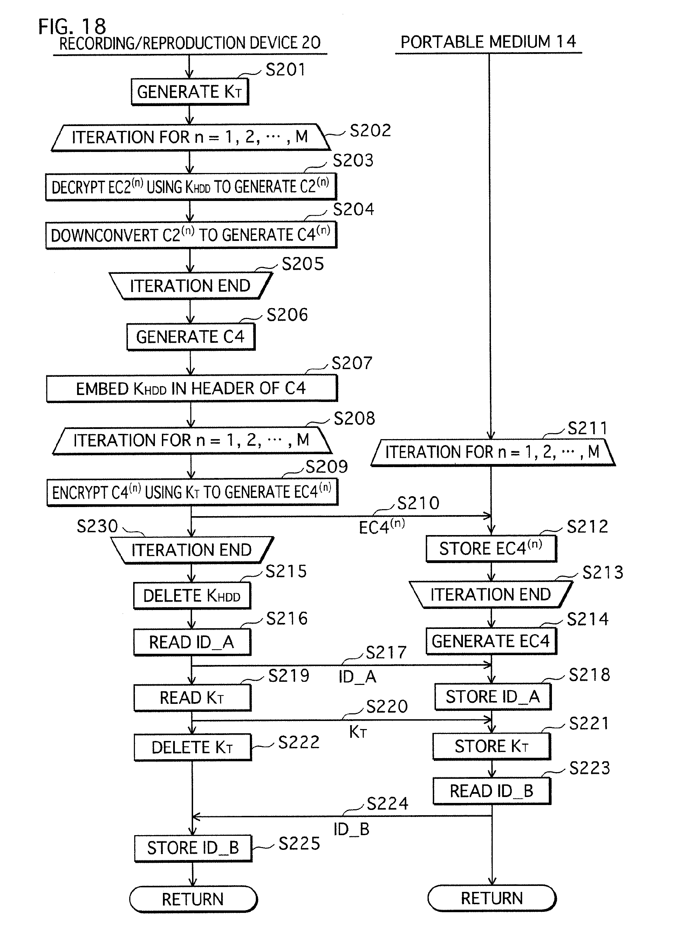

FIG. 18 is a flowchart showing an operation of moving content from the recording/reproduction device 20 to the portable medium 14. This operation is a detailed operation of step S4 in FIG. 7 where "recording/reproduction device 10" has been replaced with "recording/reproduction device 20".

The medium recording key generation unit 208 in the recording/reproduction device 20 generates medium recording key K_{T} (step S201), and stores generated medium recording key K_{T} to the medium recording key storage unit 209.
Next, the recording/reproduction device 20 divides encrypted content EC2 stored in the encrypted content area in the storage unit 204, into encrypted content portions EC2 ⁽ⁿ⁾. The recording/reproduction device 20 then performs an iteration of steps S202 to S205 for each of n = 1, 2, ... , M. Also, the portable medium 14 performs an iteration of steps S211 to S213 for each of n = 1, 2, ... , M.

First, the decryption unit 205 in the recording/reproduction device 20 decrypts encrypted content portion EC2⁽ⁿ⁾ using device recording key K_{HDD}, to generate content portion C2⁽ⁿ⁾ (step S203). Following this, the conversion unit 207 downconverts MPEG-2 content portion C2⁽ⁿ⁾ to generate MPEG-4 content portion C4⁽ⁿ⁾ (step S204). The key embedment/extraction unit 2001 accumulates content portions C4⁽ⁿ⁾ generated in step S204, thereby obtaining content C4 (step S206). The key embedment/extraction unit 2001 embeds device recording key K_{HDD} in the header of content C4 (step S207).

The recording/reproduction device 20 then performs an iteration of steps S208 to S230 for each of n = 1, 2, ... , M.
The encryption/decryption unit 2002 receives content C4 from the key embedment/extraction unit 2001, and divides received content C4 from the beginning into 128-bit content portions C4⁽ⁿ⁾. The encryption/decryption unit 2002 also reads medium recording key K_{T} from the medium recording key storage unit 209.

The encryption/decryption unit 2002 encrypts content portion C4 ⁽ⁿ⁾ using medium recording key K_{T} as an encryption key, to generate encrypted content portion EC4 ⁽ⁿ⁾ (step S209). The encryption/decryption unit 2002 outputs generated encrypted content portion EC4⁽ⁿ⁾ to the write/read unit 213.
The write/read unit 213 outputs encrypted content portion EC4⁽ⁿ⁾ to the portable medium 14. The input/output unit 132 in the portable medium 14 receives encrypted content portion EC4⁽ⁿ⁾ (step S210). The recording control unit 133 in the portable medium 14 receives encrypted content portion EC4⁽ⁿ⁾ via the input/output unit 141, and writes encrypted content portion EC4⁽ⁿ⁾ to the encrypted content area 134a in the storage unit 134. The encrypted content area 134a stores encrypted content portion EC4⁽ⁿ⁾ (step S212).

After the output of each encrypted content portion EC4⁽ⁿ⁾ in step S210, the recording/reproduction device 20 deletes device recording key K_{HDD} from the device recording key storage unit 202 (step S215). Next, the write/read unit 213 reads the device ID "ID_A" from the storage unit 204 (step S216), and outputs ID_A to the portable medium 14. The input/output unit 132 in the portable medium 14 receives ID_A (step S217).

The recording control unit 133 in the portable medium 14 receives ID_A, and writes received ID_A to a predetermined area in the storage unit 134. The storage unit 134 stores ID_A (step S218).
After this, the write/read unit 213 reads medium recording key K_{T} from the medium recording key storage unit 209 (step S219), and outputs read medium recording key K_{T} to the portable medium 14. The input/output unit 132 in the portable medium 14 receives K_{T} (step S220).

The recording control unit 133 in the portable medium 14 writes medium recording key K_{T} to the medium recording key area 134b. The medium recording key area 134b stores K_{T} (step S221). After the output of medium recording key K_{T} in step S220, the recording/reproduction device 20 deletes medium recording key K_{T} from the medium recording key storage unit 209 (step S222).
Having written medium recording key K_{T} to the medium recording key area 134b, the recording control unit 133 in the portable medium 14 reads ID_B from the device ID area 134d (step S223), and passes ID_B to the input/output unit 132. The input/output unit 132 outputs ID_B to the recording/reproduction device 20. The write/read unit 213 in the recording/reproduction device 20 receives ID_B (step S224).

The write/read unit 213 outputs received ID_B to the recording control unit 215. Having received ID_B, the recording control unit 215 stores it to the storage unit 204 (step S225).

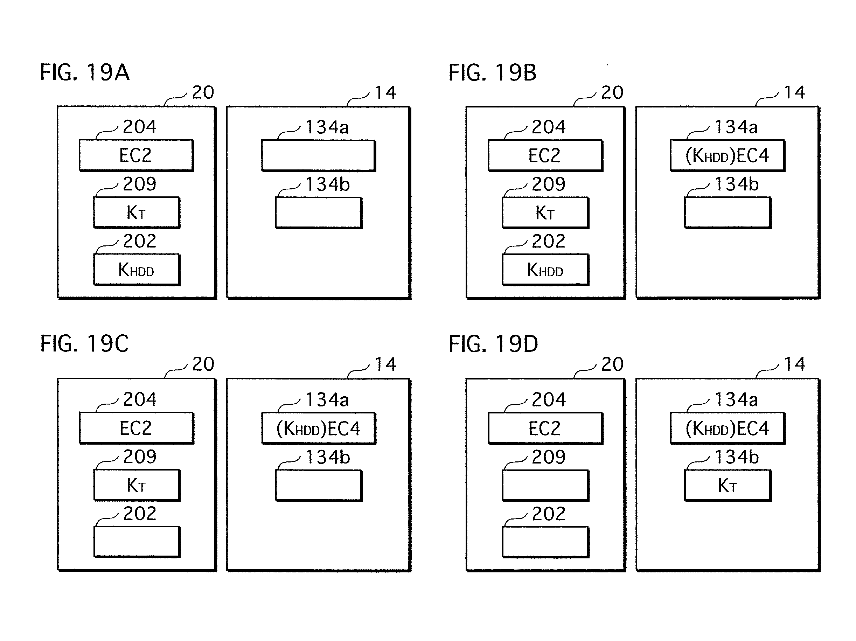

FIG. 19 shows data held in the recording/reproduction device 20 and the portable medium 14, in the process of moving content from the recording/reproduction device 20 to the portable medium 14.

FIG. 19A shows data held in the recording/reproduction device 20 and the portable medium 14 before the content movement operation.
In the recording/reproduction device 20, the storage unit 204 stores encrypted MPEG-2 content EC2, the medium recording key storage unit 209 stores medium recording key K_{T}, and the device recording key storage unit 202 stores device recording key K_{HDD}.

In the portable medium 14, meanwhile, the encrypted content area 134a and the medium recording key area 134b do not hold any data.
At this time, the recording/reproduction device 20 is in the content usable state and can use the MPEG-2 content. On the other hand, the portable medium 14 does not hold the content and so is in the content unusable state.

FIG. 19B shows data held in the recording/reproduction device 20 and the portable medium 14, at a point where the writing of encrypted content EC4 to the portable medium 14 ends.
In the recording/reproduction device 20, the storage unit 204 stores encrypted MPEG-2 content EC2, the medium recording key storage unit 209 stores medium recording key K_{T}, and the device recording key storage unit 202 stores device recording key K_{HDD}.

In the portable medium 14, the encrypted content area 134a stores the encryptedMPEG-4 content with device recording key K_{HDD} being embedded in the header. Here, "(K_{HDD}) EC4" denotes encrypted MPEG-4 content EC4 in the header of which device recording key K_{HDD} is embedded. Meanwhile, the medium recording key area 134b does not hold any data.
At this time, the recording/reproduction device 20 is in the content usable state and can use the MPEG-2 content. The portable medium 14 holds encrypted MPEG-4 content EC4 and device recording key K_{HDD} embedded in the encrypted MPEG-4 content but does not holdmedium recording key K_{T} for decrypting the encrypted MPEG-4 content, and so is in the content unusable state.

FIG. 19C shows data held in the recording/reproduction device 20 and the portable medium 14 at a point where the movement of device recording key K_{HDD} to the portable medium 14 ends.
In the recording/reproduction device 20, the storage unit 204 stores encrypted MPEG-2 content EC2, the medium recording key storage unit 209 stores medium recording key K_{T}, and the device recording key storage unit 202 does not hold any data.

In the portable medium 14, the encrypted content area 134a stores encrypted MPEG-4 content (K_{HDD}) EC4 in which device recording key K_{HDD} is embedded, and the medium recording key area 134b does not hold any data.
At this time, the recording/reproduction device 20 holds the encrypted MPEG-2 content but does not hold device recording key K_{HDD} for decrypting the encrypted MPEG-2 content, and so is in the content unusable state. The portable medium 14 holds the encrypted MPEG-4 content and device recording key K_{HDD} embedded in the encrypted MPEG-4 content but does not hold medium recording key K_{T} for decrypting the encrypted MPEG-4 content, and so is in the content unusable state.

FIG. 19D shows data held in the recording/reproduction device 20 and the portable medium 14 at a point where the content movement operation ends.
In the recording/reproduction device 20, the storage unit 204 stores encryptedMPEG-2 content EC2, whilst the medium recording key storage unit 109 and the device recording key storage unit 102 do not hold any data.

In the portable medium 14, the encrypted content area 134a stores encrypted MPEG-4 content (K_{HDD}) EC4 in which device recording key K_{HDD} is embedded, and the medium recording key area 134b stores medium recording key K_{T}.
At this time, the recording/reproduction device 20 holds encrypted MPEG-2 content EC2 but does not hold device recording key K_{HDD} for decrypting encrypted MPEG-2 content EC2, and so is in the content unusable state. On the other hand, the portable medium 14 stores encrypted MPEG-4 content (K_{HDD}) EC4 in which device recording key K_{HDD} is embedded and medium recording key K_{T} for decrypting the encrypted MPEG-4 content, and so is in the content usable state.

### 3. Operation of Transferring the Content Use Right from the Portable Medium 14 to the Recording/reproduction Device 20

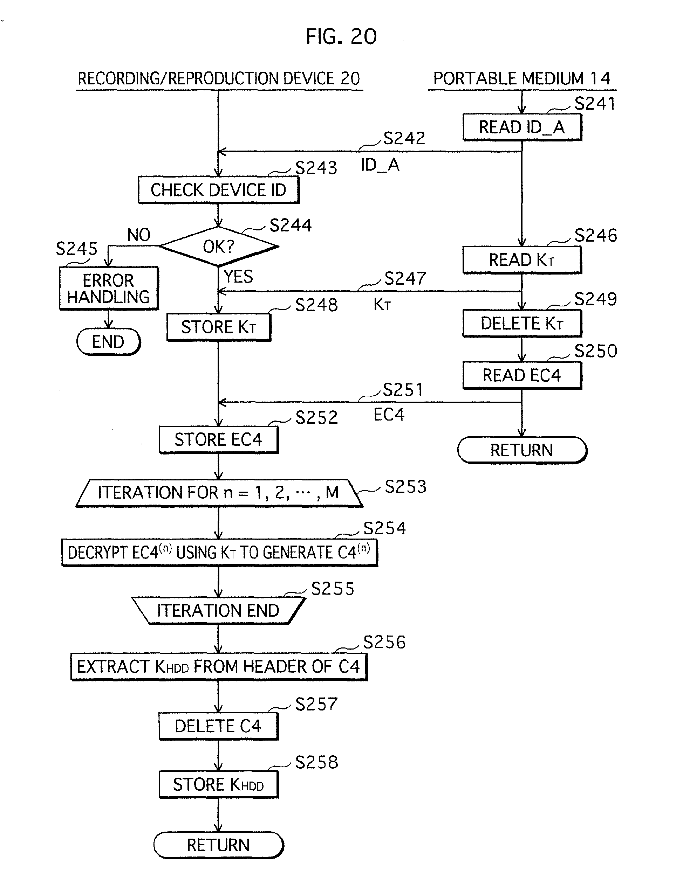

FIG. 20 is a flowchart showing an operation of moving content from the portable medium 14 to the recording/reproduction device 20. This operation is a detailed operation of step S7 in FIG. 7 where "recording/reproduction device 10" has been replaced with "recording/reproduction device 20".
The recording control unit 133 in the portable medium 14 reads the device ID "ID_A" stored in step S218 from the predetermined area in the storage unit 134 (step S241), and outputs the read device ID "ID_A" to the recording/reproduction device 20 via the input/output unit 132. The write/read unit 213 in the recording/reproduction device 20 receives the device ID "ID_A" (step S242).

The write/read unit 213 reads the device ID from the storage unit 204, and checks whether the read device ID matches the device ID "ID_A" received in step S242 (step S243). If the two device IDs do not match (step S244: NO), the write/read unit 213 abandons the received device ID "ID_A", and performs error handling such as outputting an error message to the monitor 12 (step S245). If the two device IDs match (step S244: YES), the operation continues.

The recording control unit 133 in the portable medium 14 reads medium recording key K_{T} from the medium recording key area 134b (step S246), and outputs read medium recording key K_{T} to the write/read unit 213 via the input/output unit 132. The write/read unit 213 receives K_{T} (step S247). The write/read unit 213 outputs medium recording key K_{T} to the encryption/decryption unit 2002, and the encryption/decryption unit 2002 stores medium recording key K_{T} therein (step S248).

After the output of K_{T} in step S247, the recording control unit 133 deletes medium recording key K_{T} from the medium recording key area 134b (step S249). Next, the recording control unit 133 reads encrypted content EC4 which contains K_{HDD} in the header from the encrypted content area 134a (step S250), and outputs encrypted content EC4 which contains K_{HDD} in the header to the write/read unit 213 via the input/output unit 132. The write/read unit 213 receives EC4 (step S251).

The write/read unit 213 outputs received encrypted content EC4 to the encryption/decryption unit 2002, and the encryption/decryption unit 2002 stores encrypted content EC4 therein (step S252).
The encryption/decryption unit 2002 divides encrypted content EC4 from the beginning into 128-bit encrypted content portions EC4⁽ⁿ⁾, and performs an iteration of steps S253 to S255 for each of n = 1, 2, ... , M. The encryption/decryption unit 2002 decrypts encrypted content portion EC4⁽ⁿ⁾ using medium recording key K_{T} as a decryption key, to generate content portion C4⁽ⁿ⁾ (step S254). The encryption/decryption unit 2002 outputs generated content portion C4⁽ⁿ⁾ to the key embedment/extraction unit 2001, which accumulates each content portion C4⁽ⁿ⁾.

The key embedment/extraction unit 2001 extracts device recording key K_{HDD} from the header of content C4 obtained by accumulating content portions C4⁽ⁿ⁾ (step S256). The key embedment/extraction unit 2001 abandons content C4 from which device recording key K_{HDD} has been extracted (step S257).
The key embedment/extraction unit 2001 writes extracted device recording key K_{HDD} to the device recording key storage unit 202, and the device recording key storage unit 202 stores device recording key K_{HDD} therein (step S258).

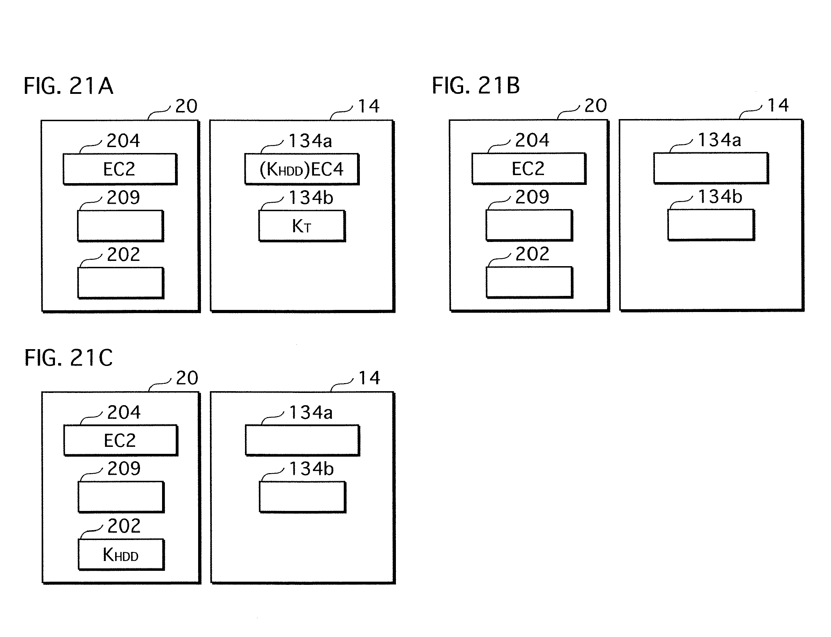

FIG. 21 shows data held in the recording/reproduction device 20 and the portable medium 14, in the process of moving content from the portable medium 14 to the recording/reproduction device 20.
FIG. 21A shows data held in the recording/reproduction device 20 and the portable medium 14 before the content movement operation. A state shown in FIG. 21A is the same as the state shown in FIG. 19D. That is, the recording/reproduction device 20 holds encrypted MPEG-2 content EC2 but does not hold device recording key K_{HDD} for decrypting encrypted MPEG-2 content EC2, and so is in the content unusable state. The portable medium 14 holds encrypted MPEG-4 content EC4 and medium recording key K_{T} for decrypting encrypted MPEG-4 content EC4, and so is in the content usable state.

FIG. 21B shows data held in the recording/reproduction device 20 and the portable medium, at a point where the movement of encrypted content EC4 and medium recording key K_{T} from the portable medium 14 to the recording/reproduction device 20 ends.
In the recording/reproduction device 20, the storage unit 204 stores encrypted MPEG-2 content EC2, whilst the medium recording key storage unit 209 and the device recording key storage unit 202 do not hold any data.

In the portable medium 14, the encrypted content area 134a and the medium recording key area 134b do not hold any data.
At this time, the recording/reproduction device 20 holds encrypted MPEG-2 content EC2 but does not hold device recording key K_{HDD} for decrypting encrypted MPEG-2 content EC2, and so is in the content unusable state. The portable medium 14 is in the content unusable state, too.

FIG. 21C shows data held in the recording/reproduction device 20 and the portable medium 14 at a point where the content movement operation ends.
In the recording/reproduction device 20, the storage unit 204 stores encrypted MPEG-2 content EC2, the medium recording key storage unit 209 does not hold any data, and the device recording key storage unit 102 stores device recording key K_{HDD}.

In the portable medium 14, the encrypted content area 134a, the medium recording area 134b, and the encrypted device recording key area 134c do not hold any data.
At this time, the recording/reproduction device 20 is in the content usable state and can use the MPEG-2 content of a high image quality. Meanwhile, the portable medium 14 does not hold the content and is in the content unusable state.

### <Third Embodiment>

The following describes a content protection system 3 as a third embodiment of the present invention.

### <Construction>

### 1. Overall System

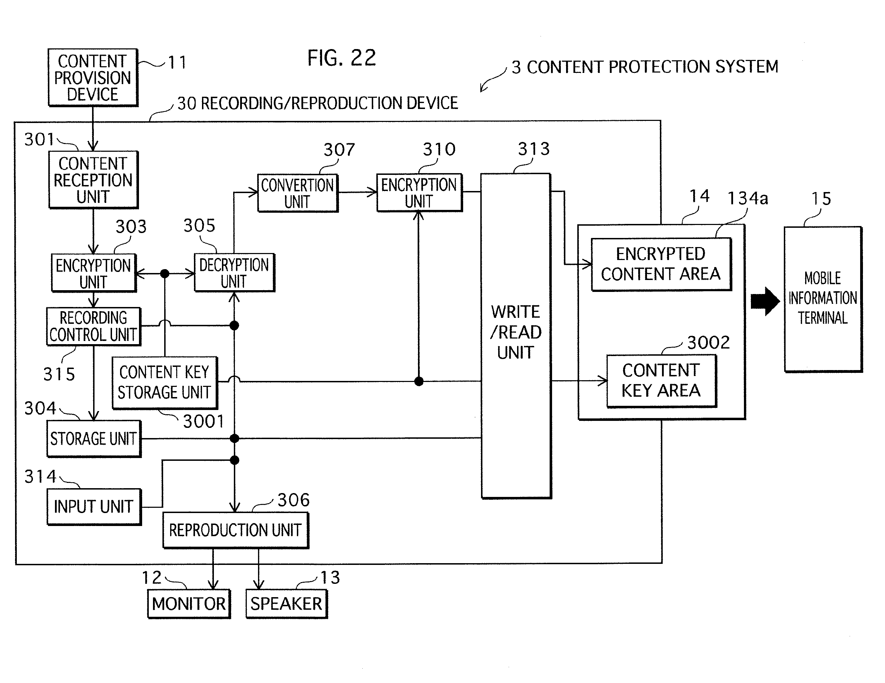

FIG. 22 shows a construction of the content protection system 3 and a functional construction of a recording/reproduction device 30. As shown in the drawing, the content protection system 3 is roughly made up of the recording/reproduction device 30, the content provision device 11, the monitor 12, the speaker 13, the portable medium 14, and the mobile information terminal 15.

The content protection system 3 has the following function similar to the content protection system 1. Content which is a digital broadcast program broadcast form the content provision device 11 installed in a broadcast station is received by the recording/reproduction device 30, and the received content is recorded and reproduced by the recording/reproduction device 30. Also, the content stored in the recording/reproduction device 30 is moved to the portable medium 14, and the moved content is reproduced by the mobile information terminal 15. Further, the content stored in the portable medium 14 is moved back to the recording/reproduction device 30.

The content provision device 11 and the mobile information terminal 15 have the same functions and constructions as the corresponding devices in the content protection system 1.
Note here that the input/output unit 132, the recording control unit 133, and the device ID area 134d in the portable medium 14 are not shown in FIG. 14. The portable medium 14 in the content protection system 3 does not have the medium recording key area 134b and the device recording key area 134c, but has a content key area 3002.

The following mainly describes the recording/reproduction device 30 which is the difference of the content protection system 3 from the content protection system 1.

### 2. Recording/reproduction Device 30

As shown in FIG. 22, the recording/reproduction device 30 includes a content reception unit 301, an encryption unit 303, a storage unit 304, a decryption unit 305, a reproduction unit 306, a conversion unit 307, an encryption unit 310, a write/read unit 313, an input unit 314, a recording control unit 315, and a content key storage unit 3001.

The difference of the recording/reproduction device 30 from the recording/reproduction device 10 shown in FIG. 2 lies in that the recording/reproduction device 30 does not include construction elements corresponding to the medium recording key generation unit 108, the medium recording key storage unit 109, the device unique key storage unit 111, and the encryption/decryption unit 112, and includes the content key storage unit 3001 instead of the device recording key storage unit 102.
The content reception unit 301, the encryption unit 303, the storage unit 304, the decryption unit 305, the reproduction unit 306, the conversion unit 307, the write/read unit 313, the input unit 314, and the recording control unit 315 have respectively the same constructions and functions as the content reception unit 101, the encryption unit 103, the storage unit 104, the decryption unit 105, the reproduction unit 106, the conversion unit 107, the write/read unit 113, the input unit 114, and the recording control unit 115 shown in FIG. 1.

The content key storage unit 3001 stores content key K_{C} in advance. Content key K_{C} is 128-bit key data used as an encryption key or a decryption key in each of encryption of MPEG-2 content C2 by the encryption unit 303, decryption of encrypted MPEG-2 content EC2 by the decryption unit 305, and encryption of MPEG-4 content C4 by the encryption unit 310.

Which is to say, the third embodiment has a feature of substituting the same content key K_{C} for both device recording key K_{HDD} used as the key data in the encryption of C2 and the decryption of EC2 and medium recording key K_{T} used in the encryption of C4 in the first and second embodiments.

### <Operation>

### 1. Overall System

An overall operation of the content protection system 3 can be obtained by replacing "recording/reproduction device 10" in the flowchart of FIG. 7 with "recording/reproduction device 30".

### 2. Operation of Transferring the Content Use Right from the Recording/reproduction Device 30 to the Portable Medium 14

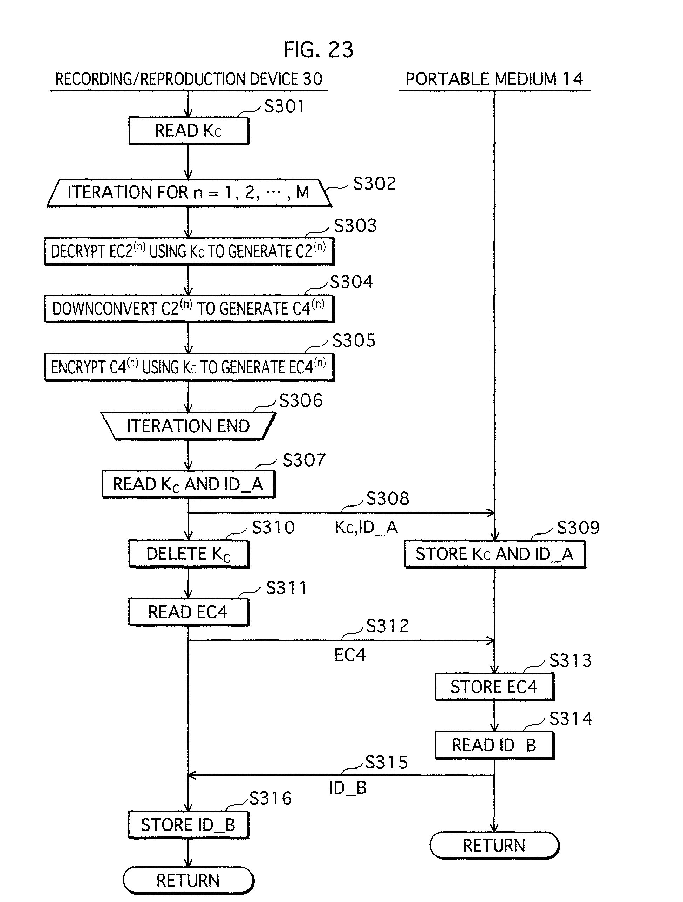

FIG. 23 is as flowchart showing an operation of moving content from the recording/reproduction device 30 to the portable medium 14. This operation is a detailed operation of step S4 in FIG. 7 where "recording/reproduction device 10" has been replaced with "recording/reproduction device 30".
The encryption unit 303 in the recording/reproduction device 30 reads content key K_{C} from the content key storage unit 3001 (step S301). The encryption unit 303 also reads encrypted content EC2 from the storage unit 304, and divides read encrypted content EC2 into encrypted content portions EC2⁽ⁿ⁾. After this, an iteration of steps S302 to S306 is performed for each of n = 1, 2, ... , M.

First, the decryption unit 305 in the recording/reproduction device 30 decrypts encrypted content portion EC2 ⁽ⁿ⁾ using content key K_{C}, to generate content portion C2⁽ⁿ⁾ (step S303). Next, the conversion unit 307 downconverts MPEG-2 content portion C2⁽ⁿ⁾ to MPEG-4 content portion C4⁽ⁿ⁾ (step S304).
The encryption unit 310 reads content key K_{C} from the content key storage unit 3001, and encrypts content portion C4⁽ⁿ⁾ using content key K_{C} as an encryption key to generate encrypted content portion EC4⁽ⁿ⁾ (step S305). The encryption unit 310 accumulates each encrypted content portion EC4⁽ⁿ⁾.

Following this, the write/read unit 313 reads content key K_{C} from the content key storage unit 302, and the device ID "ID_A" from the storage unit 304 (step S307). The write/read unit 313 outputs read content key K_{C} and device ID "ID_A" to the portable medium 14. The input/output unit 132 in the portable medium 14 receives content key K_{C} and the device ID "ID_A" (step S308).

The recording control unit 133 in the portable medium 14 receives content key K_{C} and the device ID "ID_A", and writes received content key K_{C} to the content key area 3002. The content key area 3002 stores content key K_{C}. Also, the recording control unit 133 writes the device ID "ID_A" to the predetermined area in the storage unit 134 (Step S309).
After the output of content K_{C} in step S308, the recording/reproduction device 30 deletes content key K_{C} from the content key storage unit 3001 (step S310).

Next, the write/read unit 313 reads encrypted content EC4 stored in the encryption unit 310 (step S311), and outputs read encrypted content EC4 to the portable medium 14. The input/output unit 132 in the portable medium 14 receives encrypted content EC4 (step S312). The recording control unit 133 in the portable medium 14 receives encrypted content EC4 via the input/output unit 132, and stores it in the encrypted content area 134a (step S313).

Having stored encrypted content EC4, the recording control unit 133 reads ID_B from the device ID area 134d (step S314), and passes ID_B to the input/output unit 132. The input/output unit 132 outputs ID_B to the recording/reproduction device 30. The write/read unit 313 in the recording/reproduction device 30 receives ID_B (step S315).
The write/read unit 313 outputs received ID_B to the recording control unit 315. The recording control unit 315 receives ID_B, and stores it to the storage unit 304 (step S316).

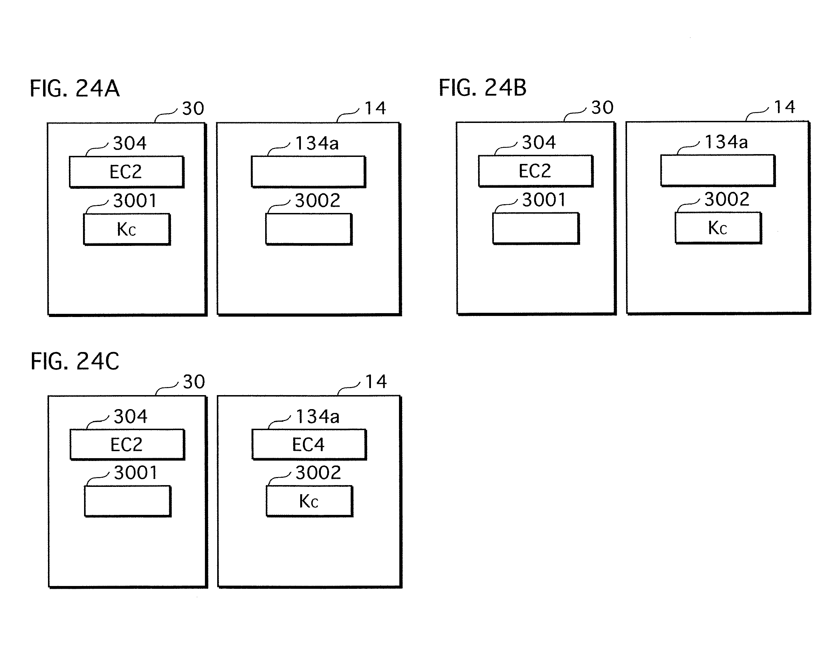

FIG. 24 shows data held in the recording/reproduction device 30 and the portable medium 14 in the process of moving content form the recording/reproduction device 30 to the portable medium 14.
FIG. 24A shows data held in the recording/reproduction device 30 and the portable medium 14 before the content movement operation.

In the recording/reproduction device 30, the storage unit 304 stores encrypted MPEG-2 content EC2, and the content key storage unit 3001 stores content key K_{C}.
In the portable medium 14, meanwhile, the encrypted content key 134a and the content key area 3002 do not hold any data.
At this time, the recording/reproduction device 20 is in the content usable state and can use the MPEG-2 content. On the other hand, the portable medium 14 does not hold the content and is in the content unusable state.

FIG. 24B shows data held in the recording/reproduction device 30 and the portable medium 14 at a point where the movement of content key K_{C} ends.
In the recording/reproduction device 30, the storage unit 304 stores encrypted MPEG-2 content EC2, but the content key storage unit 3001 does not hold any data.
In the portable medium 14, the encrypted content area 134a does not hold any data, but the content key area 3002 stores content key K_{C}.

At this time, the recording/reproduction device 30 holds encrypted content EC2 but does not hold content key K_{C} for decrypting encrypted content EC2, and so is in the content unusable state. The portable medium 14 holds content key K_{C} but does not hold the encrypted content itself, and so is in the content unusable state.
FIG. 24C shows data held in the recording/reproduction device 30 and the portable medium 14 at a point where the content movement operation ends.

In the recording/reproduction device 30, the storage unit 304 stores encrypted MPEG-2 content EC2, but the content key storage unit 3001 does not hold any data.
In the portable medium 14, the encrypted content area 134a stores encrypted MPEG-4 content EC4, and the content key area 3002 stores content key K_{C}.
At this time, the recording/reproduction device 30 holds encrypted MPEG-2 content EC2 but does not hold content key K_{C} for decrypting encrypted MPEG-2 content EC2, and so is in the content unusable state. On the other hand, the portable medium 14 holds encrypted MPEG-4 content EC4 and content key K_{C} for decrypting encrypted MPEG-4 content EC4, and so is in the content usable state.

### 3. Operation of Transferring the Content Use Right from the Portable Medium 14 to the Recording/reproduction Device 30

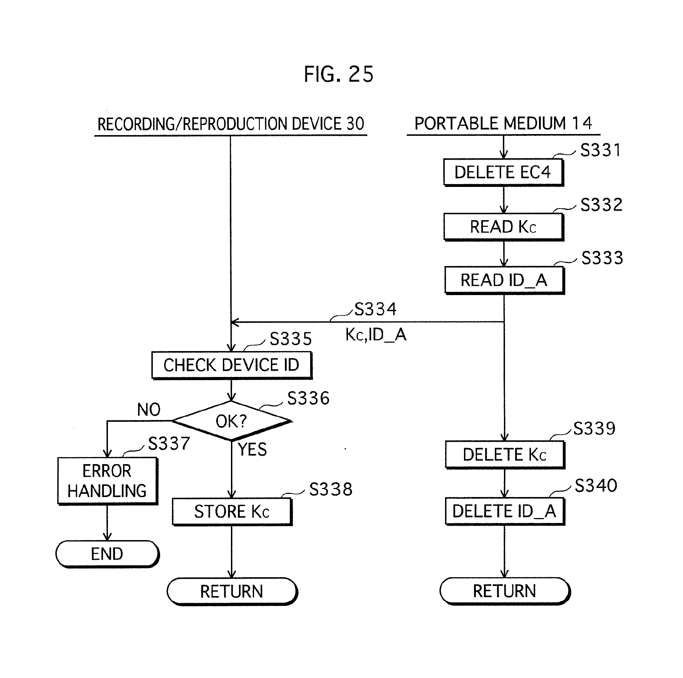

FIG. 25 is a flowchart showing an operation of moving content from the portable medium 14 to the recording/reproduction device 30. This operation is a detailed operation of step S7 in FIG. 7 where "recording/reproduction device 10" has been replaced with "recording/reproduction device 30".
The recording control unit 133 in the portable medium 14 deletes encrypted content EC4 from the encrypted content area 134a (step S331). The recording control unit 133 then reads content key K_{C} from the content key area 3002, and the device ID "ID_A" from the predetermined area (step S332).

The recording control unit 133 outputs content key K_{C} and the device ID "ID_A" to the recording/reproduction device 30 via the input/output unit 132. The write/read unit 313 in the recording/reproduction device 30 receives content key K_{C} and the device ID "ID_A" (step S334). The write/read unit 313 checks whether the received device ID "ID_A" matches the device ID of the recording/reproduction device 30 (step S335). If the two device IDs do not match (step S336: NO), the write/read unit 313 abandons the received device ID "ID_A" and content key K_{C}. After this, the recording/reproduction device 30 performs error handling such as outputting an error message to the monitor 12 (step S337).

If the received device ID "ID_A" matches the device ID of the recording/reproduction device 30 (step S336: YES), the write/read unit 313 writes content key K_{C} to the content key storage unit 3001, and the content key storage unit 3001 stores content key K_{C} (step S338).
Once content key K_{C} has been stored in the content key storage unit 3001, the recording control unit 133 in the portable medium 14 deletes content key K_{C} stored in the content key area 3002 (step S339), and also deletes the device ID "ID_A" stored in the predetermined area (step S340).

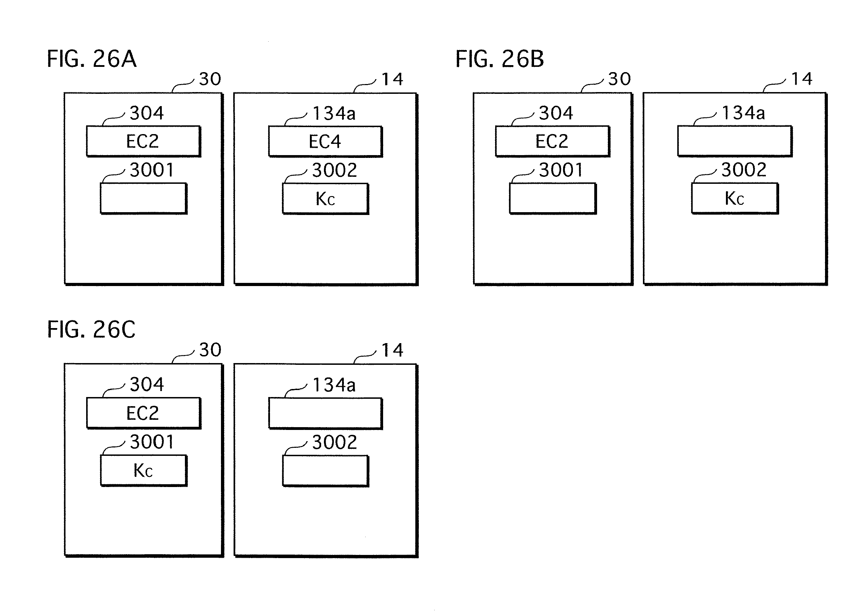

FIG. 26 shows data held in the recording/reproduction device 30 and the portable medium 14 in the process of moving content from the portable medium 14 to the recording/reproduction device 30.
FIG. 26A shows data held in the recording/reproduction device 30 and the portable medium 14 before the content movement operation. A state shown in FIG. 26A is the same as the state shownin FIG.24C. That is, the recording/reproduction device 30 holds encrypted MPEG-2 content EC2 but does not hold content key K_{C} for decrypting encrypted MPEG-2 content EC2, and so is in the content unusable state. On the other hand, the portable medium 14 holds encrypted MPEG-4 content EC4 and content key K_{C} for decrypting encrypted MPEG-4 content EC4, and so is in the content usable state.

FIG. 26B shows data held in the recording/reproduction device 30 and the portable medium 14 at a point where the deletion of encrypted content EC4 ends.
In the recording/reproduction device 30, the storage unit 304 stores encrypted MPEG-2 content EC2, whilst the content key storage unit 3001 does not hold any data.
In the portable medium 14, the encrypted content area 134a does not hold any data, whilst the content key area 3002 holds content key K_{C}.

At this time, the recording/reproduction device 30 holds encrypted MPEG-2 content EC2 but does not hold content key K_{C} for decrypting encrypted MPEG-2 content EC2, and so is in the content unusable state. The portable medium 14 holds content key K_{C} but does not hold the content itself, and so is in the content unusable state.
FIG. 26C shows data held in the recording/reproduction device 30 and the portable medium 14 at a point where the content movement operation ends.

In the recording/reproduction device 30, the storage unit 304 stores encrypted MPEG-2 content EC2, and the content key storage unit 3001 stores content key K_{C}.
In the portable medium 14, the encrypted content area 134a and the content key area 3002 do not hold any data.
At this time, the recording/reproduction device 10 is in the content usable state and can use the MPEG-2 content of a high image quality. On the other hand, the portable medium 14 does not hold the content and so is in the content unusable state.

### <Fourth Embodiment>

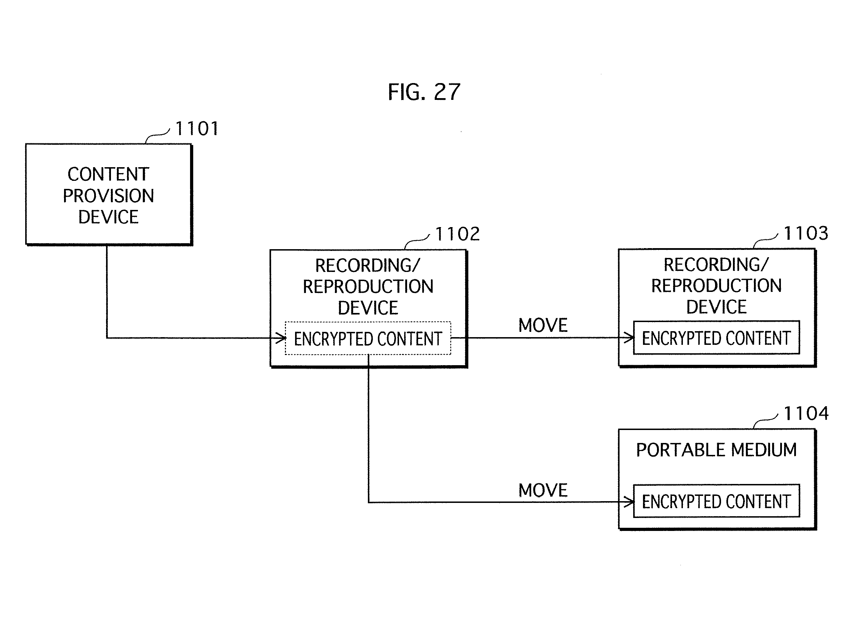

The following describes another embodiment of the present invention with reference to drawings. FIG. 27 is a block diagram showing an overall construction of a copyright protection system to which the present invention relates. This system is roughly made up of a content provision device 1101 for providing content, a recording/reproduction device 1102 for acquiring the content, recording/reproducing the content, and moving the content, and a recording/reproduction device 1103 and a portable medium 1104 for acquiring the moved content.

When receiving the content from the content provision device 1101 and recording it, the recording/reproduction device 1102 encrypts the content and records the encrypted content in an internal HDD or the like. Whenmoving the content, the recording/reproduction device 1102 checks (authenticates) whether a device or portable medium which is a move destination of the content is authorized before the movement. After the movement of the content ends, the recording/reproduction device 1102 makes the content stored therein unusable. For example, the authentication can be performed according to a procedure prescribed by DTCP if the move destination is a device, and according to a procedure prescribed by CPRM SD (Content Protection for Recordable Media Specification SD Memory Card Book) if the move destination is a portable medium. As an alternative, known techniques disclosed in non-patent documents 1 and 2 may be used for the authentication. Thus, the authentication can be realized using a known technique and so its detailed explanation has been omitted here.

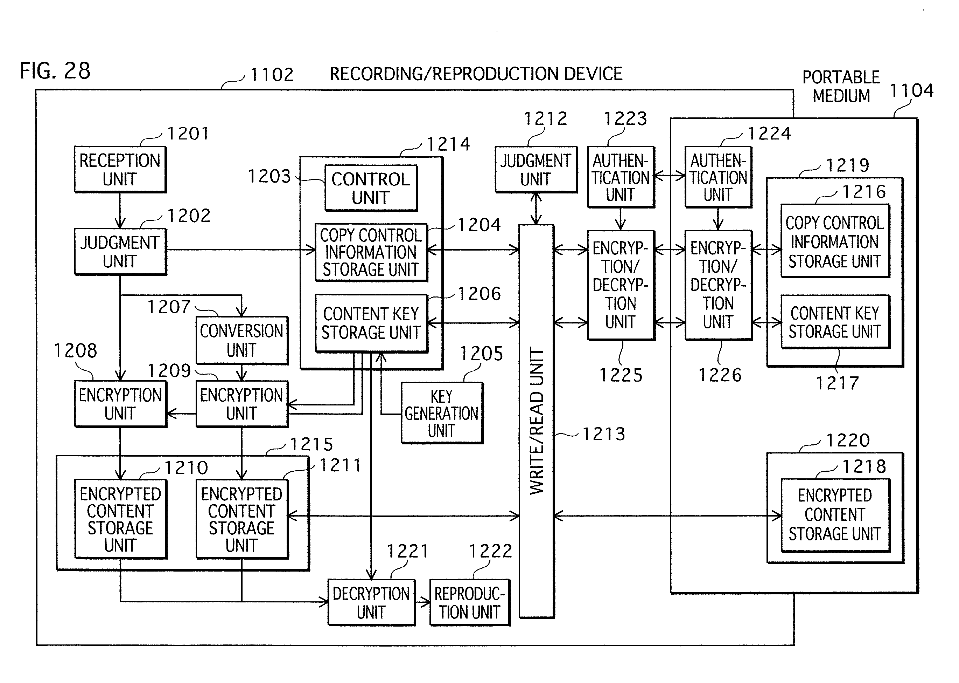

FIG. 28 is a functional block diagram of the recording/reproduction device 1102 and the portable medium 1104 when content is recorded and reproduced by the recording/reproduction device 1102 and further moved from the recording/reproduction device 1102 to the portable medium 1104 in the fourth embodiment of the present invention.
The recording/reproduction device 1102 includes a reception unit 1201, a judgment unit 1202, a copy control information storage unit 1204, a key generation unit 1205, a content key storage unit 1206, a control unit 1203, an encryption unit 1208, an encrypted content storage unit 1210, a conversion unit 1207, an encryption unit 1209, and an encrypted content storage unit 1211. The reception unit 1201 receives copy control information and content from outside. The judgment unit 1202 judges whether the received content is recordable to the recording/reproduction device 1102 (more specifically to the encrypted content storage units 1210 and 1211 described later), based on the copy control information. The copy control information storage unit 1204 updates the copy control information if necessary, and stores the copy control information. The key generation unit 1205 generates a content key used for encrypting the received content. The content key storage unit 1206 stores the generated content key. The control unit 1203 controls access to the content key stored in the content key storage unit 1206. The encryption unit 1208 encrypts the received content using the content key to generate first encrypted content. The encrypted content storage unit 1210 stores the first encrypted content. The conversion unit 1207 converts the received content. The encryption unit 1209 encrypts the converted content using the content key to generate second encrypted content. The encrypted content storage unit 1211 stores the second encrypted content.

The recording/reproduction device 1102 further includes a decryption unit 1221, a reproduction unit 1222, a judgment unit 1212, an authentication unit 1223, an encryption/decryption unit 1225, and a write/read unit 1213. The decryption unit 1221 decrypts the first encrypted content or the second encrypted content using the content key. The reproduction unit 1222 reproduces the decrypted first encrypted content or second encrypted content. The judgment unit 1212 judges whether the second encrypted content stored in the encrypted content storage unit 1211 is movable from the recording/reproduction device 1102 to the portable medium 1104 based on the copy control information stored in the copy control information storage unit 1204, or judges whether the second encrypted content stored in an encrypted content storage unit 1218 in the portable medium 1104 is movable from the portable medium 1104 to the recording/reproduction device 1102 based on the copy control information stored in a copy control information storage unit 1216 in the portable medium 1104. The authentication unit 1223 performs mutual authentication between the recording/reproduction device 1102 and the portable medium 1104. The encryption/decryption unit 1225 encrypts/decrypts the content key and copy control information to be transferred between the recording/reproduction device 1102 and the portable medium 1104 when the authentication is successful. The write/read unit 1213 writes the copy control information stored in the copy control information storage unit 1204, the content key stored in the content key storage unit 1206, and the second encrypted content stored in the encrypted content storage unit 1211 to the portable medium 1104, or reads data from the portable medium 1104.

The control unit 1203, the copy control information storage unit 1204, and the content key storage unit 1206 in the recording/reproduction device 1102 are provided in a secure area 1214 that cannot be read/written externally. This area 1214 is actually realized by tamperproof hardware, tamperproof software, or a combination thereof. Meanwhile, the encrypted content storage units 1210 and 1211 are provided in an area 1215 that can be read/written externally. This area 1215 is realized by an HDD (Hard Disk Drive) as one example.

The portable medium 1104 includes an authentication unit 1224 and an encryption/decryption unit 1226. The authentication unit 1224 performs mutual authentication between the recording/reproduction device 1102 and the portable medium 1104. The encryption/decryption unit 1226 encrypts/decrypts the content key and copy control information to be transferred between the recording/reproduction device 1102 and the portable medium 1104 when the authentication is successful.
The portable medium 1104 further includes the encrypted content storage unit 1218, a content key storage unit 1217, and the copy control information storage unit 1216. The encrypted content storage unit 1218 stores the second encrypted content. The content key storage unit 1217 stores the content key. The copy control information storage unit 1216 stores the copy control information. The copy control information storage unit 1216 and the content key storage unit 1217 in the portable medium 1104 are provided in an area 1219 that cannot be read/written externally except by an authorized device. This area 1219 can be read/written by the recording/reproduction device 1102, only if the authentication unit 1224 in the portable medium 1104 and the authentication unit 1223 in the recording/reproduction device 1102 have succeeded in the mutual authentication. Meanwhile, the encrypted content storage unit 1218 is provided in an area 1220 that can be read/written externally.

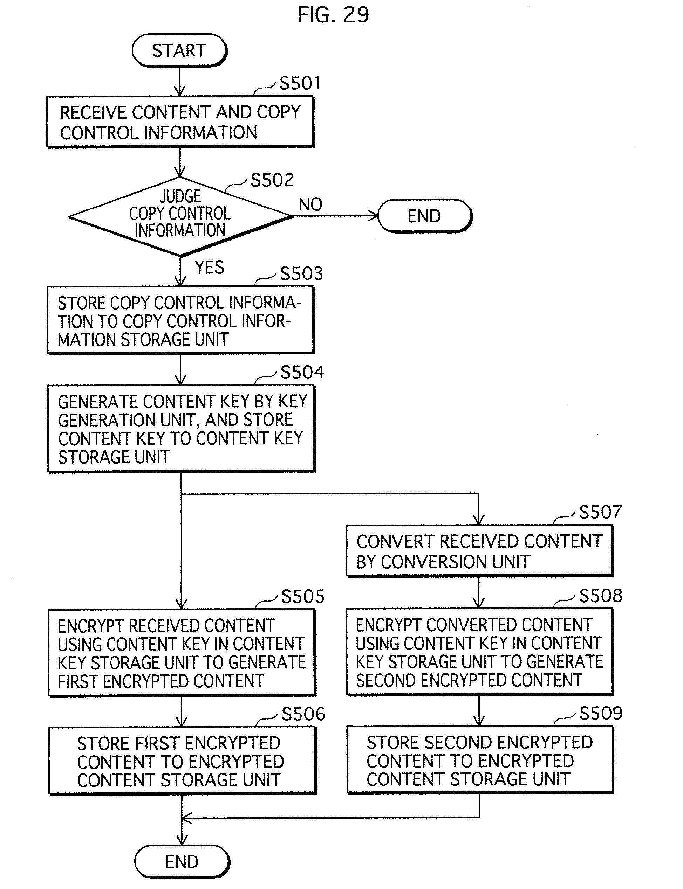

An operation of recording received content in the recording/reproduction device 1102 is described below, with reference to FIG. 29.
Step S501: The reception unit 1201 in the recording/reproduction device 1102 receives content and copy control information.
Step S502: The judgment unit 1202 judges whether the copy control information indicates that the received content is recordable to the recording/reproduction device 1102. If the judgment unit 1202 judges that the received content is not recordable, the operation is terminated. If the judgment unit 1202 judges that the received content is recordable, the operation is continued.

Step S503: The copy control information is updated if necessary, and stored to the copy control information storage unit 1204.
Step S504: The key generation unit 1205 generates a content key, and stores the content key to the content key storage unit 1206.
Step S505 : The encryption unit 1208 encrypts the received content using the content key stored in the content key storage unit 1206, to generate first encrypted content.

Step S506: The first encrypted content is stored in the encrypted content storage unit 1210.
Step S507: The conversion unit 1207 converts the received content.
Step S508: The encryption unit 1209 encrypts the converted content using the content key stored in the content key storage unit 1206, to generate second encrypted content.
Step S509: The second encrypted content is stored in the encrypted content storage unit 1211.

The copy control information used here includes, for example, "Copy Never" that indicates copying is prohibited and "Copy One Generation" that indicates copying is permitted only once. This being so, the judgment unit 1202 judges that the content is not recordable if the copy control information is "Copy Never", and judges that the content is recordable if the copy control information is "Copy One Generation". In the latter case, when the content is recorded in the recording/reproduction device 1102, the copy control information is changed from "Copy One Generation" to "No More Copy" indicating that copying is prohibited, and then stored in the copy control information storage unit 1204.

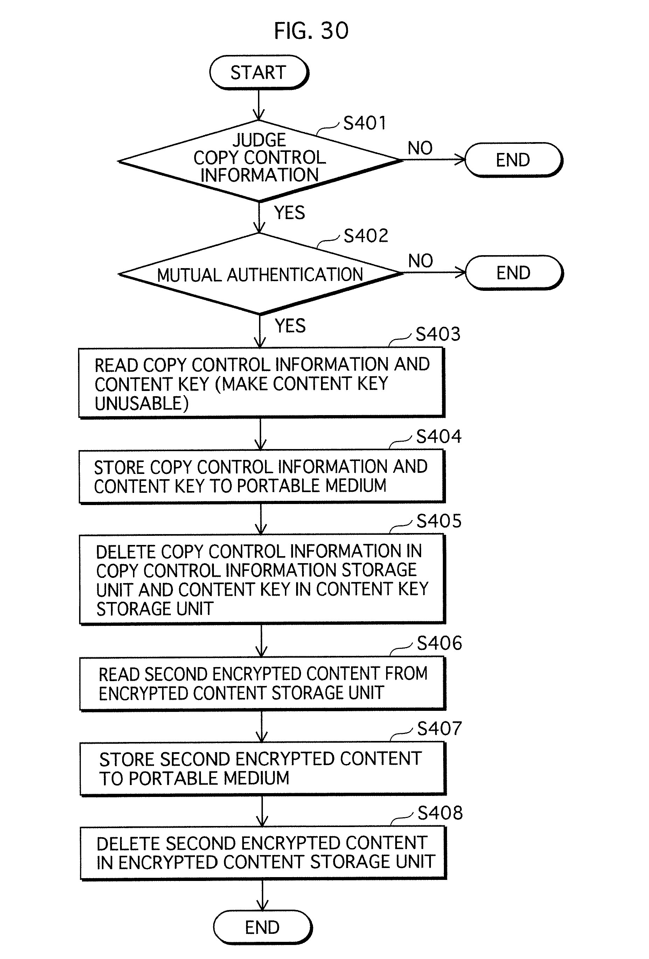

Also, for example when the received content is MPEG-2 video content, the conversion unit 1207 converts the received content to MPEG-4 video content.
An operation of moving content from the recording/reproduction device 1102 to the portable medium 1104 is described next, with reference to FIG. 30.
Step S401: The judgment unit 1212 in the recording/reproduction device 1102 receives the copy control information stored in the copy control information storage unit 1204 via the write/read unit 1213, and judges whether the received copy control information indicates that the second encrypted content stored in the encrypted content storage unit 1211 is movable to the portable medium 1104. If the judgment unit 1212 judges that the second encrypted content is not movable, the operation is terminated. If the judgment unit 1212 judges that the second encrypted content is movable, the operation is continued.

Step S402: The authentication unit 1223 in the recording/reproduction device 104 performs mutual authentication with the authentication unit 1224 in the portable medium 1104. If the mutual authentication is successful, the authentication units 1223 and 1224 each generate a session key. If the mutual authentication is not successful, the operation is terminated.
Step S403: The write/read unit 1213 reads the copy control information stored in the copy control information storage unit 1204 and the content key stored in the content key storage unit 1206.

At this time, the control unit 1203 makes the content key stored in the content key storage unit 1206 unusable so as to prohibit subsequent access to the stored content key.
Step S404: The write/read unit 1213 encrypts the read copy control information and content key using the session key through the encryption/decryption unit 1225, and transmits the encrypted copy control information and content key to the portable medium 1104. The portable medium 1104 decrypts the received encrypted copy control information and content key using the session key through the encryption/decryption unit 1226, and stores the decrypted copy control information and content key therein.

Step S405: The recording/reproduction device 1102 deletes the copy control information stored in the copy control information storage unit 1204 and the content key stored in the content key storage unit 1206.
Step S406: The write/read unit 1213 reads the second encrypted content stored in the encrypted content storage unit 1211.
Step S407: The read second encrypted content is stored to the portable medium 1104.

Step S408: The second encrypted content stored in the encrypted content storage unit 1211 is deleted.

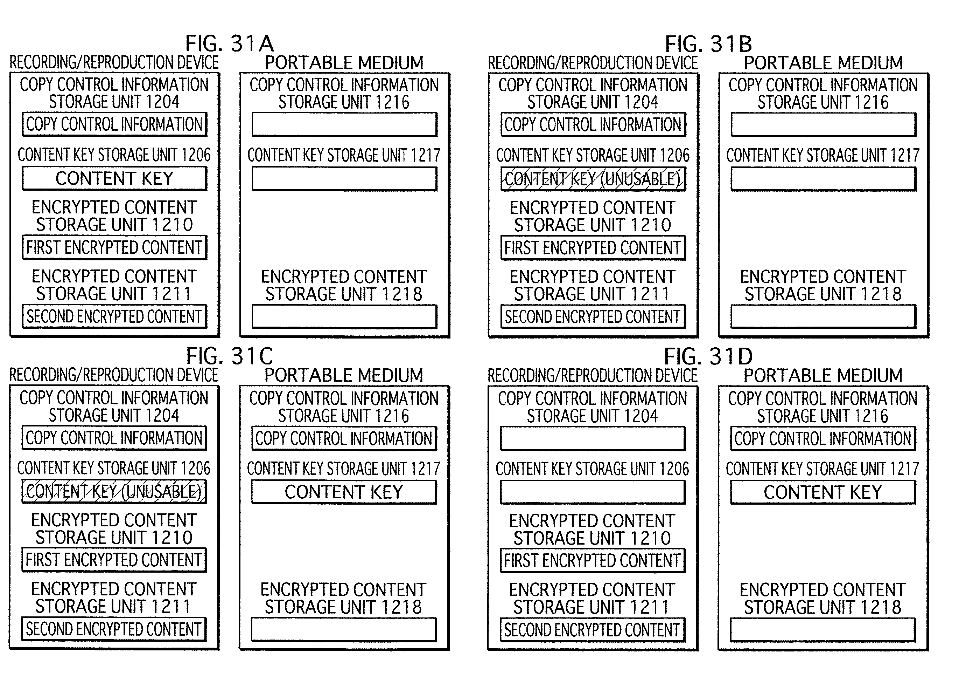

FIGS. 30 and 31 show data storage states of the recording/reproduction device 1102 and the portable medium 1104 in the above operation. FIGS. 30A shows data storage states when step S401 begins, FIG. 30B shows data storage states when step S403 ends, FIG. 30C shows data storage states when step 5404 ends, FIG. 30D shows data storage states when step S405 ends, FIG. 31E shows data storage states when step S407 ends, and FIG. 31F shows data storage states when step S408 ends.

In step S403, the control unit 1203 makes the content key stored in the content key storage unit 1206 unusable so as to prohibit subsequent access to the stored content key. As a result, even if power fails or the portable medium 1104 is removed from the recording/reproduction device 1102 by unauthorized means at a point between when step S404 ends and when step S405 begins (FIG. 30C), a situation where the content key is simultaneously usable in both the recording/reproduction device 1102 and the portable medium 1104 can be avoided. Also, even if power fails at any point from FIGS. 30A to 31F, the content key exists in any of the recording/reproduction device 1102 and the portable medium 1104, and so a situation where the content key is lost in both the move source and the move destination and as a result the content becomes unusable can be avoided.

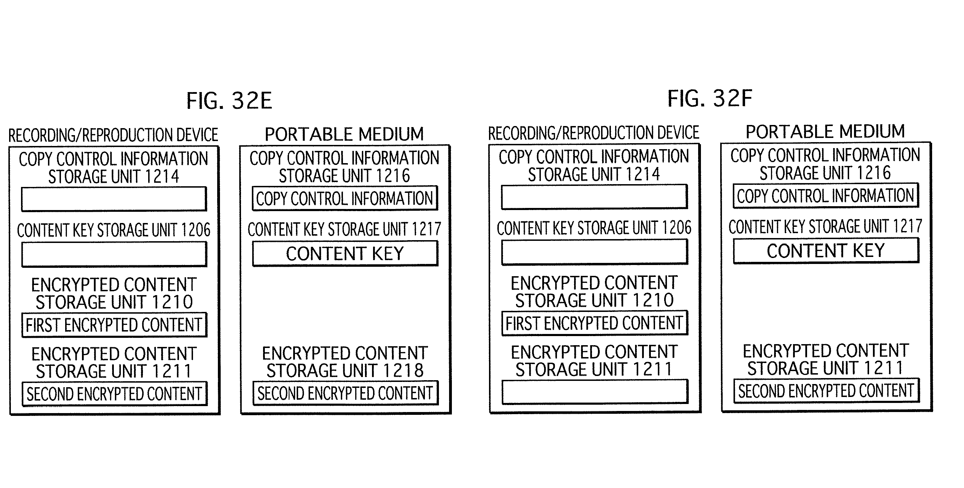

The mutual authentication and session key sharing performed by the authentication units 1223 and 1224 in step S402 can be realized using, for example, a challenge-response mutual authentication and session key sharing method. The challenge-response mutual authentication and session key sharing method is well known and so its explanation has been omitted here.
An operation of moving content from the portable medium 1104 to the recording/reproduction device 1102 is described below, with reference to FIG. 32.

Step S601: The judgment unit 1212 in the recording/reproduction device 1102 receives the copy control information stored in the copy control information storage unit 1216 in the portable medium 1104 via the write/read unit 1213, and judges whether the received copy control information indicates that the second encrypted content stored in the encrypted content storage unit 1218 in the portable medium 1104 is movable to the recording/reproduction device 1102. If the judgment unit 1212 judges that the second encrypted content is not movable, the operation is terminated. If the judgment unit 1212 judges that the second encrypted content is movable, the operation is continued.

Step S602: The authentication unit 1223 in the recording/reproduction device 104 performs mutual authentication with the authentication unit 1224 in the portable medium 1104. If the mutual authentication is successful, the authentication units 1223 and 1224 each generate a session key. If the mutual authentication is not successful, the operation is terminated.
Step S603: The write/read unit 1213 reads the copy control information stored in the copy control information storage unit 1216 and the content key stored in the content key storage unit 1217 in the portable medium 1104. Here, the encryption/decryption unit 1226 in the portable medium 1104 encrypts the copy control information and the content key using the session key, and outputs the encrypted copy control information and content key to the recording/reproduction device 1102. The encryption/decryption unit 1225 in the recording/reproduction device 1102 decrypts the received encrypted copy control information and content key using the session key, and outputs the decrypted copy control information and content key to the write/read unit 1213.

Step S604: The write/read unit 1213 stores the copy control information and the content key respectively to the copy control information storage unit 1204 and the content key storage unit 1206 in the recording/reproduction device 1102. At this time, the control unit 223 makes the content key stored in the content key storage unit 1206 unusable so as to prohibit access to the stored content key.
Step S605: The portable medium 1104 deletes the copy control information stored in the copy control information storage unit 1216 and the content key stored in the content key storage unit 1217.

The control unit 223 makes the content key stored in the content key storage unit 1206 usable so as to permit access to the stored content key.
Step S606: The write/read unit 1213 reads the second encrypted content stored in the encrypted content storage unit 1218 in the portable medium 1104.
Step S607: The read second encrypted content is stored to the encrypted content storage unit 1211 in the recording/reproduction device 1102.

Step S608: The second encrypted content stored in the encrypted content storage unit 1218 in the portable medium 1104 is deleted.

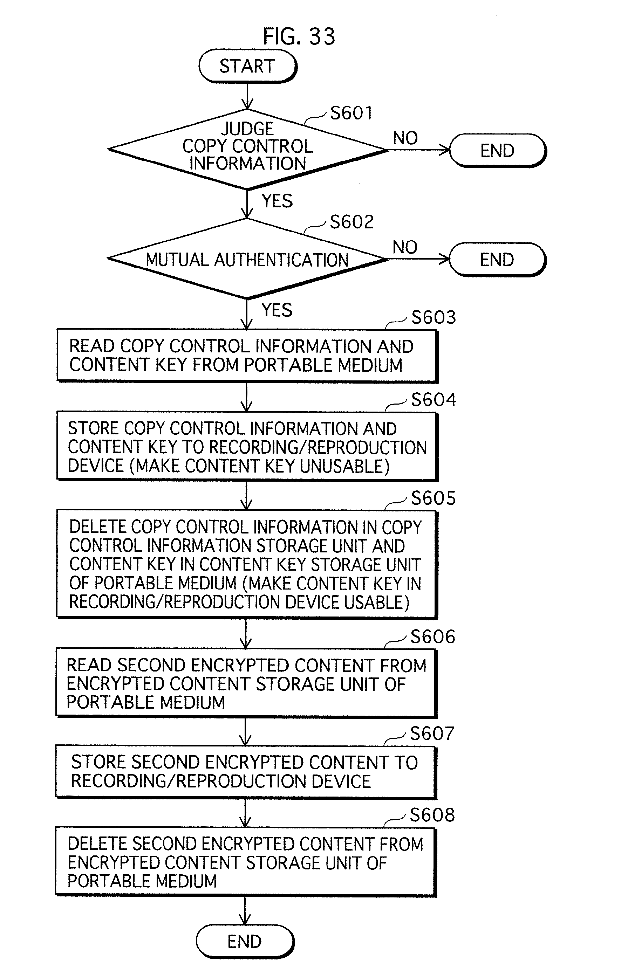

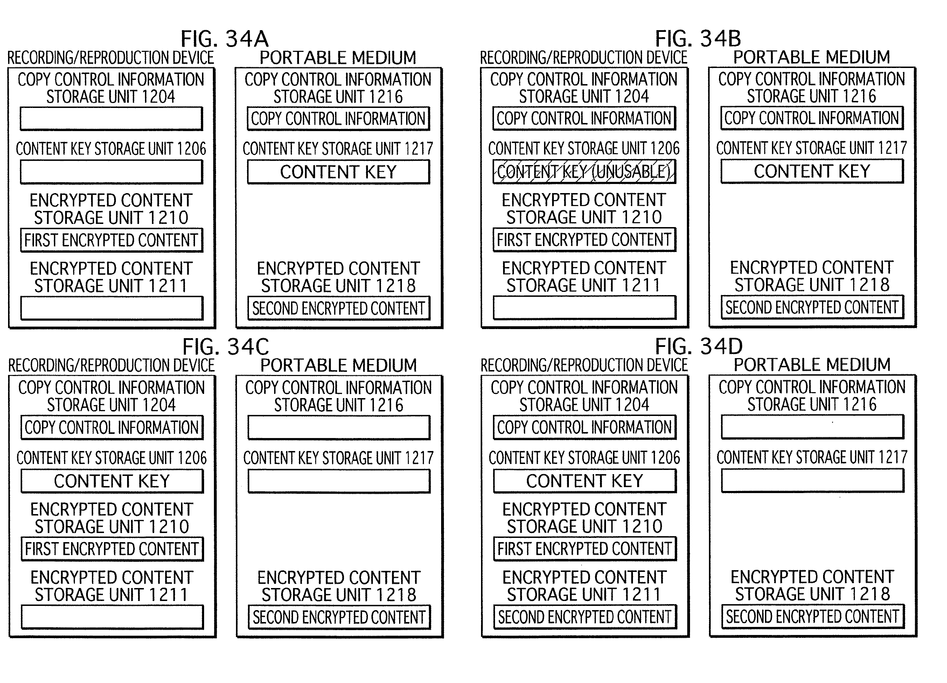

FIGS. 33 and 34 show data storage states of the recording/reproduction device 1102 and the portable medium 1104 in the above operation. FIG. 33A shows data storage states when step S601 begins, FIG. 33B shows data storage states when step S604 ends, FIG. 33C shows data storage states when step S605 ends, FIG. 33D shows data storage states when step S607 ends, and FIG. 34E shows data storage states when step S608 ends.

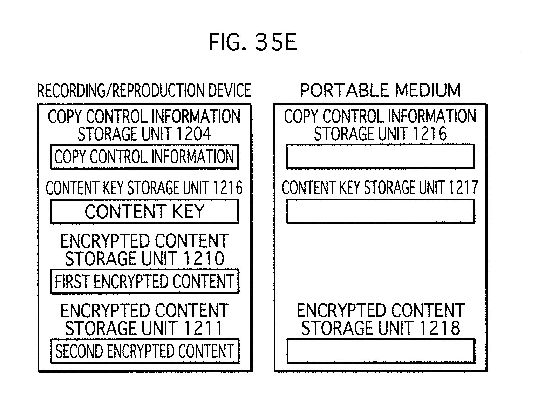

An operation of reproducing the recorded first encrypted content or second encrypted content in the recording/reproduction device 1102 is described next, with reference to FIG. 35.
Step S801: The decryption unit 1221 reads the first encrypted content from the encrypted content storage unit 1210 or the second encrypted content from the encrypted content storage unit 1211.

Step S802: The decryption unit 1221 reads the content key from the content key storage unit 1206.
At this time, the control unit 1203 makes the content key stored in the content key storage unit 1206 unusable so as to prohibit subsequent access to the stored content key.
Step S803: The decryption unit 1221 decrypts the read first encrypted content or second encrypted content using the read content key.

Step S804: The reproduction unit 1222 reproduces the decrypted first encrypted content or second encrypted content. Once the reproduction has ended, the content key stored in the content key storage unit 1206 is made usable.
Since the control unit 1203 makes the stored content key unusable so as to prohibit access in step S802, it is possible to prevent the decryption and reproduction of the first encrypted content and the decryption and reproduction of the second encrypted content from being simultaneously performed.

### <Modifications>

The fourth embodiment describes the case where when moving the second encrypted content from the recording/reproduction device 1102 to the portable medium 1104, the control unit 1203 in the recording/reproduction device 1102 makes the content key unusable so as to prohibit access to the content key. As an alternative, a control unit may be provided in the area 1219 of the portable medium 1104. In this case, the following operation is performed when moving the second encrypted content from the recording/reproduction device 1102 to the portable medium 1104.

Step S401: The judgment unit 1212 in the recording/reproduction device 1102 receives the copy control information stored in the copy control information storage unit 1204 via the write/read unit 1213, and judges whether the received copy control information indicates that the second encrypted content stored in the encrypted content storage unit 1211 is movable to the portable medium 1104. If the judgment unit 1212 judges that the second encrypted content is not movable, the operation is terminated. If the judgment unit 1212 judges that the second encrypted content is movable, the operation is continued.

Step S402: The authentication unit 1223 in the recording/reproduction device 104 performs mutual authentication with the authentication unit 1224 in the portable medium 1104. If the mutual authentication is successful, the authentication units 1223 and 1224 each generate a session key. If the mutual authentication is not successful, the operation is terminated.
Step S403: The write/read unit 1213 reads the copy control information stored in the copy control information storage unit 1204 and the content key stored in the content key storage unit 1206.

Step S404: The write/read unit 1213 encrypts the read copy control information and content key using the session key through the encryption/decryption unit 1225, and transmits the encrypted copy control information and content key to the portable medium 1104. The portable medium 1104 decrypts the received encrypted copy control information and content key using the session key through the encryption/decryption unit 1226, and stores the decrypted copy control information and content key therein.

At this time, the control unit in the portable medium 1104 makes the content key stored in the content key storage unit 1217 in the portable medium 1104 unusable so as to prohibit access to the stored content key.
Step S405: The recording/reproduction device 1102 deletes the copy control information stored in the copy control information storage unit 1204 and the content key stored in the content key storage unit 1206.
At this time, the control unit in the portable medium 1104 makes the content key stored in the content key storage unit 1217 usable so as to permit access to the stored content key.

Step S406: The write/read unit 1213 reads the second encrypted content stored in the encrypted content storage unit 1211.
Step S407: The read second encrypted content is stored to the portable medium 1104.
Step S408: The second encrypted content stored in the encrypted content storage unit 1211 is deleted.

The fourth embodiment describes the case where when moving the second encrypted content from the portable medium 1104 to the recording/reproduction device 1102, the control unit 1203 in the recording/reproduction device 1102 makes the content key unusable so as to prohibit access to the content key. As an alternative, a control unit may be provided in the area 1219 in the portable medium 1104. An operation in this case is the same as the above steps S401 to S408, and so its explanation has been omitted here.

The fourth embodiment describes the case where the control unit 1203 is provided in the recording/reproduction device 1102, but a control unit may be provided in both the recording/reproduction device 1102 and the portable medium 1104.
The fourth embodiment describes a construction in which the received content and the converted content are each encrypted using the same content key, but the present invention is not limited to this construction. For example, the received content and the converted content may be encrypted using different content keys. The following describes this construction as a fifth embodiment of the present invention.

### <Fifth Embodiment>

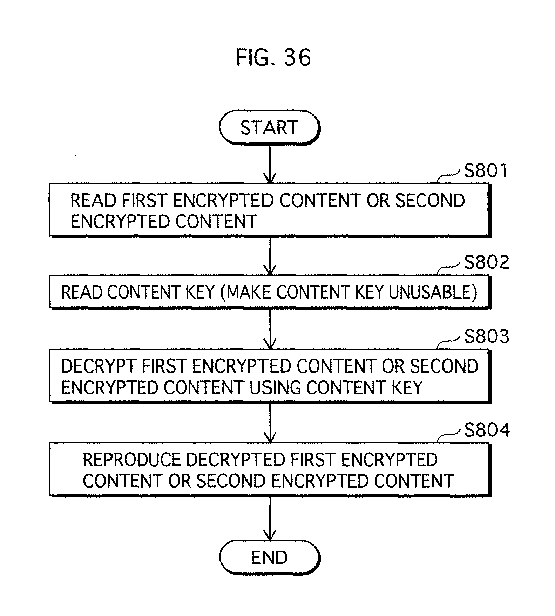

FIG. 36 is a functional block diagram showing a recording/reproduction device 1102a and a portable medium 1104a when content is recorded and reproduced by the recording/reproduction device 1102a and further moved from the recording/reproduction device 1102a to the portable medium 1104a.

The recording/reproduction device 1102a includes a reception unit 1201a, a judgment unit 1202a, a copy control information storage unit 1204a, a key generation unit 1205a, a content key storage unit 1206a1, a content key storage unit 1206a2, a control unit 1203a, an encryption unit 1208a, an encrypted content storage unit 1210a, a conversion unit 1207a, and an encryption unit 1209a. The reception unit 1201a receives copy control information and content from outside. The judgment unit 1202a judges whether the received content is recordable to the recording/reproduction device 1102a (more specifically to the encrypted content storage units 1210a and 1211a described later), based on the copy control information. The copy control information storage unit 1204a updates the copy control information if necessary, and stores the copy control information. The key generation unit 1205a generates a first content key for encrypting the received content and a second content key. The content key storage unit 1206a1 stores the generated first content key. The content key storage unit 1206a2 stores the generated second content key. The control unit 1203a controls access to the first and second content keys stored respectively in the content key storage units 1206a1 and 1206a2. The encryption unit 1208a encrypts the received content using the first content key to generate first encrypted content. The encrypted content storage unit 1210a stores the first encrypted content. The conversion unit 1207a converts the received content. The encryption unit 1209a encrypts the converted content using the second content key to generate second encrypted content.

The recording/reproduction device 1102a further includes an encrypted content storage unit 1211a, a decryption unit 1221a, a reproduction unit 1222a, a judgment unit 1212a, authentication units 1223a and 1224a, an encryption/decryption units 1225a and 1226a, and a write/read unit 1213a. The encrypted content storage unit 1211a stores the second encrypted content. The decryption unit 1221a decrypts the first encrypted content using the first content key or the second encrypted content using the second content key. The reproduction unit 1222a reproduces the decrypted first encrypted content or second encrypted content. The judgment unit 1212a judges whether the second encrypted content stored in the encrypted content storage unit 1211a is movable from the recording/reproduction device 1102a to the portable medium 1104a based on the copy control information stored in the copy control information storage unit 1204a, or judges whether the second encrypted content stored in an encrypted content storage unit 1218a of the portable medium 1104a is movable from the portable medium 1104a to the recording/reproduction device 1102a based on the copy control information stored in a copy control information storage unit 1216a of the portable medium 1104 described later. The authentication unit 1223a performs mutual authentication between the recording/reproduction device 1102a and the portable medium 1104a. The encryption/decryption unit 1225a encrypts/decrypts the copy control information and the first or second content key to be transferred between the recording/reproduction device 1102a and the portable medium 1104a when the authentication is successful. The write/read unit 1213a writes the copy control information stored in the copy control information storage unit 1204a, the first content key stored in the content key storage unit 1206a1 or the second content key stored in the content key storage unit 1206a2, and the second encrypted content stored in the encrypted content storage unit 1211a to the portable medium 1104a, or reads data from the portable medium 1104a.

The copy control information storage unit 1204a, the control unit 1203a, and the content key storage units 1206a1 and 1206a2 in the recording/reproduction device are provided in a secure area 1214a that cannot be read/written externally. This area 1214a is actually realized by tamperproof hardware, tamperproof software, or a combination thereof. Meanwhile, the encrypted content storage units 1210a and 1211a are provided in an area 1215a that can be read/written externally. This area 1215a is realized by an HDD (Hard Disk Drive) as one example.

The portable medium 1104a includes an authentication unit 1224a and an encryption/decryption unit 1226a. The authentication unit 1224a performs mutual authentication between the recording/reproduction device 1102a and the portable medium 1104a. The encryption/decryption unit 1226a encrypts/decrypts the copy control information and the first or second content key to be transferred between the recording/reproduction device 1102a and the portable medium 1104a when the authentication is successful.

The portable medium 1104a further includes the encrypted content storage unit 1218a, a content key storage unit 1217a, and the copy control information storage unit 1216a. The encrypted content storage unit 1218a stores the second encrypted content. The content key storage unit 1217a stores the first content key or the second content key. The copy control information storage unit 1216a stores the copy control information. The copy control information storage unit 1216a and the content key storage unit 1217a in the portable medium 1104a are provided in an area 1219a that cannot be read/written externally except by an authorized device. This area 1219a can be read/written by the recording/reproduction device 1102a, only if the authentication unit 1224a in the portable medium 1104a and the authentication unit 1223a in the recording/reproduction device 1102a have succeeded in the mutual authentication. Meanwhile, the encrypted content storage unit 1218a is provided in an area 1220a that can be read/written externally.

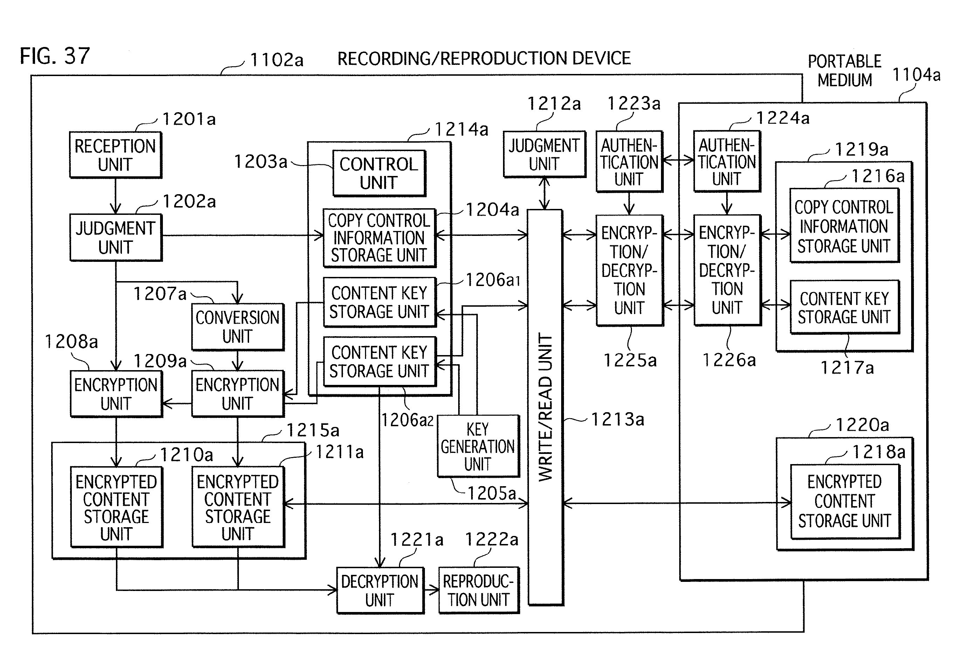

An operation of recording received content in the recording/reproduction device 1102a is described below, with reference to FIG. 37.
Step S501a: The reception unit 1201a in the recording/reproduction device 1102a receives content and copy control information.
Step S502a: The judgment unit 1202a judges whether the copy control information indicates that the received content is recordable to the recording/reproduction device 1102a. If the judgment unit 1202a judges that the received content is not recordable, the operation is terminated. If the judgment unit 1202a judges that the received content is recordable, the operation is continued.

Step S503a: The copy control information is updated if necessary, and stored in the copy control information storage unit 1204a.
Step S504a: The key generation unit 1205a generates a first content key and a second content key, and stores the first content key and the second content key respectively to the content key storage units 1206a1 and 1206a2.
Step S505a: The encryption unit 1208a encrypts the received content using the first content key stored in the content key storage unit 1206a1, to generate first encrypted content.

Step S506a: The first encrypted content is stored in the encrypted content storage unit 1210a.
Step S507a: The conversion unit 1207a converts the received content.
Step S508a: The encryption unit 1209a encrypts the converted content using the second content key stored in the content key storage unit 1206a2, to generate second encrypted content.

Step S509a: The second encrypted content is stored in the encrypted content storage unit 1211a.
The copy control information used here includes, for example, "Copy Never" that indicates copying is prohibited and "Copy One Generation" that indicates copying is permitted only once, as in the fourth embodiment. This being so, the judgment unit 1202a judges that the content is not recordable if the copy control information is "Copy Never", and judges that the content is recordable if the copy control information is "Copy One Generation". In the latter case, when the content is recorded in the recording/reproduction device 1102a, the copy control information is changed from "Copy One Generation" to "No More Copy" that indicates no more copying is permitted, and stored in the copy control information storage unit 1204a.

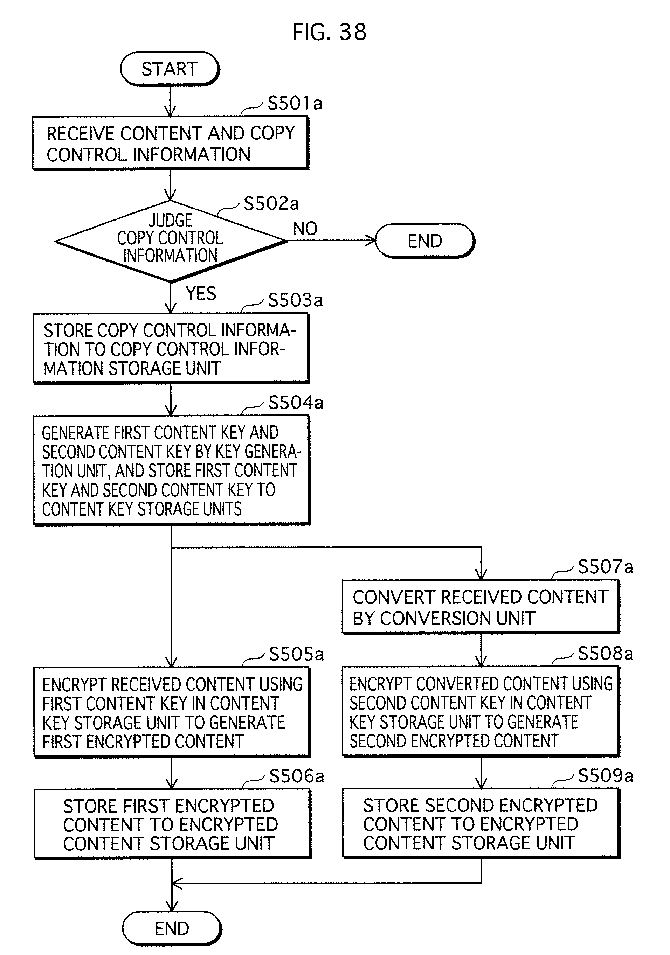

Also, for example when the received content is MPEG-2 video content, the conversion unit 1207a converts the received content to MPEG-4 video content.
An operation of moving content from the recording/reproduction device 1102a to the portable medium 1104a is described next, with reference to FIG. 38.
Step S401a: The judgment unit 1212a in the recording/reproduction device 1102a receives the copy control information stored in the copy control information storage unit 1204a via the write/read unit 1213a, and judges whether the received copy control information indicates that the second encrypted content stored in the encrypted content storage unit 1211a is movable to the portable medium 1104a. If the judgment unit 1212a judges that the second encrypted content is not movable, the operation is terminated. If the judgment unit 1212a judges that the second encrypted content is movable, the operation is continued.

Step S402a: The authentication unit 1223a in the recording/reproduction device 104a performs mutual authentication with the authentication unit 1224a in the portable medium 1104a. If the mutual authentication is successful, the authentication units 1223a and 1224a each generate a session key. If the mutual authentication is not successful, the operation is terminated.
Step S403a: The write/read unit 1213a reads the copy control information stored in the copy control information storage unit 1204a and the second content key stored in the content key storage unit 1206a2.

At this time, the control unit 1203a makes the first content key stored in the content key storage unit 1206a1 and the second content key stored in the content key storage unit 1206a2 unusable, so as to prohibit subsequent access to the stored first and second content keys.
Step S404a: The write/read unit 1213 encrypts the read copy control information and second content key using the session key through the encryption/decryption unit 1225a, and transmits the encrypted copy control information and second content key to the portable medium 1104a . The portable medium 1104a decrypts the received encrypted copy control information and second content key using the session key through the encryption/decryption unit 1226a, and stores the decrypted copy control information and second content key therein.

Step S405a: The recording/reproduction device 1102a deletes the copy control information stored in the copy control information storage unit 1204a and the second content key stored in the content key storage unit 1206a2.
Step S406a: The write/read unit 1213a reads the second encrypted content stored in the encrypted content storage unit 1211a.
Step S407a: The read second encrypted content is stored to the portable medium 1104a.

Step S408a: The second encrypted content stored in the encrypted content storage unit 1211a is deleted.

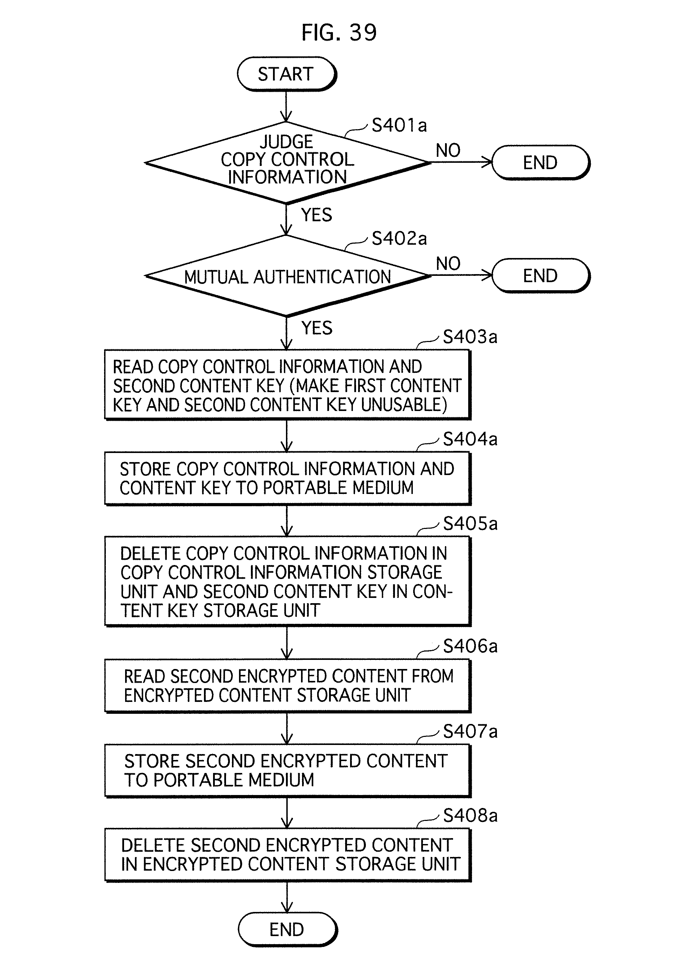

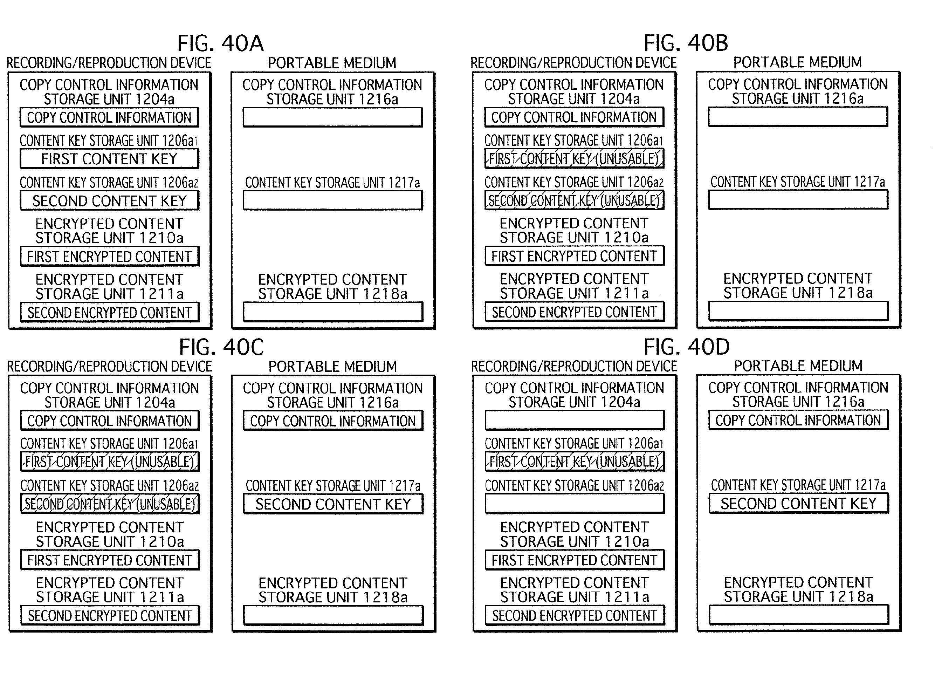

FIGS. 39 and 40 show data storage states of the recording/reproduction device 1102a and the portable medium 1104a in the above operation. FIGS. 39A shows data storage states when step S401a begins, FIG. 39B shows data storage states when step S403a ends, FIG. 39C shows data storage states when step S404a ends, FIG. 39D shows data storage states when step S405a ends, FIG. 40E shows data storage states when step S407a ends, and FIG. 40F shows data storage states when step S408a ends.

In step S403a, the control unit 1203a makes the first content key stored in the content key storage unit 1206a1 and the second content key stored in the content key storage unit 1206a2 unusable, so as to prohibit subsequent access to the stored first and second content keys. As a result, even if power fails or the portable medium 1104a is removed from the recording/reproduction device 1102a by unauthorized means at a point between when step S404a ends and step S405a begins, a situation where the first and second content keys are usable simultaneously in both the recording/reproduction device 1102a and the portable medium 1104a can be avoided. Also, even if power fails at any point from FIGS. 39A to 40F, the first and second content keys exist in any of the recording/reproduction device 1102a and the portable medium 1104a, and so a situation where the first and second content keys are lost in both the move source and the move destination and as a result the content becomes unusable can be avoided.

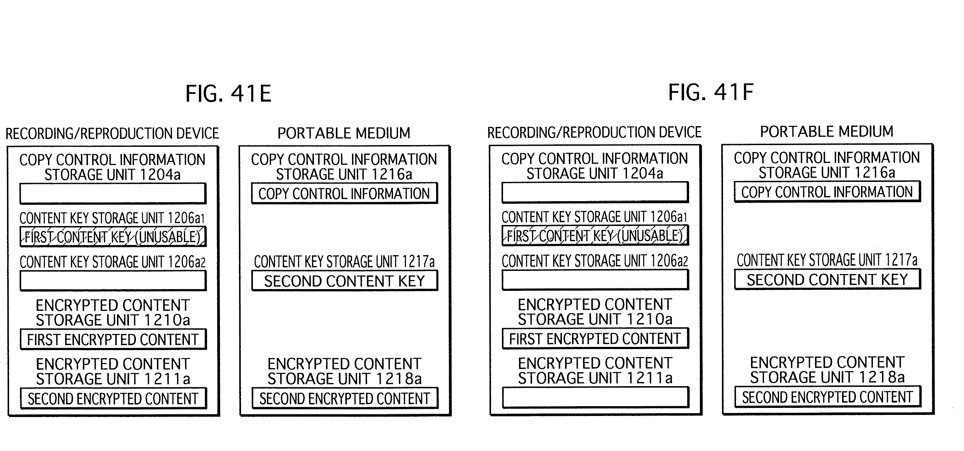

The mutual authentication and session key sharing performed by the authentication units 1223a and 1224a in step S402a canbe realized using, for example, a challenge-response mutual authentication and session key sharing method as in the fourth embodiment. The challenge-response mutual authentication and session key sharing method is well known and so its explanation has been omitted here.
An operation of moving content form the portable medium 1104a to the recording/reproduction device 1102a is described below, with reference to FIG. 41.

Step S601a: The judgment unit 1212a in the recording/reproduction device 1102a receives the copy control information stored in the copy control information storage unit 1216a in the portable medium 1104a via the write/read unit 1213a, and judges whether the received copy control information indicates that the second encrypted content stored in the encrypted content storage unit 1218a in the portable medium 1104a is movable to the recording/reproduction device 1102a. If the judgment unit 1212a judges that the second encrypted content is not movable, the operation is terminated. If the judgment unit 1212a judges that the second encrypted content is movable, the operation is continued.

Step S602a: The authentication unit 1223a in the recording/reproduction device 104a performs mutual authentication with the authentication unit 1224a in the portable medium 1104a. If the mutual authentication is successful, the authentication units 1223a and 1224a each generate a session key. If the mutual authentication is not successful, the operation is terminated.
Step S603a: The write/read unit 1213a reads the copy control information stored in the copy control information storage unit 1216a and the second content key stored in the content key storage unit 1217a in the portable medium 1104a. Here, the encryption/decryption unit 1226a in the portable medium 1104a encrypts the copy control information and the second content key using the session key, and outputs the encrypted copy control information and second content key to the recording/reproduction device 1102a. The encryption/decryption unit 1225a in the recording/reproduction device 1102a decrypts the received encrypted copy control information and second content key using the session key, and outputs the decrypted copy control information and second content key to the write/read unit 1213a.

Step S604a: The write/read unit 1213a stores the copy control information and the second content key respectively to the copy control information storage unit 1204a and the content key storage unit 1206a2 in the recording/reproduction device 1102a. Here, the control unit 1203a makes the second content key stored in the content key storage unit 1206a2 unusable, so as to prohibit access to the stored second content key.

Step S605a: The copy control information stored in the copy control information storage unit 1216a and the second content key stored in the content key storage unit 1217a are deleted.
The control unit 1203a makes the content key stored in the content key storage unit 1206a2 and the first content key stored in the content key storage unit 1206a1 usable.

Step S606a: The write/read unit 1213a reads the second encrypted content stored in the encrypted content storage unit 1218a in the portable medium 1104a.
Step S607a: The read second encrypted content is stored to the encrypted content storage unit 1211a in the recording/reproduction device 1102a.
Step S608a: The second encrypted content stored in the encrypted content storage unit 1218a in the portable medium 1104a is deleted.

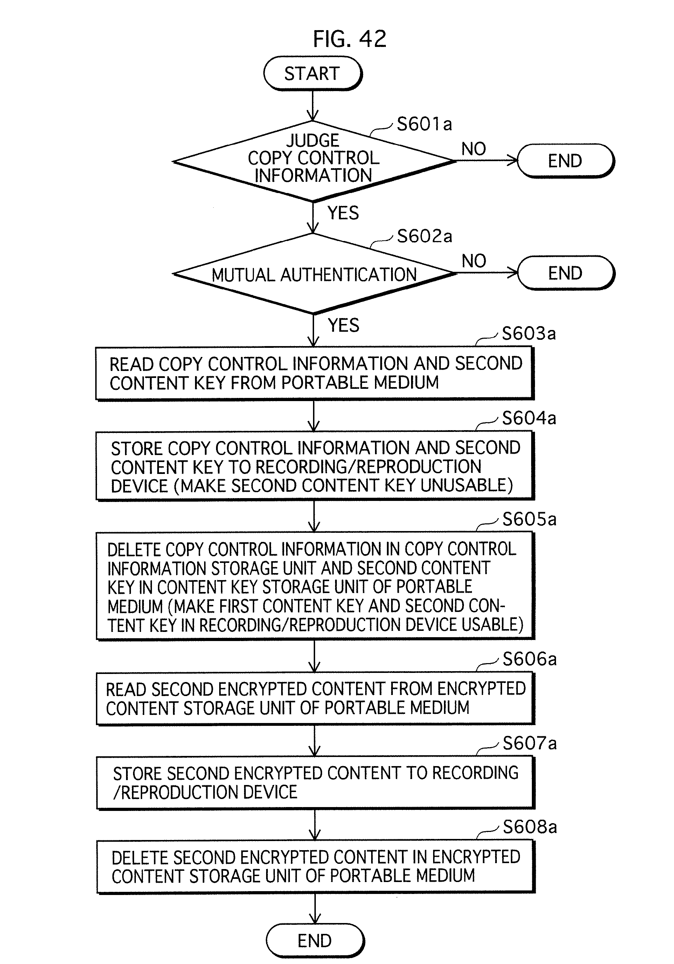

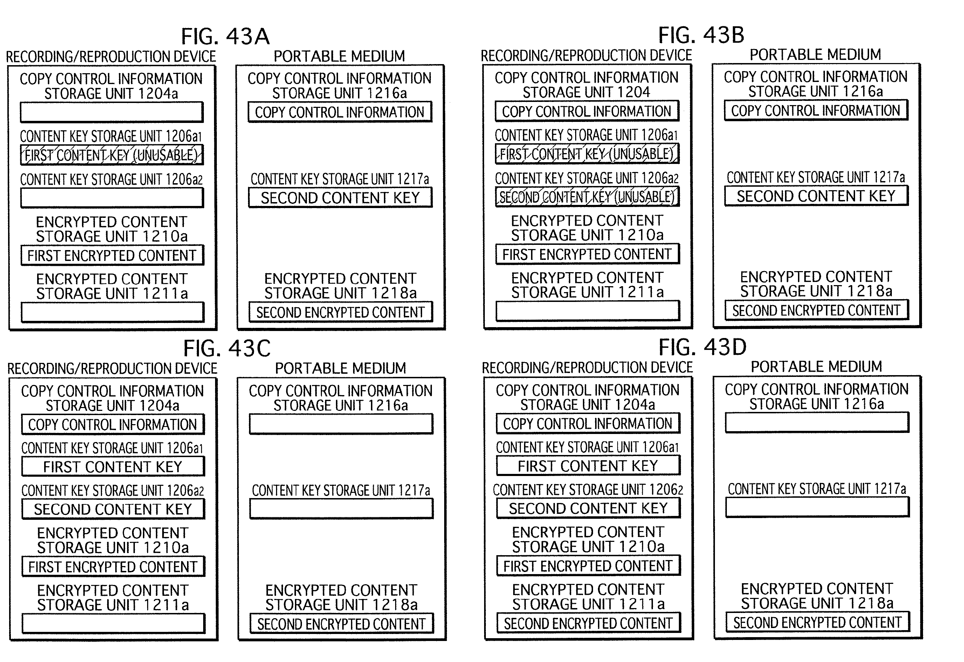

FIGS. 42 and 43 show data storage states of the recording/reproduction device 1102a and the portable medium 1104a in the above operation. FIG. 42A shows data storage states when step S601a begins, FIG. 42B shows data storage states when step S604a ends, FIG. 42C shows data storage states when step S605a ends, FIG. 42D shows data storage states when step S607a ends, and FIG. 43E shows data storage states when step S608a ends.

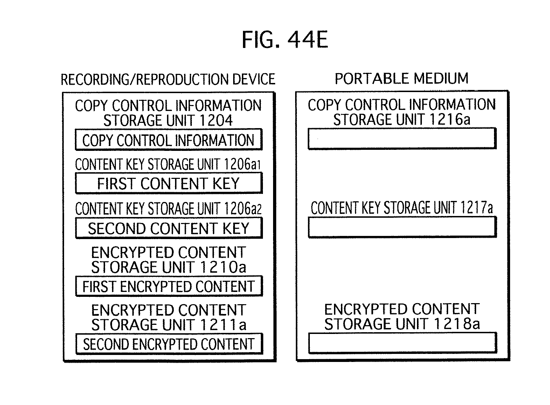

An operation of reproducing the recorded first encrypted content or second encrypted content in the recording/reproduction device 1102a is described next, with reference to FIG. 44.
Step S701a: The decryption unit 1221a reads the first encrypted content from the encrypted content storage unit 1210a or the second encrypted content from the encrypted content storage unit 1211a.

Step S702a: The decryption unit 1221a reads the first content key from the content key storage unit 1206a1 or the second content key from the content key storage unit 1206a2.
At this time, the control unit 1203a makes the first content key stored in the content key storage unit 1206a1 and the second content key stored in the content key storage unit 1206a2 unusable, so as to prohibit subsequent access to the stored first and second content keys.

Step S703a: The decryption unit 1221a decrypts the read first encrypted content or second encrypted content using the read first content key or second content key.
Step S704a: The reproduction unit 1222a reproduces the decrypted first encrypted content or second encrypted content.

Since the control unit 1203a makes the first and second content keys unusable so as to prohibit access to the first and second content keys in step S702a, it is possible to prevent the decryption and reproduction of the first encrypted content and the decryption and reproduction of the second encrypted content from being simultaneously performed.

### <Modifications>

(1) In the fourth and fifth embodiments, the provision of content from the content provision device 1101 or 1101a to the recording/reproduction device 1102 or 1102a can be conducted using various methods such as terrestrial broadcasting, satellite broadcasting, internet communications, and recording media such as DVD.

(2) In the fourth and fifth embodiments, the content and the copy control information received by the reception unit 1201 or 1201a may be in an encrypted form. In this case, the encrypted content and copy control information are decrypted before the judgment by the judgment unit 1202 or 1202a.
(3) The fourth and fifth embodiments describe a construction of generating one set of converted content from the received content and encrypting and recording the converted content, but the present invention is not limited to this construction. For example, a plurality of sets of converted content may be generated from the received content using different conversion methods and encrypted and recorded, with one or more sets of converted content being moved from the recording/reproduction device to the portable medium. Also, the fourth and fifth embodiments describe the case where the received content itself is retained without conversion, but the received content itself may be converted (using a different conversion method from the one used for the second encrypted content).

(4) The fourth and fifth embodiments describe the case where the key generation unit 1205 or 1205a in the recording/reproduction device 1102 or 1102a generates the content key or the first and second content keys and stores the content key or the first and second content keys to the content key storage unit 1206 or the content key storage units 1206a1 and 1206a2. However, the present invention should not be limited to this. For instance, the content key may be generated outside and supplied to the recording/reproduction device 1102 or 1102a.

(5) In the fourth and fifth embodiments, an SD memory card can be used as the portable medium 1104 or 1104a as one example. In this case, the authentication units 1123 and 1124 or 1123a and 1124a and the encryption/decryption units 1225 and 1226 or 1225a and 1226a operate according to CPRM SD.
(6) The fourth and fifth embodiments describe the case where the second encrypted content is moved from the recording/reproduction device 1102 or 1102a to the portable medium 1104 or 1104a, but the first encrypted content may be moved from the recording/reproduction device 1102 or 1102a to the portable medium 1104 to 1104a.

(7) The fourth and fifth embodiments describe the case where the content is moved from the recording/reproduction device to the portable medium or from the portable medium to the recording/reproduction device, but this is not a limit for the present invention. As one example, the content may be moved from the recording/reproduction device to another recording/reproduction device.
(8) In this case, the authentication units and the encryption/decryption units in the recording/reproduction devices 1102 and 1103 operate according to DTCP.

(9) The fourth and fifth embodiments describe the case where when moving the content from the recording/reproduction device to the portable medium or from the portable medium to the recording/reproduction device, various data stored in the recording/reproduction device or the portable medium is deleted. However, the present invention is not limited to such. For example, instead of deleting the encrypted content stored in the portable medium, the content key necessary for decrypting the encrypted content may be deleted so as to make the encrypted content unusable. Also, instead of deleting the data, part of the data may be destroyed so as to make the data unusable. Also, instead of deleting the data, the data may be made unusable so as to prohibit unauthorized access to the data.

(10) In the fourth and fifth embodiments, the recording/reproduction device may include a storage unit which stores a state transition in the content movement operation. In this case, when the content movement operation was not completedproperly, the recording/reproduction device may judge whether the content movement operation is to be continued or to be performed from the beginning again, based on the state transition stored in the storage unit. Also, the recording/reproduction device may include a notification unit which notifies the user of the state transition stored in the storage unit. In this case, the recording/reproduction device may notify the user that the content movement operation was not completed properly, and determine whether the content movement operation is to be continued or to be performed from the beginning again based on an instruction from the user.

(11) In the fourth and fifth embodiments, when the recording/reproduction device or the portable medium deletes the content key after moving the content key, the receiver of the content key may notify the sender of the content key that the content key has been received properly, so that the sender deletes the content key after confirming the reception based on the notification.
(12) The fourth and fifth embodiments may be modified in the following manner. The content is given an identifier for uniquely identifying the content. Whenmoving the content from the portable medium back to the recording/reproduction device, the recording/reproduction device judges whether the identifier of the encrypted content stored in the portable medium matches an encrypted content identifier held therein, and permits the movement of the content back to the recording/reproduction device only when the two identifiers match. Also, instead of the identifier for uniquely identifying the content, the content may be given an identifier for uniquely identifying the recording/reproduction device which is the move source of the content. In such a case, the recording/reproduction device judges whether the identifier of the recording/reproduction device accompanying the content matches the identifier of the recording/reproduction device, and permits the movement of the content back to the recording/reproduction device only when the two identifiers match.

(13) The fourth and fifth embodiments may be modified in the following way. For each of a plurality of sets of content, first encrypted content and second encrypted content are generated and stored respectively in the encrypted content storage units 1210 and 1211 or 1210a and 1 211a, and copy control information and a content key (or first and second content keys) are stored respectively in the copy control information storage unit 1204 or 1204a and the content key storage unit 1206 or 1206a1 and 1206a2. In this case, in order to enable the content key and the copy control information corresponding to the content to be identified, the first encrypted content and the second encrypted content may be stored to the encrypted content storage units 1201 and 1211 or 1210a and 1211a together with content identification information, and the copy control information and the content key (or the first and second content keys) may be stored to the copy control information storage unit 1204 or 1204a and the content key storage unit 1206 or 1206a1 and 1206a2 together with the content identification information. In this way, for example when moving the second encrypted content to the portable medium 1104a, the copy control information and the content key (or the first and second content keys) having the same content identification information as the second encrypted content can be found in the copy control information storage unit 1204 or 1204a and the content key storage unit 1206 or 1206a1 and 1206a2.
   (14) The fourth and fifth embodiments describe the case where the content is provided from the external content provision device, but this is not a limit for the present invention. For instance, the recording/reproduction device may read the content from a storage medium inserted therein.

### <Conclusion>

(1) As described above, the present invention is a copyright protection system capable of moving content from a first device which holds the content to a second device or moving the content from the second device to the first device, the first device including: a content storage unit operable to store first encrypted content and second encrypted content that is related to the first encrypted content; a key storage unit operable to store a content key for decrypting the first encrypted content or the second encrypted content; and a key control unit operable to control access to the content key, the second device including a content storage unit operable to store the first encrypted content or the second encrypted content; and a key storage unit operable to store the content key, wherein when moving the first encrypted content or the second encrypted content from the first device to the second device, the content key stored in the key storage unit in the first device is stored to the key storage unit in the second device and the first encrypted content or the second encrypted content stored in the content storage unit in the first device is stored to the content storage unit in the second device under the control of the key control unit in the first device.

(2) In the copyright protection system of (1), the key control unit in the first device may make the content key stored in the key storage unit in the first device unusable, and store the content key stored in the key storage unit in the first device to the key storage unit in the second device.
(3) In the copyright protection system of (1), the key control unit in the first device may delete the content key stored in the key storage unit in the first device, and store the content key stored in the key storage unit in the first device to the key storage unit in the second device.

(4) In the copyright protection system of (1), the key control unit in the first device may make the content key stored in the key storage unit in the first device unusable, store the content key stored in the key storage unit in the first device to the key storage unit in the second device, and delete the content key stored in the key storage unit in the first device.
(5) In the copyright protection system of (1), the first device may further include: an authentication unit, wherein the second device further includes: an authentication unit, the authentication unit in the first device performs authentication with the authentication unit in the second device, and the content key stored in the key storage unit in the first device is stored to the key storage unit in the second device if the authentication is successful.

(6) In the copyright protection system of (1), the first device may further include: an authentication unit; and a key encryption unit, wherein the second device further includes: an authentication unit; and a key encryption unit, the authentication unit in the first device performs authentication with the authentication unit in the second device, the authentication unit in the first device and the authentication unit in the second device each generate a session key if the authentication is successful, the key encryption unit in the first device encrypts the content key stored in the key storage unit in the first device using the session key and sends the encrypted content key to the second device, and the key encryption unit in the second device decrypts the received encrypted content key using the session key and stores the decrypted content key to the key storage unit in the second device.

(7) In the copyright protection system of (1), the first device may further include: a copy control information storage unit operable to store copy control information; and a judgment unit operable to judge whether or not the first encryption content or the second encrypted content is movable from the first device to the second device based on the copy control information.

(8) In the copyright protection system of (1), when moving the first encrypted content or the second encrypted content from the second device to the first device, the content key stored in the key storage unit in the second device may be stored to the key storage unit in the first device and the first encrypted content or the second encrypted content stored in the content storage unit in the second device may be stored to the content storage unit in the first device under the control of the key control unit in the first device.

(9) In the copyright protection system of (8), the key control unit in the first device may make the content key stored in the key storage unit in the first device unusable, store the content key stored in the key storage unit in the second device to the key storage unit in the first device, delete the content key stored in the key storage unit in the second device, and make the content key stored in the key storage unit in the first device usable.

(10) In the copyright protection system of (1), the first encrypted content may be generated by encrypting the content using the content key, wherein the second encrypted content is generated by encrypting converted content, which is obtained by converting the content, using the content key.
(11) In the copyright protection system of (1), the first device may be a recording/reproduction device, wherein the second device is a portable medium that can be read and written by the recording/reproduction device.

(12) Also, the present invention is a recording/reproduction device capable of moving content to a portable medium or moving the content from the portable medium, including: a content storage unit operable to store first encrypted content and second encrypted content that is related to the first encrypted content; a key storage unit operable to store a content key for decrypting the first encrypted content or the second encrypted content; and a key control unit operable to control access to the content key, wherein when moving the first encrypted content or the second encrypted content from the recording/reproduction device to the portable medium, the content key stored in the key storage unit in the recording/reproduction device is stored to the portable medium and the first encrypted content or the second encrypted content stored in the content storage unit in the first device is stored to the portable medium under the control of the key control unit in the recording/reproduction device.

(13) In the above recording/reproduction device, when moving the first encrypted content or the second encrypted content from the portable medium to the recording/reproduction device, the content key stored in a key storage unit in the portable medium may be stored to the key storage unit in the recording/reproduction device and the first encrypted content or the second encrypted content stored in a content storage unit in the portable medium may be stored to the content storage unit in the recording/reproduction device under the control of the key control unit in the recording/reproduction device.

(14) Also, the present invention is a portable medium capable of moving content to a recording/reproduction device or moving the content from the recording/reproduction device, including: a content storage unit operable to store first encrypted content or second encrypted content; and a key storage unit operable to store a content key for decrypting the first encrypted content or the second encrypted content, wherein when moving the first encrypted content or the second encrypted content from the recording/reproduction device to the portable medium, the content key stored in a key storage unit in the recording/reproduction device is stored to the key storage unit in the portable medium and the first encrypted content or the second encrypted content stored in a content storage unit in the recording/reproduction device is stored to the content storage unit in the portable medium under control of a key control unit in the recording/reproduction device.

(15) In the above portable medium, when moving the first encrypted content or the second encrypted content from the portable medium to the recording/reproduction device, the content key stored in the key storage unit in the portable medium is stored to the key storage unit in the recording/reproduction device and the first encrypted content or the second encrypted content stored in the content storage unit in the portable medium is stored to the content storage unit in the recording/reproduction device under the control of the key control unit in the recording/reproduction device.

(16) Also, the present invention is a copyright protection system capable of moving content from a first device which holds the content to a second device or moving the content from the second device to the first device, the first device including: a content storage unit operable to store first encrypted content and second encrypted content that is related to the first encrypted content; a key storage unit operable to store a first content key for decrypting the first encrypted content and a second content key for decrypting the second encrypted content; and a key control unit operable to control access to the first content key and the second content key, the second device including: a content storage unit operable to store the first encrypted content or the second encrypted content; and a key storage unit operable to store the first content key or the second content key, wherein when moving the first encrypted content or the second encrypted content from the first device to the second device, the first content key or the second content key stored in the key storage unit in the first device is stored to the key stored unit in the second device and the first encrypted content or the second encrypted content stored in the content storage unit in the first device is stored to the content storage unit in the second device under the control of the key control unit in the first device.

(17) In the copyright protection system of (16), the key control unit in the first device may make the first content key and the second content key stored in the key storage unit in the first device unusable, store the first content key or the second content key stored in the key storage unit in the first device to the key storage unit in the second device, and delete, from the key storage unit in the first device, the first content key or the second content key which has been stored to the key storage unit in the second device.

(18) In the copyright protection system of (16), when moving the first encrypted content or the second encrypted content from the second device to the first device, the first content key or the second content key stored in the key storage unit in the second device is stored to the key storage unit in the first device and the first encrypted content or the second encrypted content stored in the content storage unit in the second device is stored to the content storage unit in the first device under the control of the key control unit in the first device.

(19) In the copyright protection system of (18), the key control unit in the first device may make the first content key or the second content key to be stored to the key storage unit in the first device unusable, store the first content key or the second content key stored in the key storage unit in the second device to the key storage unit in the first device, delete the first content key or the second content key stored in the key storage unit in the second device, and make the first content key or the second content key stored in the key storage unit in the first device usable.

### <Other Modifications>

(1) The above embodiments describe a construction of moving the content from the recording/reproduction device to the portablemedium, but the present invention is not limited to this. For example, the content may be moved from the recording/reproduction device to another recording/reproduction device.
(2) The above embodiments describe the case where, to move the content from the recording/reproduction device to the portable medium, the MPEG-2 content of a high image quality is converted to the MPEG-4 content of a low image quality. However, the image conversion is not limited to the conversion from MPEG-2 to MPEG-4, so long as it is an irreversible conversion.

(3) The present invention includes not only the case of moving the content which has undergone the image conversion, but also the case of moving the content without the image conversion. Which is to say, the present invention is a terminal device that transfers a right to use content to a portable medium while protecting a copyright of the content, including: a storage unit storing first encrypted content generated by encrypting the content, a device key for decrypting the first encrypted content, and a medium key different from the device key; a decryption unit operable to decrypt the encrypted content using the device key to generate the content; an encryption unit operable to encrypt the generated content using the medium key to generate second encrypted content; a write unit operable to write the device key, the medium key, and the second encrypted content to the portable medium; and a key deletion unit operable to delete the device key from the first storage unit.

(4) The second embodiment may be modified such that the recording/reproduction device 20 encrypts device recording key K_{HDD} using device unique key Ka and moves it to the portable medium 14. Likewise, the third embodiment may be modified such that the recording/reproduction device 30 encrypts content key K_{C} using device unique key Ka and moves it to the portable medium 14.
(5) The above embodiments describe the case where when moving the content from the portable medium to the recording/reproduction device, the encrypted content and the medium recording key held in the portable medium which is the move source are both deleted. However, the present invention is not limited to this. For instance, only one of the encrypted content and the medium recording key may be deleted.

Also, instead of deleting the encrypted content and the medium recording key, part of one of the encrypted content and the medium recording key may be destroyed so as to make the data unusable.
(6) The recording/reproduction device according to the present invention may include a storage unit that stores a state transition in the content movement operation. Which is to say, the recording/reproduction device may include a state holding unit operable to hold a content movement state, wherein if the content movement operation was not completed properly, the content movement state held in the state holding unit is notified to the user. In this way, when the content movement operation was not completed properly, the recording/reproduction device can judge whether the content movement operation is to be continued or to be performed from the beginning again, based on the content movement state held in the state holding unit.

The recording/reproduction device may further include a notification unit operable to notify the user of the content movement state held in the state holding unit. In this case, the recording/reproduction device can notify the user that the content movement operation was not completed properly, and determine whether the content movement operation is to be continued or to be performed from the beginning again, based on an instruction from the user.

(7) The above embodiments may be modified such that when the recording/reproduction device or the portable medium moves the key and then deletes the key stored therein, the recording/reproduction device or the portable medium deletes the key after confirming that the key has been properly received by the move destination. In this case, the move destination may notify the move source that the key has been properly received.
(8) The first embodiment describes the case where the recording/reproduction device 10 encrypts device recording key K_{HDD} using device unique key Ka, but this is not a limit for the present invention. For example, the recording/reproduction device 10 may encrypt device recording key K_{HDD} using not device unique key Ka but a common key shared by a plurality of devices. Alternatively, the recording/reproduction device 10 may encrypt device recording key K_{HDD} using a manufacturer unique key uniquely assigned to each device manufacturer. Also, the recording/reproduction device 10 may generate a key in each encryption operation and encrypt K_{HDD} using the generated key.

(9) The above embodiments describe the case where the recording/reproduction device acquires content which is a digital broadcast program broadcast from the external content provision device 11, but it should be obvious that the present invention is not limited to such. For example, the recording/reproduction device may readdigital content stored in a storage medium inserted in the recording/reproduction device.
(10) The present invention also includes a construction in which mutual authentication is performed between devices based on an authentication procedure prescribed by DTCP, and content movement is performed if the authentication is successful.

(11) The title list generated by the recording/reproduction device is not limited to title lists 125 and 129 shown in FIG. 4. As one example. a thumbnail of content may be used as title information. In such a case, usability information may be presented to the user by, for example, displaying a large thumbnail for usable content and a small thumbnail for unusable content.

(12) The above embodiments describe the case where the key (device key) for encrypting the content recorded by the recording/reproduction device and the key (medium key) for encrypting the content recorded by the portable medium are different, but this is not a limit for the present invention. For example, the following modification is applicable.
   The present invention is a terminal device for transferring a right to use content to a portable medium while protecting a copyright of the content, including: a storage unit storing first encrypted content and a content key, the first encrypted content being generated by encrypting the content; a decryption unit operable to decrypt the first encrypted content using the content key to generate the content; a conversion unit operable to perform an irreversible conversion on the generated content to generate converted content; an encryption unit operable to encrypt the converted content using the content key to generate second encrypted content; a movement unit operable to move the content key and the second encrypted content to the portable medium; and a key deletion unit operable to delete the content key from the storage unit.

Here, the key deletion unit may delete the content key from the storage unit after the movement unit writes the content key to the portable medium, wherein the movement unit moves the second encrypted content to the portable medium after the key deletion unit deletes the content key from the storage unit.
Here, the terminal medium, after the movement unit moves the content key and the second encrypted content to the portable medium and the key deletion unit deletes the content key from the storage unit, may further include: a read unit operable to read the content key from the portable medium, wherein the read unit stores the read content key to the storage unit.

Also, the present invention is a content movement method used in a terminal device for transferring a right to use content to a portable medium while protecting a copyright of the content, the terminal device storing first encrypted content and a content key, the first encrypted content being generated by encrypting the content, the content movement method including: a decryption step of decrypting the first encrypted content using the content key to generate the content; a conversion step of performing an irreversible conversion on the generated content to generate converted content; an encryption step of encrypting the converted content using the content key to generate second encrypted content; a movement step of moving the content key and the second encrypted content to the portable medium; and a key deletion step of deleting the content key from the terminal device.

Here, the key deletion step may delete the content key from the terminal device after the movement step writes the content key to the portable medium, wherein the movement step moves the second encrypted content to the portable medium after the key deletion step deletes the content key from the terminal device.
Also, the present invention is a contentmovement program used in a terminal device for transferring a right to use content to a portable medium while protecting a copyright of the content, the terminal device storing first encrypted content and a content key, the first encrypted content being generated by encrypting the content, the content movement program including: a decryption step of decrypting the first encrypted content using the content key to generate the content; a conversion step of performing an irreversible conversion on the generated content to generate converted content; an encryption step of encrypting the converted content using the content key to generate second encrypted content; a movement step of moving the content key and the second encrypted content to the portable medium; and a key deletion step of deleting the content key from the terminal device.

Here, the key deletion step may delete the content key from the terminal device after the movement step writes the content key to the portable medium, wherein the movement step moves the second encrypted content to the portable medium after the key deletion step deletes the content key from the terminal device.
(13) The above embodiments describe the case where the portable medium to which the content is moved from the recording/reproduction device is a card-type memory such as an SD card, but it should be obvious that the present invention is not limited to this. For example, the portable medium may be a readable/writable DVD.

(14) The present invention also applies to a method described above. This method may be realized by a computer program that is executed by a computer. Such a computer program may be distributed as a digital signal.
   The present invention may be realized by a computer-readable storage medium, such as a flexible disk, a hard disk, a CD-ROM, an MO, a DVD, a DVD-ROM, a DVD-RAM, a BD (Blu-ray Disc), or a semiconductor memory, on which the above computer program or digital signal is recorded. Conversely, the present invention may also be realized by the computer program or digital signal that is recorded on such a storage medium.

The computer program or digital signal that achieves the present invention may also be transmitted via a network, such as an electronic communications network, a wired or wireless communications network, or an internet.
The present invention can also be realized by a computer system that includes a microprocessor and a memory. In this case, the computer program can be stored in the memory, with the microprocessor operating in accordance with this computer program.

The computer program or digital signal may be provided to an independent computer system by distributing a storage medium on which the computer program or digital signal is recorded, or by transmitting the computer program or digital signal via a network or the like. The independent computer system may then execute the computer program or digital signal to function as the present invention.
(15) The above embodiments and modifications may be freely combined.

### Industrial Applicability

According to the present invention, even if content which has undergone image conversion is moved to another device, the original content can be restored. Hence the present invention can be used as a mechanism for protecting a copyright of content without causing a decrease in user-friendliness, in an industry for distributing content to users, an industry for manufacturing content recording/reproduction devices, and an industry for selling content recording/reproduction devices.

## Claims

1. A terminal device for transferring a right to use content to a portable medium while protecting a copyright of the content, comprising:
a storage unit storing first encrypted content, a device key, and a medium key, the first encrypted content being generated by encrypting the content;
a decryption unit operable to decrypt the first encrypted content using the device key, to generate the content;
a conversion unit operable to perform an irreversible conversion on the generated content, to generate converted content;
an encryption unit operable to encrypt the converted content using the medium key, to generate second encrypted content;
a write unit operable to move the medium key and the second encrypted content to the portable medium, and read the device key from the storage unit and write the read device key to the portable medium; and
a key deletion unit operable to delete the device key from the storage unit.

2. The terminal device of Claim 1,
wherein the key deletion unit deletes the device key from the storage unit after the write unit writes the device key to the portable medium, and
the write unit moves the medium key and the second encrypted content to the portable medium after the key deletion unit deletes the device key from the storage unit.

3. The terminal device of Claim 2,
wherein the storage unit further stores key information for encrypting the device key,
the encryption unit further encrypts the device key using the key information; and
the write unit writes the encrypted device key to the portable medium, as the device key.

4. The terminal device of Claim 3 after the write unit writes the encrypted device key to the portable medium, the key deletion unit deletes the device key from the storage unit, and the write unit moves the medium key and the second encrypted content to the portable medium, further comprising:
a read unit operable to read the encrypted device key from the portable medium,
wherein the decryption unit further decrypts the read encrypted device key using the key information to generate the device key, and stores the generated device key to the storage unit.

5. The terminal device of Claim 1, further comprising:
an embedment unit operable to embed the device key in the converted content, to generate key-embedded content,
wherein the encryption unit encrypts the key-embedded content using the medium key, to generate the second encrypted content,
the key deletion unit deletes the device key from the storage unit after the embedment unit embeds the device key in the converted content, and
the write unit moves the medium key and the second encrypted content to the portable medium after the key deletion unit deletes the device key from the storage unit.

6. The terminal device of Claim 5 after the key deletion unit deletes the device key from the storage unit and the write unit moves the medium key and the second encrypted content to the portable medium, further comprising:
an extraction unit operable to extract the device key from the key-embedded content, and store the extracted device key to the storage unit,
wherein a read unit reads the second encrypted content and the medium key from the portable medium, and
the decryption unit further decrypts the read second encrypted content using the read medium key to generate the key-embedded content, and outputs the generated key-embedded content to the extraction unit.

7. The terminal device of Claim 1 after the write unit writes the device key to the portable medium, the key deletion unit deletes the device key from the storage unit, and the write unit moves the medium key and the second encrypted content to the portable medium, further comprising:
a read unit operable to read the device key from the portable medium,
wherein the read unit stores the read device key to the storage unit.

8. The terminal device of Claim 7, further comprising:
a reproduction unit operable to reproduce the content,
wherein the decryption unit further reads the first encrypted content and the device key from the storage unit, decrypts the read first encrypted content using the read device key to generate the content, and outputs the generated content to the reproduction unit.

9. A content protection system for transferring a right to use content from a terminal device to a portable medium while protecting a copyright of the content,
the terminal device comprising:
a first storage unit storing first encrypted content, a device key, and a medium key, the first encrypted content being generated by encrypting the content;
a decryption unit operable to decrypt the first encrypted content using the device key, to generate the content;
a conversion unit operable to perform an irreversible conversion on the generated content, to generate converted content;
an encryption unit operable to encrypt the converted content using the medium key, to generate second encrypted content;
a write unit operable to move the medium key and the second encrypted content to the portable medium, and read the device key from the first storage unit and write the read device key to the portable medium; and
a key deletion unit operable to delete the device key from the first storage unit, and
the portable medium comprising:
a second storage unit operable to store the device key, the medium key, and the second encrypted content received from the terminal device,
wherein the key deletion unit deletes the device key from the first storage unit after the write unit writes the device key to the second storage unit, and
the write unit moves the medium key and the second encrypted content to the portablemediumafter the key deletion unit deletes the device key from the first storage unit.

10. The content protection system of Claim 9 after the write unit writes the device key to the portable medium, the key deletion unit deletes the device key from the first storage unit, and the write unit moves the medium key and the second encrypted content to the portable medium,
wherein the terminal device further comprises:
a read unit operable to read the device key form the second storage unit,
the read unit stores the read device key to the first storage unit,
the portable medium further comprises:
a deletion unit operable to delete at least one of the second encrypted content and the medium key from the second storage unit, and
the read unit reads the device key from the second storage unit after the deletion unit deletes the at least one of the second encrypted content and the medium key from the second storage unit.

11. The content protection system of Claim 9,
wherein the first storage unit further stores key information for encrypting the device key,
the encryption unit further encrypts the device key using the key information,
the write unit writes the encrypted device key to the second storage unit as the device key, and after writing the encrypted device key, moves the medium key and the second encrypted content to the second storage unit, and
the second storage unit stores the encrypted device key as the device key.

12. The content protection system of Claim 11 after the write unit writes the encrypted device key to the second storage unit, the key deletion unit deletes the device key from the first storage unit, and the write unit moves the medium key and the second encrypted content to the second storage unit,
wherein the terminal device further comprises:
a read unit operable to read the encrypted device key from the second storage unit,
wherein the decryption unit further decrypts the read encrypted device key using the key information to generate the device key, and stores the generated device key to the first storage unit,
the portable medium further comprises:
a deletion unit operable to delete at least one of the second encrypted content and the medium key from the second storage unit, and
the read unit reads the encrypted device key from the second storage unit after the deletion unit deletes the at least one of the second encrypted content and the medium key from the second storage unit.

13. The content protection system of Claim 9,
wherein the terminal device further comprises:
an embedment unit operable to embed the device key in the converted content, to generate key-embedded content,
the encryption unit encrypts the key-embedded content using the medium key, to generate the second encrypted content,
the key deletion unit deletes the device key from the first storage unit after the embedment unit embeds the device key in the converted content, and
the write unit writes the medium key and the second encrypted content to the second storage unit after the key deletion unit deletes the device key from the first storage unit.

14. The content protection system of Claim 13 after the key deletion unit deletes the device key from the first storage unit and the write unit moves the medium key and the second encrypted content to the second storage unit,
wherein the terminal device further comprises:
an extraction unit operable to extract the device key from the key-embedded content, and store the extracted device key to the first storage unit,
a read unit reads the second encrypted content and the medium key from the second storage unit,
the decryption unit further decrypts the read second encrypted content using the read medium key to generate the key-embedded content, and outputs the generated key-embedded content to the extraction unit, and
the portable medium deletes the second encrypted content and the medium key from the second storage unit after the terminal device reads the second encrypted content and the medium key from the second storage unit.

15. The content protection system of Claim 9, further including a mobile information terminal,
wherein the mobile information terminal reads, from the portable medium in which the device key, the medium key, and the second encrypted content are stored in the second storage unit, the second encrypted content and the medium key, decrypts the read second encrypted content using the read medium key to generate the converted content, and reproduces the converted content.

16. The content protection systemof Claim 9, further including another terminal device connected with the terminal device,
wherein the another terminal device comprises:
a read unit operable to read, from the portable medium in which the device key, the medium key, and the second encrypted content are stored in the second storage unit, the device key, the medium key, and the second encrypted content;
a deletion unit operable to delete at least one of the medium key and the second encrypted content read by the read unit; and
an acquisition unit operable to acquire the first encrypted content from the terminal device, after the deletion unit deletes the at least one of the medium key and the second encrypted content,
the portable medium moves the device key, the medium key, and the second encrypted content to the another terminal device, and
the terminal device further comprises:
a transmission unit operable to transmit the first encrypted content to the another terminal device; and
a content deletion unit operable to delete the first encrypted content from the first storage unit.

17. A portable medium for receiving a right to use content from a terminal device while protecting a copyright of the content, a recording device including: a storage unit storing first encrypted content, a device key, and a medium key, the first encrypted content being generated by encrypting the content; a decryption unit operable to decrypt the first encrypted content using the device key, to generate the content; a conversion unit operable to perform an irreversible conversion on the generated content, to generate converted content; an encryption unit operable to encrypt the converted content using the medium key, to generate second encrypted content; a write unit operable to move the medium key and the second encrypted content to the portable medium, and read the device key from the first storage unit and write the read device key to the portable medium; and a key deletion unit operable to delete the device key from the first storage unit,
the portable medium comprising:
a storage unit operable to store the device key, the medium key, and the second encrypted content.

18. A content movement method used in a terminal device for transferring a right to use content to a portable medium while protecting a copyright of the content, the terminal device storing first encrypted content, a device key, and a medium key, the first encrypted content being generated by encrypting the content, the content movement method comprising:
a decryption step of decrypting the first encrypted content using the device key, to generate the content;
a conversion step of performing an irreversible conversion on the generated content, to generate converted content;
an encryption step of encrypting the converted content using the medium key, to generate second encrypted content;
a write step of moving the medium key and the second encrypted content to the portable medium, and reading the device key from the storage unit and writing the read device key to the portable medium; and
a key deletion step of deleting the device key from the terminal device.

19. The content movement method of Claim 18,
wherein the key deletion step deletes the device key from the terminal device after the write step writes the device key to the portable medium, and
the write step moves the medium key and the second encrypted content to the portable medium after the key deletion step deletes the device key from the terminal device.

20. A content movement program used in a terminal device for transferring a right to use content to a portable medium while protecting a copyright of the content, the terminal device storing first encrypted content, a device key, and a medium key, the first encrypted content being generated by encrypting the content, the content movement program comprising:
a decryption step of decrypting the first encrypted content using the device key, to generate the content;
a conversion step of performing an irreversible conversion on the generated content, to generate converted content;
an encryption step of encrypting the converted content using the medium key, to generate second encrypted content;
a write step of moving the medium key and the second encrypted content to the portable medium, and reading the device key from the storage unit and writing the read device key to the portable medium; and
a key deletion step of deleting the device key from the terminal device.

21. The content movement program of Claim 20,
wherein the key deletion step deletes the device key from the terminal device after the write step writes the device key to the portable medium, and
the write step moves the medium key and the second encrypted content to the portable medium after the key deletion step deletes the device key from the terminal device.

## Amended claims

### Amended claims under Art. 19.1 PCT

1. A terminal device for transferring a right to use content to a portable medium while protecting a copyright of the content, comprising:
a storage unit storing first encrypted content, a device key, and a medium key, the first encrypted content being generated by encrypting the content;
a decryption unit operable to decrypt the first encrypted content using the device key, to generate the content;
a conversion unit operable to perform an irreversible conversion on the generated content, to generate converted content;
an encryption unit operable to encrypt the converted content using the medium key, to generate second encrypted content;
a write unit operable to move the medium key and the second encrypted content to the portable medium, and read the device key from the storage unit and write the read device key to the portable medium; and
a key deletion unit operable to delete the device key from the storage unit.

2. The terminal device of Claim 1,
wherein the key deletion unit deletes the device key from the storage unit after the write unit writes the device key to the portable medium, and
the write unit moves the medium key and the second encrypted content to the portable medium after the key deletion unit deletes the device key from the storage unit.

3. The terminal device of Claim 2,
wherein the storage unit further stores key information for encrypting the device key,
the encryption unit further encrypts the device key using the key information; and
the write unit writes the encrypted device key to the portable medium, as the device key.

4. The terminal device of Claim 3 after the write unit writes the encrypted device key to the portable medium, the key deletion unit deletes the device key from the storage unit, and the write unit moves the medium key and the second encrypted content to the portable medium, further comprising:
a read unit operable to read the encrypted device key from the portable medium,
wherein the decryption unit further decrypts the read encrypted device key using the key information to generate the device key, and stores the generated device key to the storage unit.

5. The terminal device of Claim 1, further comprising:
an embedment unit operable to embed the device key in the converted content, to generate key-embedded content,
wherein the encryption unit encrypts the key-embedded content using the medium key, to generate the second encrypted content,
the key deletion unit deletes the device key from the storage unit after the embedment unit embeds the device key in the converted content, and
the write unit moves the medium key and the second encrypted content to the portable medium after the key deletion unit deletes the device key from the storage unit.

6. The terminal device of Claim 5 after the key deletion unit deletes the device key from the storage unit and the write unit moves the medium key and the second encrypted content to the portable medium, further comprising:
an extraction unit operable to extract the device key from the key-embedded content, and store the extracted device key to the storage unit,
wherein a read unit reads the second encrypted content and the medium key from the portable medium, and
the decryption unit further decrypts the read second encrypted content using the read medium key to generate the key-embedded content, and outputs the generated key-embedded content to the extraction unit.

7. The terminal device of Claim 1 after the write unit writes the device key to the portable medium, the key deletion unit deletes the device key from the storage unit, and the write unit moves the medium key and the second encrypted content to the portable medium, further comprising:
a read unit operable to read the device key from the portable medium,
wherein the read unit stores the read device key to the storage unit.

8. The terminal device of Claim 7, further comprising:
a reproduction unit operable to reproduce the content,
wherein the decryption unit further reads the first encrypted content and the device key from the storage unit, decrypts the read first encrypted content using the read device key to generate the content, and outputs the generated content to the reproduction unit.

9. A content protection system for transferring a right to use content from a terminal device to a portable medium while protecting a copyright of the content,
the terminal device comprising:
a first storage unit storing first encrypted content, a device key, and a medium key, the first encrypted content being generated by encrypting the content;
a decryption unit operable to decrypt the first encrypted content using the device key, to generate the content;
a conversion unit operable to perform an irreversible conversion on the generated content, to generate converted content;
an encryption unit operable to encrypt the converted content using the medium key, to generate second encrypted content;
a write unit operable to move the medium key and the second encrypted content to the portable medium, and read the device key from the first storage unit and write the read device key to the portable medium; and
a key deletion unit operable to delete the device key from the first storage unit, and
the portable medium comprising:
a second storage unit operable to store the device key, the medium key, and the second encrypted content received from the terminal device,
wherein the key deletion unit deletes the device key from the first storage unit after the write unit writes the device key to the second storage unit, and
the write unit moves the medium key and the second encrypted content to the portable medium after the key deletion unit deletes the device key from the first storage unit.

10. The content protection system of Claim 9 after the write unit writes the device key to the portable medium, the key deletion unit deletes the device key from the first storage unit, and the write unit moves the medium key and the second encrypted content to the portable medium,
wherein the terminal device further comprises:
a read unit operable to read the device key form the second storage unit,
the read unit stores the read device key to the first storage unit,
the portable medium further comprises:
a deletion unit operable to delete at least one of the second encrypted content and the medium key from the second storage unit, and
the read unit reads the device key from the second storage unit after the deletion unit deletes the at least one of the second encrypted content and the medium key from the second storage unit.

11. The content protection system of Claim 9,
wherein the first storage unit further stores key information for encrypting the device key,
the encryption unit further encrypts the device key using the key information,
the write unit writes the encrypted device key to the second storage unit as the device key, and after writing the encrypted device key, moves the medium key and the second encrypted content to the second storage unit, and
the second storage unit stores the encrypted device key as the device key.

12. The content protection system of Claim 11 after the write unit writes the encrypted device key to the second storage unit, the key deletion unit deletes the device key from the first storage unit, and the write unit moves the medium key and the second encrypted content to the second storage unit,
wherein the terminal device further comprises:
a read unit operable to read the encrypted device key from the second storage unit,
wherein the decryption unit further decrypts the read encrypted device key using the key information to generate the device key, and stores the generated device key to the first storage unit,
the portable medium further comprises:
a deletion unit operable to delete at least one of the second encrypted content and the medium key from the second storage unit, and
the read unit reads the encrypted device key from the second storage unit after the deletion unit deletes the at least one of the second encrypted content and the medium key from the second storage unit.

13. The content protection system of Claim 9,
wherein the terminal device further comprises:
an embedment unit operable to embed the device key in the converted content, to generate key-embedded content,
the encryption unit encrypts the key-embedded content using the medium key, to generate the second encrypted content,
the key deletion unit deletes the device key from the first storage unit after the embedment unit embeds the device key in the converted content, and
the write unit writes the medium key and the second encrypted content to the second storage unit after the key deletion unit deletes the device key from the first storage unit.

14. The content protection system of Claim 13 after the key deletion unit deletes the device key from the first storage unit and the write unit moves the medium key and the second encrypted content to the second storage unit,
wherein the terminal device further comprises:
an extraction unit operable to extract the device key from the key-embedded content, and store the extracted device key to the first storage unit,
a read unit reads the second encrypted content and the medium key from the second storage unit,
the decryption unit further decrypts the read second encrypted content using the read medium key to generate the key-embedded content, and outputs the generated key-embedded content to the extraction unit, and
the portable mediumdeletes the second encrypted content and the medium key from the second storage unit after the terminal device reads the second encrypted content and the medium key from the second storage unit.

15. The content protection systemof Claim 9, further including a mobile information terminal,
wherein the mobile information terminal reads, from the portable medium in which the device key, the medium key, and the second encrypted content are stored in the second storage unit, the second encrypted content and the medium key, decrypts the read second encrypted content using the read medium key to generate the converted content, and reproduces the converted content.

16. The content protection system of Claim 9, further including another terminal device connected with the terminal device,
wherein the another terminal device comprises:
a read unit operable to read, from the portable medium in which the device key, the medium key, and the second encrypted content are stored in the second storage unit, the device key, the medium key, and the second encrypted content;
a deletion unit operable to delete at least one of the medium key and the second encrypted content read by the read unit; and
an acquisition unit operable to acquire the first encrypted content from the terminal device, after the deletion unit deletes the at least one of the medium key and the second encrypted content,
the portable medium moves the device key, the medium key, and the second encrypted content to the another terminal device, and
the terminal device further comprises:
a transmission unit operable to transmit the first encrypted content to the another terminal device; and
a content deletion unit operable to delete the first encrypted content from the first storage unit.

17. (Amended) A portable medium for receiving a right to use content from a terminal device while protecting a copyright of the content, the terminal device including: a storage unit storing first encrypted content, a device key, and a medium key, the first encrypted content being generated by encrypting the content; a decryption unit operable to decrypt the first encrypted content using the device key, to generate the content; a conversion unit operable to perform an irreversible conversion on the generated content, to generate converted content; an encryption unit operable to encrypt the converted content using the medium key, to generate second encrypted content; a write unit operable to move the medium key and the second encrypted content to the portable medium, and read the device key from the first storage unit and write the read device key to the portable medium; and a key deletion unit operable to delete the device key from the first storage unit,
the portable medium comprising:
a storage unit operable to store the device key, the medium key, and the second encrypted content.

18. A content movement method used in a terminal device for transferring a right to use content to a portable medium while protecting a copyright of the content, the terminal device storing first encrypted content, a device key, and a medium key, the first encrypted content being generated by encrypting the content, the content movement method comprising:
a decryption step of decrypting the first encrypted content using the device key, to generate the content;
a conversion step of performing an irreversible conversion on the generated content, to generate converted content;
an encryption step of encrypting the converted content using the medium key, to generate second encrypted content;
a write step of moving the medium key and the second encrypted content to the portable medium, and reading the device key from the storage unit and writing the read device key to the portable medium; and
a key deletion step of deleting the device key from the terminal device.

19. The content movement method of Claim 18,
wherein the key deletion step deletes the device key from the terminal device after the write step writes the device key to the portable medium, and
the write step moves the medium key and the second encrypted content to the portable medium after the key deletion step deletes the device key from the terminal device.

20. A content movement program used in a terminal device for transferring a right to use content to a portable medium while protecting a copyright of the content, the terminal device storing first encrypted content, a device key, and a medium key, the first encrypted content being generated by encrypting the content, the content movement program comprising:
a decryption step of decrypting the first encrypted content using the device key, to generate the content;
a conversion step of performing an irreversible conversion on the generated content, to generate converted content;
an encryption step of encrypting the converted content using the medium key, to generate second encrypted content;
a write step of moving the medium key and the second encrypted content to the portable medium, and reading the device key from the storage unit and writing the read device key to the portable medium; and
a key deletion step of deleting the device key from the terminal device.

21. The content movement program of Claim 20,
wherein the key deletion step deletes the device key from the terminal device after the write step writes the device key to the portable medium, and
the write step moves the medium key and the second encrypted content to the portable medium after the key deletion step deletes the device key from the terminal device.
